# EUROPEAN PATENT APPLICATION

(11) **EP 4 403 283 A1**
(43) Date of publication of application: **24.07.2024**
(21) Application number: 21957568.5
(22) Date of filing: 17.09.2021
(51) Int. Cl.: B22F 10/28, B22F 10/36, B22F 10/85, B22F 12/90

(54) **INFORMATION PROCESSING DEVICE, MEASURING SYSTEM, MOLDING SYSTEM, INFORMATION PROCESSING METHOD, MOLDING METHOD, AND INFORMATION OUTPUT DEVICE**

(71) Applicant: NIKON CORPORATION, Minato-ku Tokyo 108-6290 (JP)
(72) Inventor: TAKESHITA, Koki, Tokyo 108-6290 (JP); KATO, Chika, Tokyo 108-6290 (JP); NAKAMURA, Kensaku, Tokyo 108-6290 (JP)
(74) Representative: Hoffmann Eitle
(86) International application number: PCT/JP2021/034378
(87) International publication number: WO 2023/042387

(57) **Abstract**

An information processing apparatus includes: an acquisition unit that acquires measurement information about building of a build object acquired in a build period of the build object that is built by solidification of a powdery metal material melted by irradiation with an energy beam; and an information processing unit that generates defect information about a defect formed inside the build object, by using the measurement information, wherein the measurement information includes information about a temperature of at least a part of a melt pool formed by melting of the metal material caused by the irradiation with the energy beam.

## Description

### Technical Field

The present invention relates to, for example, a technical field regarding building of a build object.

### Background Art

Patent Literature 1 describes an example of a build apparatus that is configured to build a build object. One of technical problems of this type of apparatus is to properly build the build obj ect.

### Citation List

### Patent Literature

Patent Literature 1: International Publication No. WO 2019/239530 pamphlet

### Summary of Invention

A first aspect provides an information processing apparatus including: an acquisition unit that acquires measurement information about building of a build object acquired in a build period of the build object that is built by solidification of a powdery metal material melted by irradiation with an energy beam; and an information processing unit that generates defect information about a defect formed inside the build object, by using the measurement information acquired by the acquisition unit, wherein the measurement information includes information about a temperature of at least a part of a melt pool formed by melting of the metal material caused by the irradiation with the energy beam.

A second aspect provides a measurement system including: the information processing apparatus provided in the first aspect; and a measurement apparatus, wherein the measurement information is acquired by using the measurement apparatus.

A third aspect provides a build system including: the information processing apparatus provided in the first aspect; a build apparatus that is configured to build a build object by solidification of a powdery metal material melted by irradiation with an energy beam; and a measurement apparatus, wherein the measurement information is acquired by using the measurement apparatus.

A fourth aspect provides an information processing apparatus including: an acquisition unit that acquires measurement information about building of a build object acquired in a build period of the build object that is built by solidification of a build material melted by irradiation with an energy beam; and an information processing unit that generates property information about properties of the build object, by using the measurement information acquired by the acquisition unit.

A fifth aspect provides an information processing apparatus including: an acquisition unit that acquires build information about building of a build object that is built by solidification of a build material melted by irradiation with an energy beam; and an information processing unit that generates property information about properties of the build object, by using the build information acquired by the acquisition unit.

A sixth aspect provides an information processing method including: acquiring measurement information about building of a build object acquired in a build period of the build object that is built by solidification of a build material melted by irradiation with an energy beam; and generating property information about properties of the build object, by using the measurement information acquired.

A seventh aspect provides an information processing method including: acquiring build information about building of a build object that is built by solidification of a build material melted by irradiation with an energy beam; and generating property information about properties of the build object, by using the build information acquired.

An eighth aspect provides a build method including: building a build object by solidification of a build material melted by irradiation with an energy beam; performing measurement related to building of the build object in a build period of the build object; and acquiring property information about properties of the build object generated by using the measurement information acquired by the measurement.

A ninth aspect provides a build method including: building a build obj ect by solidification of a build material melted by irradiation with an energy beam; and acquiring property information about properties of the build object generated by using build information about building of the build object.

A tenth aspect provides an information output apparatus including: an acquisition unit that acquires measurement information about building of a build object acquired in a build period of the build object that is built by solidification of a powdery metal material melted by irradiation with an energy beam, and property information about properties of the build object; and an output unit that outputs the property information together with the measurement information.

An eleventh aspect provides an information output apparatus including: an acquisition unit that acquires energy information about an energy amount transferred from an energy beam to a metal material in building of a build object by solidification of a powdery metal material melted by irradiation with an energy beam, and property information about properties of the build object; and an output unit that outputs the property information together with the energy information.

The operation and other advantages according to the present invention will be apparent from the following detailed description of example embodiments.

### Brief Description of Drawings

[FIG. 1] FIG. 1 is a block diagram illustrating an overall configuration of a build system of a present example embodiment.
[FIG. 2] FIG. 2 is a block diagram illustrating a configuration of a build apparatus according to the present example embodiment.
[FIG. 3] FIG. 3 is a cross-sectional view illustrating the configuration of the build apparatus according to the present example embodiment.
[FIG. 4] FIG. 4 is a block diagram illustrating a configuration of a measurement apparatus according to the present example embodiment.
[FIG. 5] FIG. 5 illustrates an example of a temperature image outputted by a temperature measurement apparatus according to the present example embodiment.
[FIG. 6] FIG. 6 illustrates an example of a shape image outputted by a shape measurement apparatus according to the present example embodiment.
[FIG. 7] FIG. 7 is a block diagram illustrating a configuration of an information processing apparatus according to the present example embodiment.
[FIG. 8] FIG. 8 is a cross-sectional view illustrating a void space that is an example of a defect generated inside the build object.
[FIG. 9] FIG. 9 is a flowchart illustrating a flow of a defect prediction processing performed by the information processing apparatus.
[FIG. 10] FIG. 10 illustrates measurement information, apparatus information, and feature quantity information stored in an information DB associated with position information indicating a build position.
[FIG. 11] FIG. 11 illustrates an output method of outputting defect information associated with the position information.
[FIG. 12] FIG. 12 illustrates an output method of outputting process data together with the defect information.
[FIG. 13] FIG. 13 is a cross-sectional view for explaining a penetration geometry index.
[FIG. 14] FIG. 14 illustrates an output method of outputting energy information together with the defect information.
[FIG. 15] FIG. 15 illustrates defect statistic information.
[FIG. 16] FIG. 16 illustrates an example of a method of displaying the defect information.
[FIG. 17] FIG. 17 illustrates an example of the method of displaying the defect information.
[FIG. 18] FIG. 18 is a block diagram illustrating a configuration of a model generation apparatus according to the present example embodiment.
[FIG. 19] FIG. 19 is a flowchart illustrating a flow of a model generation processing performed by the model generation apparatus.
[FIG. 20] FIG. 20 illustrates an example of a data structure of a learning data set.
[FIG. 21] FIG. 21 illustrates learning data that satisfy an extraction criterion for build condition information.
[FIG. 22] FIG. 22 illustrates the learning data that satisfy the extraction criterion for the build condition information.
[FIG. 23] FIG. 23 illustrates learning data that satisfy an extraction criterion for design information.
[FIG. 24] FIG. 24 is a perspective view illustrating a plurality of divided objects of different shapes that are acquired by dividing the build object in accordance with the shape.
[FIG. 25] FIG. 25 illustrates learning data that satisfy an extraction criterion for material information.
[FIG. 26] FIG. 26 illustrates another example of property information.
[FIG. 27] FIG. 27 illustrates another example of the property information.
[FIG. 28] Each of FIG. 28A to FIG. 28C is a perspective view illustrating a solidified layer.

### Description of Example embodiments

With reference to the drawings, an information processing apparatus, a measurement system, a build system, an information processing method, a build method, and an information output apparatus according to an example embodiment will be described. Hereinafter, the information processing apparatus, the measurement system, the build system, the information processing method, the build method, and the information output apparatus according to the example embodiment will be described by using a build system SYS that is configured to build a build object by performing an additive processing. Especially in the following, the information processing apparatus, the measurement system, the build system, the information processing method, the build method, and the information output apparatus according to the example embodiment will be described by using the build system SYS that is configured to build the build object by performing an additive processing based on Powder Bed Fusion such as Selective Laser Sintering (SLS).

The build system SYS, however, may build the build object by performing an additive processing based on a different build method from the Powder Bed Fusion. An example of the different method from the Powder Bed Fusion is at least one of Derected Energy Deposition (DED) such as Laser Metal Deposition (LMD), Binder Jetting, Material Jetting, Stereolithograpy, and Laser Metal Fusion (LMF). Alternatively, the build system SYS may build the build object by performing any processing (e.g., a removing processing) that is different from the additive processing.

Furthermore, in the following description, a positional relationship of various components that constitute the build system SYS will be described by using an XYZ rectangular coordinate system that is defined from an X axis, a Y axis, and a Z axis that are perpendicular to one another. Note that in the following description, for convenience of description, each of an X axis direction and a Y axis direction is assumed to be a horizontal direction (i.e., a predetermined direction in a horizontal plane), and a Z axis direction is assumed to be a vertical direction (i.e., a direction that is perpendicular to the horizontal plane, and substantially an up-and-down direction). Furthermore, rotational directions (in other words, inclination directions) around the X axis, the Y axis, and the Z axis are referred to as a θX direction, a θY direction, and a θZ direction, respectively. Here, the Z axis direction may be a gravity direction. An XY plane may be a horizontal direction.

### (1) Configuration of Build System SYS

First, a configuration of the build system SYS will be described.

### (1-1) Configuration of Build System SYS

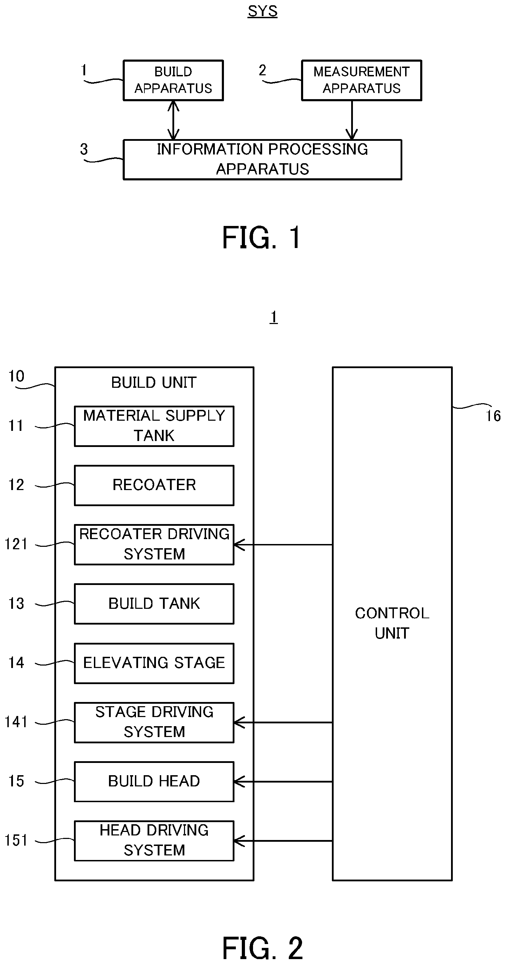

First, an overall configuration of the build system SYS will be described with reference to FIG. 1. FIG. 1 is a block diagram illustrating the overall configuration of the build system SYS.

As illustrated in FIG. 1, the build system SYS includes a build apparatus 1, a measurement apparatus 2, and an information processing apparatus 3. The information processing apparatus 3 may be configured to communicate with at least one of the build apparatus 1 and the measurement apparatus 2 through a not-illustrated communication network or data bus. That is, the information processing apparatus 3 may be configured to transmit any information to at least one of the build apparatus 1 and the measurement apparatus 2 through a not-illustrated communication network or data bus. The information processing apparatus 3 may be configured to receive any information from at least one of the build apparatus 1 and the measurement apparatus 2 through a not-illustrated communication network or data bus.

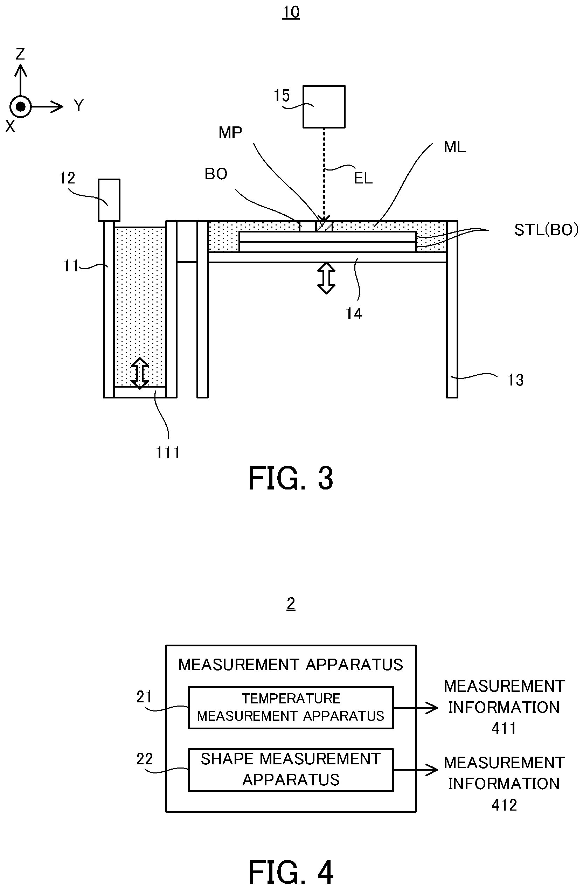

The build apparatus 1 is an apparatus that is configured to build a build object by performing an additive processing based on the Powder Bed Fusion. A configuration of the build apparatus 1 will be described later with reference to FIG. 2 and FIG. 3, and an outline thereof will be briefly described. The build apparatus 1 forms a material layer ML (see FIG. 3 described later) by using an unmelted build material. The build apparatus 1 irradiates at least a part of the material layer ML with a build light EL. Consequently, the build apparatus 1 forms a melt pool MP (see FIG. 3 described later) including a build material melted by irradiation with the build light EL to at least a part of the material layer ML. That is, the melt pool MP is formed by the melting of the build material by the irradiation with the build light EL. Then, when the melt pool MP is not irradiated with the build light EL, the melt pool MP is cooled and solidified. As a result, a build object including the solidified build material is formed. The build system SYS repeats a series of a build processing including: formation of the melt pool MP by the irradiation with the build light; and solidification of the melted build material, while moving an irradiation position of the build light EL on the material layer ML. As a result, a layered build object including the solidified build material (hereinafter, this build object is referred to as a "solidified layer STL (see FIG. 3 described later)") is formed. Thereafter, the build apparatus 1 repeats the formation of the material layer ML and the formation of the solidified layer STL, thereby to form a build object including a plurality of solidified layers STL.

The measurement apparatus 2 is an apparatus that is configured to measure (i.e., gauge) at least a part of a measurement target object. The measurement apparatus 2 is an apparatus that is configured to measure properties of at least a part of the measurement target object. For example, the measurement apparatus 2 may be configured to measure a shape (especially, a three-dimensional shape) of at least a part of the measurement target object, as the properties of at least a part of the measurement target object. For example, the measurement apparatus 2 may be configured to measure a temperature of at least a part of the measurement target object, as the properties of at least a part of the measurement target object.

The measurement target object may include any object associated with the building of the build object by the build apparatus 1.

For example, the measurement target object may include the build object built by the build apparatus 1. The build object built by the build apparatus 1 may include a three-dimensional structure ST (i.e., a build object including a plurality of solidified layers STL) of a desired shape that is to be finally built by the build apparatus 1. The build object built by the build apparatus 1 may include an intermediate build object built by the build apparatus 1 in the process of building the three-dimensional structure ST. The intermediate build object may include the three-dimensional structure ST that is in the middle of being built (e.g., the build object including at least one solidified layer STL). The intermediate build object may include the solidified layer STL itself that is completely built. The intermediate build object may include an intermediate build object built by the build apparatus 1 in the process of building the solidified layer STL (i.e., the solidified layer STL that is in the middle of being built). In the following description, for convenience of description, in a case where the type of the build object built by the build apparatus 1 does not need to be distinguished, the build object built by the build apparatus 1 is collectively referred to as a "build object BO". That is, in the following description, unless otherwise specified, the build object BO may mean at least one of the three-dimensional structure ST that is completely built, the three-dimensional structure ST that is in the middle of being built, the solidified layer STL that is completely built, and the solidified layer STL that is in the middle of being built. The measurement target object may include at least one of fumes (vapor of the build material) described later and spatters (solidified granular build materials) described later, which are generated from the melt pool MP in the process of the build apparatus 1 melting the unmelted build material. The build object BO may mean at least one of the spatters and the fumes.

For example, since the material layer ML is formed to build the build object BO, the measurement target object may include the material layer ML. For example, since the melt pool MP is formed to build the build object BO, the measurement target object may include the melt pool MP.

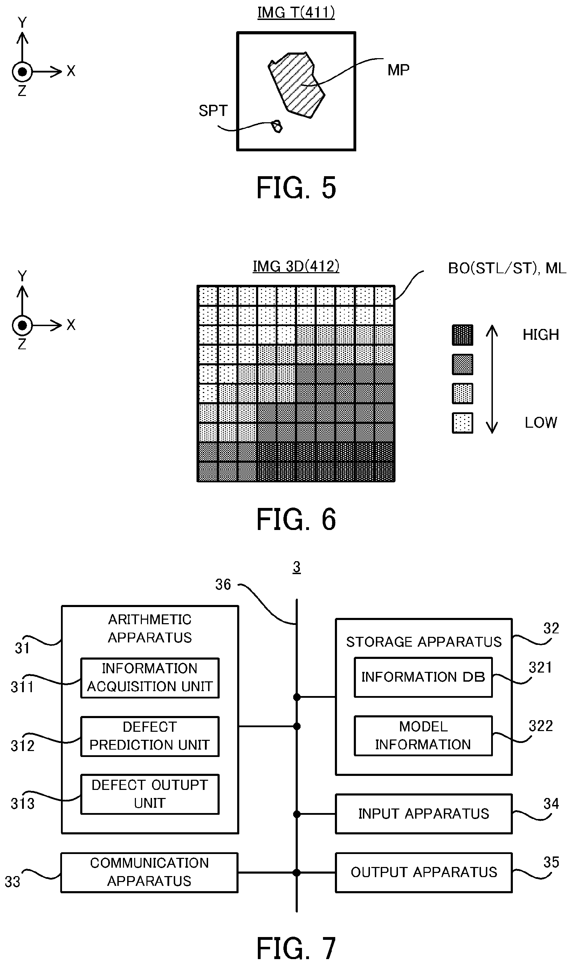

The information processing apparatus 3 is an apparatus that is configured to generate property information about properties of the build object BO built by the build apparatus 1, by using a measurement result of the measurement target obj ect by the measurement apparatus 2. In the present example embodiment, an example in which the information processing apparatus 3 generates defect information 425 (see FIG. 5 described later) about a defect formed in the build object BO built by the build apparatus 1, as an example of the property information, will be described. That is, in the present example embodiment, an example in which the information processing apparatus 3 performs a defect prediction processing for generating the defect information 425, will be described. The defect prediction processing may be also said as a defect prediction operation.

The information treatment apparatus 3 may be considered to generate the property information, together with the measurement apparatus 2. In this instance, a system including the information processing apparatus 3 and the measurement apparatus 2, may be referred to as an information processing system or a measurement system.

### (1-2) Configuration of Build Apparatus 1

Next, with reference to FIG. 2 and FIG. 3, a configuration of the build apparatus 1 will be described. FIG. 2 is a block diagram illustrating the configuration of the build apparatus 1. FIG. 3 is a cross-sectional view illustrating the configuration of the build apparatus 1.

As illustrated in FIG. 2 and FIG. 3, the build apparatus 1 includes a build unit 10 and a control unit 16. Furthermore, the build unit 10 includes a material supply tank 11, a recoater 12, a recoater driving system 121, a build tank 13, an elevating stage 14, a stage driving system 141, a build head 15, and a head driving system 151.

The material supply tank 11 is a container for containing the build material. A bottom surface 111 of the material supply tank 11 is movable along the vertical direction (i.e., the Z axis direction) by a not-illustrated driving system. The material supply tank 11 may be referred to as a material supply unit or as a material supply chamber.

The build material is a powdery material. That is, the build material is a powder. The build material, however, may not be a powdery material. For example, at least one of a wire-like material, a gel-like material, a liquid material, a sol-like material, and a gaseous build material may be used as the build material. In addition, as described above, the build system SYS builds the build object BO, by melting the build object by using the build light EL that is an energy beam. For this reason, the build material is a material that can be melted by the irradiation with the build light EL of a predetermined intensity or higher. For example, a metal material is usable as such a build material. Another material that is different from the metal material may be used as the build material. For example, a resin material may be used as the build material, or another well-known material may be used.

The recoater 12 supplies the build material accommodated in the material supply tank 11, to the build tank 13. Specifically, the recoater 12 supplies the build material such that a layer of the build material (i.e., the material layer ML) of a predetermined thickness Δd and with a substantially flat surface, is formed on the elevating stage 14 in the build tank 13. The build tank 13 is a working container (a build space) for building the three-dimensional structure ST in which a plurality of solidified layers STL are laminated, by repeating the formation of the material layer ML and the formation of the solidified layer STL by solidification of at least a part of the formed material layer ML. A bottom surface of the build tank 13 is constituted by the elevating stage 14. The elevating stage 14 moves in the vertical direction (i.e., the Z axis direction) by the stage driving system 141, under the control of the control unit 16 described later. The build tank 13 may be referred to as a build unit or as a build chamber.

The build head 15 irradiates at least a part of the material layer ML with the build light EL generated by a not-illustrated light source. Furthermore, the build head 15 may move the irradiation position of the build light EL on a surface of the material layer ML by using a not-illustrated Galvano mirror serving as the head driving system 151. In addition, the build head 15 may be moved by a not-illustrated motor serving as the head driving system 151, thereby to move the irradiation position of the build light EL on the material layer ML.

The control unit 16 may include, for example, an arithmetic apparatus and a storage apparatus. The arithmetic apparatus may include, for example, at least one of a CPU (Central Processing Unit) and a GPU (Graphics Processing Unit). The storage apparatus may include, for example, a memory. The control unit 16 serves as an apparatus for controlling the operation of the build unit 10 by means of the arithmetic apparatus executing a computer program. The computer program is a computer program that allows the arithmetic apparatus to perform (i.e., to execute) a below described operation that should be performed by the control unit 16. That is, the computer program is a computer program that allows the control unit 16 to function so as to cause the build unit 10 to perform the below described operation. The computer program executed by the arithmetic apparatus may be recorded in the storage apparatus (i.e., a recording medium) provided in the control unit 16, or may be recorded in any storage medium (e.g., a hard disk or a semiconductor memory) that is built int the control unit 16 or that is externally attachable to the control unit 16. Alternatively, the arithmetic apparatus may download the computer program to be executed, from an external apparatus of the control unit 16 through a network interface.

The control unit 16 may not be provided in the build apparatus 1. For example, the control unit 16 may be provided outside the build apparatus 1 as a server or the like. In this instance, the control unit 16 and the build apparatus 1 may be connected by a wired and/or wireless network (or data bus and/or communication line). A network using a serial-bus-type interface represented by, for example, at least one of IEEE1394, RS-232x, RS-422, RS-423, RS-485 and USB, may be used as the wired network. A network using a parallel-bus-type interface may be used as the wired network. A network using an interface that is compatible to Ethernet (registered trademark) represented by at least one of 10BASE-T, 100BASE-TX and 1000BASE-T, may be used as the wired network. A network using an electrical wave may be used as the wireless network. An example of the network using an electrical wave is a network that is compatible to IEEE802.1x (e.g., at least one of a wireless LAN and Bluetooth (registered trademark)). A network using an infrared ray may be used as the wireless network. A network using an optical communication may be used as the wireless network. In this instance, the control unit 16 and the build apparatus 1 may be configured to transmit and receive various types of information through the network. Furthermore, the control unit 16 may be configured to transmit information such as a command and a control parameter, to the build apparatus 1 through the network. The build apparatus 1 may include a receiving apparatus that is configured to receive the information such as the command and the control parameter, from the control unit 16 through the network. The build apparatus 1 may include a transmission apparatus that transmits the information such as the command and the control parameter, to the control unit 16 through the network (i.e., an output apparatus that outputs the information to the control unit 16). Alternatively, a first control apparatus that performs a part of a processing performed by the control unit 16 may be disposed in the build apparatus 1, and a second control apparatus that performs another part of the processing performed by the control unit 16 may be disposed outside the build apparatus 1.

In the control unit 16, the arithmetic apparatus may execute the computer program, by which a computational model that can be established by machine learning may be implemented. An example of the computational model that can be established by machine learning is a computational model including a neural network (so-called artificial intelligence Artificial Intelligence (AI)). In this case, learning of the computational model may include learning of a parameter (e.g., at least one of weight and bias) of the neural network. The control unit 16 may control the operation of the build apparatus 1 by using the computational model. That is, an operation of controlling the operation of the build apparatus 1 may include an operation of controlling the operation of the build apparatus 1 by using the computational model. The control unit 16 may be implemented the computational model that is already established by off-line machine learning using teacher data. Furthermore, the computational model implemented in the control unit 16 may be updated by online machine learning on the control unit 16. Alternatively, the control unit 16 may control the operation of the build apparatus 1, by using a computational model implemented in an external apparatus of the control unit 16 (i.e., an apparatus disposed outside the build apparatus 1), in addition to or instead of the computational model implemented in the control unit 16.

Note that at least one of an optical disk such as a CD-ROM, a CD-R, a CD-RW, a flexible disk, a MO, a DVD-ROM, a DVD-RAM, a DVD-R, a DVD+R, a DVD-RW, DVD+RW and a Blu-ray (registered trademark), a magnetic medium such as a magnetic tape, an optical-magnetic disc, a semiconductor memory such as a USB memory, and another arbitrary medium that is configured to store the program, may be used as the recording medium that records therein the computer program to be executed by the control unit 16. The recording medium may include a device that is configured to record the computer program (e.g., a device for a universal use or a device for an exclusive use in which the computer program is embedded to be executable in a form of at least one of software, firmware and the like). Furthermore, various processing or functions included in the computer program may be realized by a logical processing block that is realized in the control unit 16 by means of the control unit 16 (i.e., a computer) executing the computer program, or may be realized by hardware such as a predetermined gate array (an FPGA, an ASIC) provided in the control unit 16, or may be realized in a form in which the logical processing block and a partial hardware module that realizes a part of elements of the hardware.

The control unit 16 may control the operation of the build apparatus 1 (especially, the build unit 10) such that the build apparatus 1 (especially, the build unit 10) builds the build object BO by performing the operation described below.

First, the recoater 12 forms the material layer ML in the build tank 13 (e.g., on the elevating stage 14), by supplying the build material in the material supply tank 11, to the build tank 13. Specifically, the stage driving system 141 moves the elevating stage 14 of the build tank 13 downward (to a -Z side in the example illustrated in FIG. 3) by the thickness Δd of the material layer ML. In addition, the bottom surface 111 of the material supply tank 11 moves upward (to a +Z side in the example illustrated in FIG. 3) by a predetermined amount. Thereafter, the recoater 12 supplies the build material of the material supply tank 11 from the material supply tank 11 to the build tank 13, and substantially flattens a layer of the supplied build material such that the thickness of the layer is the predetermined thickness Δd, thereby to form the material layer MI,.

Thereafter, the build head 15 forms the melt pool MP in at least a part of the material layer ML by irradiating at least a part of the formed material layer ML with the build light EL. Here, as described above, the build head 15 moves the irradiation position of the build light EL on the surface of the material layer ML. That is, the build head 15 scans at least a part of the surface of the material layer ML with the build light EL. Specifically, a path of the scanning of the build head 15 by the build light EL, is set from tomographic model information that is generated on the basis of design information (e.g., three-dimensional shape data such CAD data and STL (Stereolithography) data) on the three-dimensional structure ST built by the build apparatus 1. Therefore, the control unit 16 sets a target build area that is to be solidified after the build material is melted, as the material layer ML, on the basis of shape information about a tomographic model corresponding to the solidified layer STL that is to be built by the build apparatus 1. The build head 15 moves the irradiation position of the build light EL such that the target build area is irradiated with the build light EL. Consequently, the solidified layer STL is built at a position at which the build light EL is applied to the material layer ML. That is, the solidified layer STL is built from the material layer ML. In other words, the solidified layer STL is formed by melting and solidifying at least a part of the material layer ML. A thickness of the solidified layer STL is typically the same as the thickness Δd of the material layer ML, but may be different from the thickness Δd of the material layer ML.

When the solidified layer STL is formed from the build material supplied on the elevating stage 14 (i.e., the material layer ML), the elevating stage 14 moves downward (to the -Z side in the example illustrated in FIG. 3). Thereafter, the recoater 12 forms a new material layer ML on an upper surface of the solidified layer STL (a surface on the +Z-side in the example illustrated in FIG. 3). At least a part of the new material layer ML is solidified, by which a new solidified layer STL is formed. The formation of the material layer ML and the formation of the solidified layer STL are repeated, by which a plurality of solidified layers STL are laminated. Consequently, the three-dimensional structure ST including the laminated solidified layers STL is built.

The control unit 16 may control the operation of the build apparatus 1 (especially, the build unit 10) so as to build the build object BO, by using a build condition that is used by the build apparatus 1 to build the build object BO. That is, the control unit 16 may control the operation of the build apparatus 1 (especially, the build unit 10) so as to build the build object BO, by using the build condition that is set to define an operation content of the build apparatus 1 that builds the build object BO. The build condition may include an irradiation condition regarding an irradiation aspect of the build light EL by the build head 15. The irradiation condition may include at least one of an output of the light source that generates the build light EL, the intensity of the build light EL emitted from the light source, the intensity of the build light EL on the material layer ML, an intensity distribution of the build light EL on the material layer ML, an irradiation timing of the build light EL, an irradiation position of the build light EL, a movement rule of the irradiation position of the build light EL (a so-called scan strategy, and substantially information indicating a scanning path), a moving trajectory of the irradiation position of the build light EL, a hatching distance (hatching pitch) that is an interval between two adjacent moving trajectories, a moving speed of the irradiation position of the build light EL (i.e., a scanning speed), a spot diameter of the build light EL emitted from the light source, and a diameter of a spot formed by the build light EL on the material layer ML. The build condition may include a recoater movement condition regarding a movement aspect of the recoater 12 by the recoater driving system 121. The build condition may include a stage movement condition that defines a movement aspect of the elevating stage 14 by the stage driving system 141. The build condition may include a head movement condition that defines a movement aspect of the build head 15 by the head driving system 151. The movement aspect may include, for example, at least one of a moving distance, a moving speed, a moving direction, and a moving timing (a moving time point). The build condition may include a material condition that defines a nature of the build material and/or a supply aspect of the build material. The condition that defines the nature of the build material, may include at least one of a type of the build material to be supplied, a particle diameter of the build material to be supplied, a particle size distribution of the build material to be supplied, flowability of the build material to be supplied, and a repose angle of the build material to be supplied. The supply aspect of the build material may include at least one of a supply amount of the build material, a supply timing of the build material, a supply speed of the build material, and the thickness Δd of the material layer ML formed by the supplied build material. That is, the material condition may include at least one of the supply amount of the build material, the supply timing of the build material, the supply speed of the build material, the thickness Δd of the material layer ML formed by the supplied build material, the type of the build material to be supplied, the particle diameter of the build material to be supplied, the particle size distribution of the build material to be supplied, the flowability of the build material to be supplied, and the repose angle of the build material to be supplied. The build condition may include an environmental condition regarding a build environment in which the build apparatus 1 builds the build object BO. The build environmental may include at least one of oxygen concentration in the build space that is a space where the material layer ML is melted and the solidified layer STL is formed and that is inside the build unit 10 (especially, the build tank 13), inactive gas concentration in the build space, a temperature of the build space, a type of an inactive gas supplied to the build space, and a temperature of the elevating stage 14 (especially, a temperature of a surface on the +Z side of the elevating stage 14). The build condition may include a design condition of the build object BO (especially, the three-dimensional structure ST) built by the build apparatus 1. The design condition of the build object BO may include design data indicating a three-dimensional shape in design of the build object BO. The design data may include information about a size (e.g., at least one of a length, a width, a depth, a height, an area, and a volume) in design of a part of the build object BO. The design data may include information about a direction/orientation (e.g., a tilt angle) in design of a part of the build object BO. The design data may include three-dimensional model data indicating a three-dimensional model of the build object BO. The three-dimensional model data may include CAD (Computer Aided Design) data. The CAD data may include data STL (Standard Trianglated Language) data. The design data may include slice model data indicating a slice model that is acquired by slicing the three-dimensional model of the build object BO.

### (1-3) Configuration of Measurement Apparatus 2

Next, with reference to FIG. 4, a configuration of the measurement apparatus 2 will be described. FIG. 4 is a block diagram illustrating the configuration of the measurement apparatus 2.

As illustrated in FIG. 4, the measurement apparatus 2 includes a temperature measurement apparatus 21 and a shape measurement apparatus 22. The temperature measurement apparatus 21 is an apparatus that is configured to measure the temperature of at least a part of the measurement target object. The shape measurement apparatus 22 is an apparatus that is configured to measure a shape of at least a part of the measurement target object (e.g., a shape of a surface, and especially, a three-dimensional shape). As described above, the measurement apparatus 2 is an apparatus that is configured to measure any properties of at least a part of the measurement target object. FIG. 4 illustrates an example in which the measurement apparatus 2 is configured to measure the temperature of at least a part of the measurement target object and the shape of at least a part of the measurement target object, as an example of the properties of at least a part of the measurement target object. The measurement apparatus 2, however, may be capable of measuring any properties of the measurement target object that are different from the temperature and the shape, in addition to or instead of at least one of the temperature and the shape of the measurement target object.

The temperature measurement apparatus 21 may be any measurement apparatus as long as it is configured to measure a temperature of the measurement target object. For example, the temperature measurement apparatus 21 may measure the temperature of the measurement target object by detecting an infrared ray (i.e., a light in an infrared band) emitted by the measurement target object. For example, the temperature measurement apparatus 21 may measure the temperature of the measurement target object by detecting two types of lights with different wavelengths, emitted by the measurement target object. That is, the temperature measurement apparatus 21 may measure the temperature of the measurement target object by using a two-color method (e.g., a near-infrared two-color method). The temperature measurement apparatus 21 may include a not-illustrated photodetection apparatus including a plurality of photodetection elements for detecting a light from the measurement target obj ect. The temperature measurement apparatus 21 may measure the temperature of the measurement target object on the basis of a detection result of the photodetection apparatus. The temperature measurement apparatus 21 may measure the temperature of the measurement target object, on the basis of detection results of the plurality of photodetection elements of the photodetection apparatus. For example, the temperature measurement apparatus 21 may measure the temperature for each of the detection results of the plurality of photodetection elements. That is, the temperature measurement apparatus 21 may measure the temperature at a plurality of different positions in the measurement target object. The temperature measurement apparatus 21 may include a CCD (Charge Coupled Device) or a CMOS (Complementary Metal-Oxide-Semiconductor) as the not-illustrated photodetection apparatus. The temperature measurement apparatus 21 may include a not-illustrated single photodetection element for detecting a light from the measurement target object. The temperature measurement apparatus 21 may measure the temperature of the measurement target object, on the basis of a detection result of the single photodetection element.

The temperature measurement apparatus 21 outputs measurement information 411 including information about a measurement result by the temperature measurement apparatus 21. For example, the temperature measurement apparatus 21 may output the measurement information 411 including information about the temperature of at least a part of the measurement target object. The temperature of at least a part of the measurement target object may include the temperature of a part of the measurement target object. The temperature of at least a part of the measurement target object may include the temperatures of a plurality of parts of the measurement target object. In the present example embodiment, an example in which the temperature measurement apparatus 21 outputs temperature image data D_T indicating a temperature image IMG_T, as the measurement information 411, as illustrated in FIG. 5, will be described. The temperature image IMG_T is an image indicating a temperature distribution of at least a part of the measurement target object. The temperature image IMG_T may be an image indicating the temperature of at least a part of the measurement target object, by showing a difference in temperature of the measurement target object by using a difference in color or gradation, for example. In this instance, the temperature image data D_T may be data indicating the color or gradation of each of a plurality of pixels that constitute the temperature image IMG_T. An output of the temperature measurement apparatus 21, however, is not limited to the temperature image data indicating the temperature image IMG_T. For example, the temperature measurement apparatus 21 may output, as the measurement information 411, temperature data that are numerical data indicating the temperature of at least a part of the measurement target object.

In the present example embodiment, an example in which the temperature measurement apparatus 21 measures a temperature of at least a part of the melt pool MP that is is an example of the measurement target object, will be described. In this case, the temperature measurement apparatus 21 may output, as the measurement information 411, as illustrated in FIG. 5, a temperature image IMG_T (specifically, temperature image data D_T) indicating a temperature distribution of at least a part of the melt pool MP.

The temperature measurement apparatus 21, however, may measure the temperature of at least a part of the measurement target object that is different from the melt pool MP, in addition to or instead of the temperature of at least a part of the melt pool MP. That is, the measurement target object that is different from the melt pool MP, may appear in the temperature image IMG_T. For example, in a case where the melt pool MP is formed, there is a possibility that spatters SPT, which are fine particles, are generated due to the irradiation with the build light EL, above (in a +Z direction) the melt pool MP and around the melt pool MP. In this instance, as illustrated in FIG. 5, the spatters SPT may appear in the temperature image IMG_T. For example, in a case where the melt pool MP is formed, there is a possibility that fumes, which are vaporized objects of the build material, are generated due to the irradiation with the build light EL, above (in the +Z direction) the melt pool MP and around the melt pool MP. In this case, the fumes may appear in the temperature image IMG_T. For example, the measurement target object may include at least one of the melt pool MP, the spatters SPT, and the fumes. The temperature measurement apparatus 21 may measure the temperature of at least a part of at least one of the melt pool MP, the spatters SPT, and the fumes.

As described above, the measurement target object including the melt pool MP is an arbitrary object related to the building of the build object BO. Therefore, the measurement information 411 may be regarded as measurement information about the building of the build object BO.

The temperature measurement apparatus 21 measures the temperature of at least a part of the measurement target object in a build period in which the build apparatus 1 builds the build object BO. The build period may mean a series of periods in which the build apparatus 1 repeats the formation of the material layer ML and the formation of the solidified layer STL in order to build the three-dimensional structure ST that is a final build object BO. The build period may mean a series of periods in which the formation of the material layer ML and the formation of the solidified layer STL are repeated in the build tank 13 of the build apparatus 1 in order to build the three-dimensional structure ST. The build period may mean a period in which the control unit 16 controls the build unit 10 such that the build apparatus 1 repeats the formation of the material layer ML and the formation of the solidified layer STL. The build period may mean a period in which the control unit 16 controls the build unit 10 such that the build apparatus 1 repeats the formation of the material layer ML and the formation of the solidified layer STL in order to build the three-dimensional structure ST that is the final build object BO. The build period may mean a period from when the build apparatus 1 supplies the material to the build tank 13 to form a first solidified layer STL, to when the formation of all the solidified layers STL to be built is completed through the irradiation with the build light EL to each material layer ML. In a case where the solidified layer STL to be built is one layer, the build period may mean a period from when the build apparatus 1 supplies the material to the build tank 13 to form the first solidified layer STL, to when the formation of the first solidified layer STL is completed through the irradiation with the build light EL to a first material layer ML.

The build period may mean a period in which the build apparatus 1 repeats the supply of the build material, the melting of the build material, and the building of the build material BO caused by the solidification of the melted build material (i.e., a solidified object formed by solidification of the melted build material). The build period may mean a period in which the build apparatus 1 repeats the supply of the build material, the melting of the build material, and the building of the build material BO caused by the solidification of the melted build material, in the build space in which the build object BO is built. The build period may mean a period in which the control unit 16 controls the build unit 10 such that the build apparatus 1 repeats the supply of the build material, the melting of the build material, and the building of the build material BO caused by the solidification of the melted build material. The build period may mean a period in which the control unit 16 controls the build unit 10 such that the build object BO repeats the supply of the build material, the melting of the build material, and the building of the build object BO caused by the solidification of the melted build material in order to build the three-dimensional structure ST that is the final build object BO.

Here, in a case where the temperature measurement apparatus 21 measures the temperature of at least a part of the measurement target object in the build period, as the building of the build object BO proceeds, the measurement target object may move relative to a measurement field of view (a measurement range) of the temperature measurement apparatus 21. For example, the melt pool MP that is a measurement target object of the temperature measurement apparatus 21, moves on the material layer ML in association with the movement of the irradiation position of the build light EL. Consequently, the melt pool MP may move relative to the measurement field of view of the temperature measurement apparatus 21. Therefore, the temperature measurement apparatus 21 may be aligned to the build apparatus 1 such that an entire area where the melt pool MP is possibly formed, is included in the measurement field of view of the temperature measurement apparatus 21. As an example, since the melt pool MP is formed on the material layer ML the temperature measurement apparatus 21 may be aligned to the build apparatus 1 such that the entire material layer ML is included in the measurement field of view of the temperature measurement apparatus 21. Alternatively, the temperature measurement apparatus 21 may move the measurement field of view such that the melt pool MP whose position varies, is included in the measurement field of view of the temperature measurement apparatus 21. For example, in a case where the build head 15 moves the irradiation position of the build light EL on the surface of the material layer ML by using a not-illustrated Galvano mirror serving as the head driving system 151, the measurement field of view of the temperature measurement apparatus 21 may be moved together with the movement of the irradiation position of the build light EL, by placing the temperature measurement apparatus 21 in the build apparatus 1 so as to detect a light from at least a part of the melt pool MP through the same Galvano mirror. For example, the temperature measurement apparatus 21 itself moves, by which the temperature measurement apparatus 21 may move the measurement field of view. The temperature measurement apparatus 21 may be aligned to the build apparatus 1 such that at least one of the melt pool MP, the spatters SPT, and the fumes is included in the measurement field of view. The temperature measurement apparatus 21 may move the measurement field of view such that at least one of the melt pool MP whose position varies, the spatters SPT, and the fumes is included in the measurement field of view of the temperature measurement apparatus 21.

Subsequently, the shape measurement apparatus 22 may be any measurement apparatus as long as it is configured to measure the shape of the measurement target object. For example, the shape measurement apparatus 22 may optically measure the three-dimensional shape of the measurement target object. An example of the measurement apparatus that optically measures the three-dimensional shape of the measurement target object is a 3D scanner. The 3D scanner may measure the shape of the measurement target object by projecting a patterned light on at least a part of the measurement target object and imaging at least a part of the measurement target object on which the patterned light is projected. Another example of the measurement apparatus that optically measures the three-dimensional shape of the measurement target object is at least one of an interferometric measurement apparatus, an Optical Coherence Tomography (OCT) measurement apparatus, a measurement apparatus including a white confocal displacement meter, a phase-modulation measurement apparatus, and an intensity-modulation measurement apparatus. An example of the OCT measurement apparatus is described in JPA2020-101499. An example of the white confocal displacement meter is described in JPA2020-085633. An example of the phase-modulation measurement apparatus is described in JPA2010-025922. An example of the intensity-modulation measurement apparatus is described in JPA2016-510415 and in the specification of U.S. Patent Application Publication No. 2014/226145. The shape measurement apparatus 22 is not limited to the above-described measurement apparatus that optically measures the three-dimensional shape of the measurement target object, but may be another measurement apparatus that is configured to measure the three-dimensional shape of the measurement target object in a non-contact manner. The shape measurement apparatus 22 may be a measurement apparatus that measures the three-dimensional shape of the measurement target object by ultrasound. For example, the shape measurement apparatus 22 may optically measure a two-dimensional shape of the measurement target object. An example of the measurement apparatus that optically measures the two-dimensional shape of the measurement target object is an image measuring instrument. The image measuring instrument may measure the two-dimensional shape (dimensions) of the measurement target object from an image acquired by imaging at least a part of the measurement target object. The shape measurement apparatus 22 is not limited to image measuring instrument, but may be another existing measurement apparatus that is configured to measure the two-dimensional shape of the measurement target object in a non-contact manner. The shape measurement apparatus 22 is not limited to of a measurement type for optically measuring the shape of the measurement target object, but may be of another measurement type. For example, the shape measurement apparatus 22 may be a contact-type measurement apparatus that measures the shape of the measurement target object by bringing a touch probe in contact with at least a part of the measurement target object.

The shape measurement apparatus 22 outputs measurement information 412 including information about a measurement result by the shape measurement apparatus 22. For example, the shape measurement apparatus 22 may output the measurement information 412 including information about the shape of at least a part of the measurement target object. The shape of at least a part of the measurement target object may include the shape of one part of a surface of the measurement target object. The shape of at least a part of the measurement target object may include the shapes of a plurality of parts of the surface of the measurement target object. In the present example embodiment, an example in which the shape measurement apparatus 22 outputs shape image data D_3D indicating a shape image IMG_3D, as the measurement information 412, as illustrated in FIG. 6, will be described. The shape image IMG_3D is an image indicating the shape of at least a part of the measurement target object. The shape image IMG_3D may be an image indicating the shape of at least a part of the measurement target object, by showing a difference in position of the surface of the measurement target object (i.e., a difference in the distance from the shape measurement apparatus 22) by using a difference in color or gradation, for example. Alternatively, the shape image IMG_3D may be, for example, an image including so-called depth information. In this instance, the shape image data D_3D may be data indicating the color or gradation of each of a plurality of pixels that constitute the shape image IMG_3D. An output of the shape measurement apparatus 22, however, is not limited to the shape image data D_3D. For example, the shape measurement apparatus 22 may output, as the measurement information 412, point cloud data indicating at least the shape of a part of the measurement target object. For example, the shape measurement apparatus 22 may output, as the measurement information 412, distance data that are numerical data indicating a distance from the shape measurement apparatus 22 to at least a part of the measurement target object.

In the present example embodiment, an example in which the shape measurement apparatus 22 measures the shape of at least one of the build object BO and the material layer ML, each of which is an example of the measurement target object, will be described. In this instance, the shape measurement apparatus 22 may output, as the measurement information 412, as illustrated in FIG. 6, a shape image IMG_3D (specifically, shape image data D_3D) indicating the shape of at least one of the build object BO and the material layer ML.

The shape measurement apparatus 22, however, may measure the shape of at least a part of the measurement target object that is different from the build object BO and the material layer ML, in addition to or instead of the shape of at least one of the build object BO and the material layer ML. That is, the measurement target object that is different from the build object BO and the material layer ML, may appear in the shape image IMG_3D. For example, the measurement target object may include at least one of the build object BO, the material layer ML, and the spatters SPT. The shape measurement apparatus 22 may measure the shape of at least a part of at least one of the build object BO, the material layer ML, and the spatters SPT.

As described above, the measurement target object including at least one of the build object BO and the material layer ML, is an arbitrary object associated with the building of the build object BO. Therefore, the measurement information 412 may be regarded as measurement information about the building of the build object BO, as in the measurement information 411.

The shape measurement apparatus 22 measures the shape of at least a part of the measurement target object in the build period in which the build apparatus 1 builds the build object BO. Here, in a case where the shape measurement apparatus 22 measures the shape of at least a part of the measurement target object in the build period, as the building of the build object BO proceeds, the measurement target object may move relative to a measurement field of view of the shape measurement apparatus 22. For this reason, the shape measurement apparatus 22 may be aligned to the build apparatus 1 such that an entire area where there are possibly the build object BO and the material layer ML, which are the measurement target objects, is included in the measurement field of view of the shape measurement apparatus 22. As an example, since the build object BO is formed from the material layer ML, the shape measurement apparatus 22 may be aligned to the build apparatus 1 such that the entire material layer ML is included in the measurement field of view of the shape measurement apparatus 22. Alternatively, the shape measurement apparatus 22 may move the measurement field of view such that the build object BO and the material layer ML, which are the measurement target objects, are included in the measurement field of view of the shape measurement apparatus 22. For example, the shape measurement apparatus 22 itself moves, by which the shape measurement apparatus 22 may move the measurement field of view.

### (1-4) Configuration of Information Processing Apparatus 3

Next, with reference to FIG. 7, a configuration of the information processing apparatus 3 will be described. FIG. 7 is a block diagram illustrating the configuration of the information processing apparatus 3.

As illustrated in FIG. 7, the information processing apparatus 3 includes an arithmetic apparatus 31, a storage apparatus 32, and a communication apparatus 33. Furthermore, the information processing apparatus 3 may include an input apparatus 34 and an output apparatus 35. The information processing apparatus 3, however, may not include at least one of the input apparatus 34 and the output apparatus 35. The arithmetic apparatus 31, the storage apparatus 32, the communication apparatus 33, the input apparatus 34, and the output apparatus 35 may be connected through a data bus 36.

The arithmetic apparatus 31 includes at least one of a CPU (Central Processing Unit), a GPU (Graphics Processing Unit), and a FPGA (Field Programmable Gate Array), for example. The arithmetic apparatus 31 reads a computer program. For example, the arithmetic apparatus 31 may read a computer program stored in the storage apparatus 32. For example, the arithmetic apparatus 31 may read a computer program stored by a computer-readable and non-transitory recording medium, by using a not-illustrated recording medium reading apparatus provided in the information processing apparatus 3. The arithmetic apparatus 31 may acquire (i.e., download or read) a computer program from a not-illustrated apparatus disposed outside the information processing apparatus 3, through the communication apparatus 33 (or another communication apparatus). The arithmetic apparatus 31 executes the read computer program. Consequently, a logical functional block for performing a processing to be performed by the information processing apparatus 3 (e.g., the defect prediction processing described above) is realized or implemented in the arithmetic apparatus 31. That is, the arithmetic apparatus 31 is allowed to serve as a controller for realizing or implementing the logical functional block for performing the processing to be performed by information processing apparatus 3.

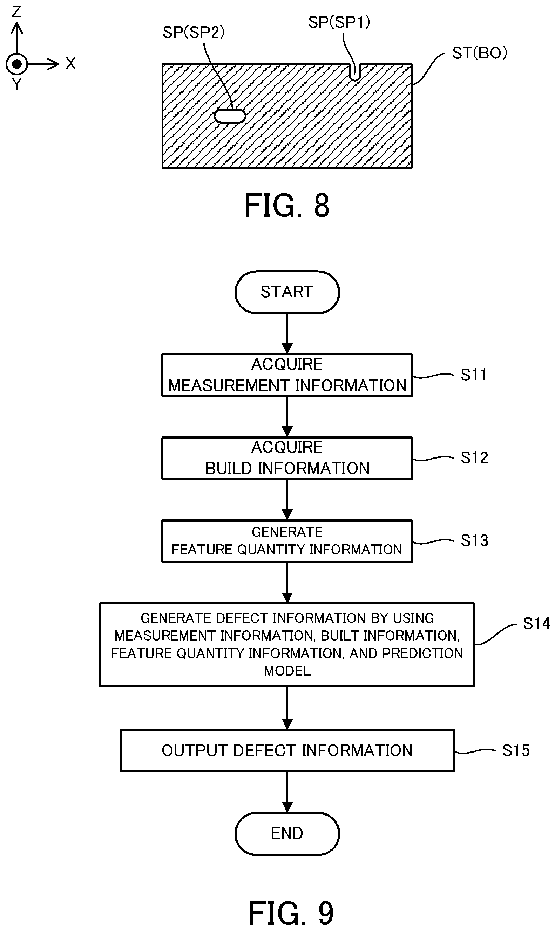

FIG. 7 illustrates an example of the logical functional block realized or implemented in the arithmetic apparatus 31 to perform the defect prediction processing. As illustrated in FIG. 7, an information acquisition unit 311, a defect prediction unit 312, and a defect output unit 313 are realized or implemented in the arithmetic apparatus 31. A processing performed by each of the information acquisition unit 311, the defect prediction unit 312, and the defect output unit 313 will be described in detail with reference to FIG. 9 or the like later, and an outline thereof will be described below.

The information acquisition unit 311 acquires information required to generate the defect information 425 about the defect formed in the build object BO built by the build apparatus 1. For example, the information acquisition unit 311 may acquire at least one of the measurement information 411 and the measurement information 412 about the building of the build object BO. That is, the information acquisition unit 311 may acquire at least one of the measurement information 411 and the measurement information 412 acquired by actually measuring the measurement target object at the time of building the build object BO. The information acquired by the information acquisition unit 311 may be stored, for example, in an information DataBase (DB) 321 in the storage apparatus 32.

The defect prediction unit 312 generates the defect information 425 by using at least a part of the information acquired by the information acquisition unit 311. In the present example embodiment, an example in which the defect information 425 includes information about a defect formed inside the build object BO, will be described. The defect formed inside the build object BO may include a defect that is not exposed to an outside of the build object BO. The defect formed inside the build object BO may include a defect that is exposed to the outside of the build object BO. The defect information 425 may include information about a defect formed on a surface (i.e., an outer surface) of the build object BO.

The information acquired by the information acquisition unit 311 is not acquired by directly measuring the defect formed in the build object BO. Therefore, a processing in which the defect prediction unit 312 generates the defect information 425, may be regarded as substantially equivalent to a processing of predicting the defect formed in the build object BO.

In the present example embodiment, the defect prediction unit 312 may generate the defect information 425 by using at least a part of the information acquired by the information acquisition unit 311 and a prediction model PM. The prediction model PM is, for example, a learning model generated by machine learning so as to generate the defect information 425 on the basis of the information acquired by the information acquisition unit 311. Information about the prediction model PM may be stored in the storage apparatus 32, as model information 322.

An example of the defect predicted by the defect prediction unit 312 is a void space SP formed inside the build object BO. The void space SP may be referred to as a hole, a pore, a void, porosity or a broken piece (in other words, a crack). In this instance, the defect information 425 may include void space information about the void space SP. For example, FIG. 8 illustrates an example of the void space SP formed inside the three-dimensional structure ST (i.e., the build object BO finally built), which is an example of the build object BO. The void space SP may include a void space SP1 that forms an opening in the surface of the build object BO (i.e., that is exposed to the surface of the build object BO). The void space SP1 may be referred to as an open aperture (in other words, an open pore). The void space SP may include a void space SP2 that does not form an opening in the surface of the build object BO (i.e., that is not exposed to the surface of the build object BO). The void space SP2 may be referred to as a closed aperture (in other words, a closed pore).

Such a void space SP may be generated, for example, in a case where an energy amount transferred from the build light EL to the material layer ML (i.e., an energy amount transferred to the build material) in the building of the build object BO, is excessive or insufficient for a target amount. For example, in a case where the energy amount transferred from the build light EL to the material layer ML is insufficient for the target amount, the build material to be originally melted, may not be properly melted. Typically, a melting amount of the build material may be insufficient. Consequently, the void space SP may be formed inside the build object BO. For example, in a case where the energy amount transferred from the build light EL to the material layer ML is excessive for the target amount, the void space SP originating from a keyhole generated in the process of melting the build material (the material layer ML) due to the irradiation with the build light EL, may be formed. In the present example embodiment, the defect prediction unit 312 is configure to generate the defect information 425 including the void space information about the void space SP as described above.

Referring now to FIG. 7 again, the defect output unit 313 outputs the defect information 425 generated by the defect prediction unit 312. For example, the defect output unit 313 may output the defect information 425 by using the output apparatus 35. For example, the defect output unit 313 may output the defect information 425 by using the communication apparatus 33 that may serve as an output apparatus. Since the defect output unit 313 outputs the defect information 425, the information processing apparatus 3 including the defect output unit 313 may be referred to as an information output apparatus.

The storage apparatus 32 is configured to store desired data. For example, the storage apparatus 32 may temporarily store a computer program to be executed by the arithmetic apparatus 31. The storage apparatus 32 may temporarily store data that are temporarily used by the arithmetic apparatus 31 when the arithmetic apparatus 31 executes the computer program. The storage apparatus 32 may store data that are stored by the information processing apparatus 3 for a long time. The storage apparatus 32 may include at least one of a RAM (Random Access Memory), a ROM (Read Only Memory), a hard disk apparatus, a magneto-optical disk apparatus, a SSD (Solid State Drive), and a disk array apparatus. That is, the storage apparatus 32 may include a non-transitory recording medium.

The communication apparatus 33 is configured to communicate with each of the build apparatus 1 and the measurement apparatus 2 through a not-illustrated communication network. Alternatively, the communication apparatus 33 may be configured to communicate with another apparatus that is different from the build apparatus 1 and the measurement apparatus 2, in addition to or instead of at least one of the build apparatus 1 and the measurement apparatus 2, through a not-illustrated communication network.

The input apparatus 34 is an apparatus that receives an input of information to the information processing apparatus 3 from the outside of the information processing apparatus 3. For example, the input apparatus 34 may include an operating apparatus (e.g., at least one of a keyboard, a mouse, and a touch panel) that is operable by a user of the information processing apparatus 3. For example, the input apparatus 34 may include a recording medium reading apparatus that is configured to read information recorded as data on a recording medium that is externally attachable to the information processing apparatus 3.

Note that information may be inputted as data to the information processing apparatus 3 through the communication apparatus 33, from an external apparatus of the information processing apparatus 3. In this instance, the communication apparatus 33 may serve as an input apparatus that receives an input of the information to the information processing apparatus 3 from the outside of the information processing apparatus 3.

The output apparatus 35 is an apparatus that outputs information to the outside of the information processing apparatus 3. For example, the output apparatus 35 may output information as an image. That is, the output apparatus 35 may include a display apparatus (a so-called display) that is configured to display an image. For example, the output apparatus 35 may output information as audio. That is, the output apparatus 35 may include an audio apparatus (a so-called speaker) that is configured to output audio. For example, the output apparatus 35 may output information onto a paper surface. That is, the output apparatus 35 may include a print apparatus (a so-called printer) that is configured to print desired information on a paper surface. For example, the output apparatus 35 may output information as data to a recording medium that is externally attachable to the information processing apparatus 3.

Note that information may be outputted as data to an external apparatus of the information processing apparatus 3 through the communication apparatus 33 from the information processing apparatus 3. In this instance, the communication apparatus 33 may serve as an output apparatus that outputs the information to the outside of the information processing apparatus 3.

### (2) Defect prediction Processing Performed By Information Processing Apparatus 3

Next, with reference to FIG. 9, a defect prediction processing performed by the information processing apparatus 3 will be described. FIG. 9 is a flowchart illustrating a flow of the defect prediction processing performed by the information processing apparatus 3.

As illustrated in FIG. 9, the information acquisition unit 311 acquires at least one of the measurement information 411 and the measurement information 412 (step S11). The information acquisition unit 311, however, may not acquire at least one of the measurement information 411 and the measurement information 412.

For example, the information acquisition unit 311 may acquire the measurement information 411 from the measurement apparatus 2 that generates the measurement information 411, by using the communication apparatus 33. For example, the information acquisition unit 311 may acquire the measurement information 412 from the measurement apparatus 2 that generates the measurement information 412, by using the communication apparatus 33. For example, in a case where at least one of the measurement information 411 and the measurement information 412 is stored in an external apparatus (e.g., a cloud server) that is different from the measurement apparatus 2, the information acquisition unit 311 may acquire at least one of the measurement information 411 and the measurement information 412 from the external apparatus, by using the communication apparatus 33. For example, in a case where at least one of the measurement information 411 and the measurement information 412 is recorded on a recording medium, the information acquisition unit 311 may acquire at least one of the measurement information 411 and the measurement information 412 from the recording medium, by using the input apparatus 34 that may serve as a recording medium reading apparatus.

The information acquisition unit 311 may acquire at least one of the measurement information 411 and the measurement information 412 in the build period in which the build apparatus 1 builds the build object BO (especially, the three-dimensional structure ST). An example of the definition of the build period is as already described. In this instance, the information acquisition unit 311 may acquire, in the build period, the measurement information 411 acquired in the build period by means of the temperature measurement apparatus 21 measuring the temperature of at least a part of the melt pool MP in the build period. Similarly, the information acquisition unit 311 may acquire, in the build period, the measurement information 412 acquired by means of the shape measurement apparatus 22 measuring the shape of at least one of the build object BO and the material layer ML in the build period.

The information acquisition unit 311 may acquire at least one of the measurement information 411 and the measurement information 412 after the build apparatus 1 finishes building the build object BO (especially, the three-dimensional structure ST). That is, the information acquisition unit 311 may acquire at least one of the measurement information 411 and the measurement information 412 after an end of the build period. In this instance, the information acquisition unit 311 may acquire the measurement information 411 acquired in the build period by means of the temperature measurement apparatus 21 measuring the temperature of at least a part of the melt pool MP in the build period, after the end of the build period. Similarly, the information acquisition unit 311 may acquire the measurement information 412 acquired by means of the shape measurement apparatus 22 measuring the shape of at least one of the build object BO and the material layer ML in the build period, after the end of the build period.

The information acquisition unit 311 may associate the acquired measurement information 411 with a build position at which the build apparatus 1 performs the build processing when the measurement information 411 is generated. Alternatively, the temperature measurement apparatus 21 may associate the measurement information 411 with a build position at which the build apparatus 1 performs the build processing when the temperature measurement apparatus 21 measures the temperature, and may output the measurement information 411 associated with the build position. The information acquisition unit 311 may store the measurement information 411 associated with the build position, in the information DB 321 of the storage apparatus 32. Therefore, the information acquisition unit 311 may acquire information about the build position when the measurement information 411 is generated, together with the measurement information 411. The build position may typically mean a position irradiated with the build light EL by the build apparatus 1. That is, the build position may mean a position at which the build apparatus 1 forms the melt pool MP. For example, in a case where the temperature image data D_T is used as the measurement information 411, the information acquisition unit 311 may associate the acquired temperature image data D_T with the build position when the temperature image data D_T is generated (i.e., the position of formation of the melt pool MP that appears in the temperature image IMG_T indicated by the temperature image data D_T). For example, the information acquisition unit 311 may associate the acquired measurement information 411 with the build position when a light from the measurement target object (e.g., the melt pool MP) (a light for measuring the temperature) is detected by the temperature measurement apparatus 21. For example, the information acquisition unit 311 may associate the measurement information 411 calculated on the basis of a light from the measurement target object detected by the temperature measurement apparatus 21 at a first time point, with a first build position at which the build apparatus 1 performs the build processing at the first time point. The information acquisition unit 311 may associate the measurement information 411 calculated on the basis of a light from the measurement target object detected by the temperature measurement apparatus 21 at a second time point that is different from the first time point, with a second build position at which the build apparatus 1 performs the build processing at the second time point.

Similarly, the information acquisition unit 311 may associate the acquired measurement information 412 with the build position at which the build apparatus 1 performs the build processing. Specifically, the information acquisition unit 311 may associate the measurement information 412 about the shape of one part of the measurement target object, with a build position at which the build apparatus 1 performs the build processing of the one part of the measurement target object (i.e., a position of the one part of the measurement target object). The information acquisition unit 311 may associate measurement information 412 about the shape of another part of the measurement target object, with a build position at which the build apparatus 1 performs the build processing of the another part of the measurement target object (i.e., a position of the another part of the measurement target object). Alternatively, the shape measurement apparatus 22 may associate the measurement information 412 with the build position at which the build apparatus 1 performs the build processing, and may output the measurement information 412 associated with the build position. The information acquisition unit 311 may store the measurement information 412 associated with the build position, in the information DB 321 of the storage apparatus 32. Therefore, the information acquisition unit 311 may acquire information about the build position when the measurement information 412 is generated, together with the measurement information 412. For example, in a case where the shape image D_3D is used as the measurement information 412, the information acquisition unit 311 may associate the acquired shape image data D_3D with the build position when the shape image IMG_3D is generated (i.e., the build position when at least one of the build object BO and the material layer ML that appear in the shape image IMG_3D indicated by the shape image data D_3D, is measured by the shape measurement apparatus 22).

The build position may be identified by position coordinates including a position in the X axis direction, a position in the Y axis direction, and a position in the Z axis direction. Here, the build position in a direction along the surface of the material layer ML (i.e., at least one of the X axis direction and the Y axis direction) corresponds to the irradiation position of the build light EL in the direction along the surface of the material layer ML. On the other hand, the build position in a direction intersecting the surface of the material layer ML (i.e., the Z axis direction) corresponds to the position of the surface of the material layer ML because the surface of the material layer ML is irradiated with the build light EL. However, since the elevating stage 14 moves downward by the thickness Δd of the material layer ML at each time of forming the solidified layer STL, it can be said that, apparently, the position of the surface of the material layer ML in the direction intersecting the surface of the material layer ML (i.e., the Z axis direction) is not changed. Therefore, in case of identifying the build position by using a coordinate system that does not take into account the movement of the elevating stage 14, there is a possibility that the build position for forming one solidified layer STL and the build position for forming another solidified layer STL that is different from the one of the solidified layer STL, match (i.e., cannot be distinguished) from each other in the Z axis direction. Therefore, in this case, the build position in the direction intersecting the surface of at least one of the material layer ML and the solidified layer STL (i.e., the Z axis direction) may be identified by the position in a coordinate system based on the elevating stage 14 that moves. For example, the build position in the direction intersecting the surface of at least one of the material layer ML and the solidified layer STL (i.e., the Z axis direction) may be identified by a distance to the surface of the material layer ML from a surface of the elevating stage 14 in the direction intersecting the surface of the material layer ML (i.e., the Z axis direction). Alternatively, the build position may be identified in a coordinate system for identifying a position at each part of the three-dimensional structure ST to be finally built by the build apparatus 1. The build position may be represented by coordinates in a three-dimensional coordinate system based on the elevating stage 14 that moves. The build position may be represented by coordinates on the XY plane in each layer (a layer including at least one of the material layer ML and the solidified layer STL). In this case, for example, the measurement information 411 and the measurement information 412 respectively indicating the temperature and the shape of each part of a first solidified layer STL that is an example of the measurement target object, may be associated with the build position represented by coordinates based on the first solidified layer STL. The measurement information 411 and the measurement information 412 respectively indicating the temperature and the shape of each part of a second solidified layer STL that is different from the first solidified layer STL and that is an example of the measurement target object, may be associated with the build position represented by coordinates based on the second solidified layer STL. The measurement information 411 or 412 of each part of the first solidified layer STL that is an example of the measurement target object, may be associated with the build position represented by the coordinates based on the first solidified layer STL. The measurement information 411 or 412 of each part of the second solidified layer STL that is different from the first solidified layer STL and that is an example of the measurement target object, may be associated with the build position represented by the coordinates based on the second solidified layer STL. The build position may mean a position at which the build material is supplied in the build tank 13. The build position may mean a position at which the material layer ML is formed.

Before, after, or in parallel with the step S11, the information acquisition unit 311 acquires build information 413 about the building of the build object BO (step S12). The build information 413 includes information that is about the building of the build object BO and that is different from information generated by means of the measurement apparatus 2 actually measuring the measurement target object. The information acquisition unit 311, however, may not acquire the build information 413.

The build information 413 may include apparatus information about the build apparatus 1 that builds the build object BO. The apparatus information may include build condition information (so-called recipe information) about the build condition used by the build apparatus 1 to build the build object BO. A specific example of the build condition is already described. The apparatus information may include operating state information about an operating state of the build apparatus 1. That is, the apparatus information may include the operating state information about an actual operating state of the build apparatus 1 that operates in accordance with the build condition set in advance. The operating state information may include information about an actual irradiation aspect of the build light EL by the build head 15 that operates in accordance with the build condition. The operating state information may include information about an actual movement aspect of the recoater 12 by the recoater driving system 121 that operates in accordance with the build condition. The operating state information may include information about an actual movement aspect of the elevating stage 14 by the stage driving system 141 that operates in accordance with the build condition. The operating state information may include information about an actual movement aspect of the build head 15 by the head driving system 151 that operates in accordance with the build condition. The operating state information may include information about an actual supply aspect of the build material by the recoater 12 that operates in accordance with the build condition. The operating state information may include information about an actual state of the build environment in which the build apparatus 1 builds the build object BO.

The information acquisition unit 311 may acquire the build information 413 from the build apparatus 1 by using the communication apparatus 33. In a case where the build information 413 is stored in an external apparatus (e.g., a cloud server) that is different from the build apparatus 1, the information acquisition unit 311 may acquire the build information 413 from the external apparatus, by using the communication apparatus 33. In a case where the build information 413 is recorded on a recording medium, the information acquisition unit 311 may acquire the build information 413 from the recording medium, by using the input apparatus 34 that may serve as a recording medium reading apparatus.

The information acquisition unit 311 may acquire the build information 413 in the build period in which the build apparatus 1 builds the build object BO (especially, the three-dimensional structure ST). The information acquisition unit 311 may acquire the build information 413 after the end of the build period. The information acquisition unit 311 may acquire the build information 413 before the build period (before a start of the building of the build object BO).

The information acquisition unit 311 may associate the acquired build information 413 with the build position at which the build apparatus 1 performs the build processing, as in the measurement information 411 and the measurement information 412. Specifically, the information acquisition unit 311 may associate the build information 413 about the building of one part of the build object BO, with the build position at which the build apparatus 1 performs the build processing of the one part of the build object BO (i.e., the position of the one part of the build object BO). The information acquisition unit 311 may associate the build information 413 about the building of another part of the build object BO, with the build position at which the build apparatus 1 performs the build processing of the another part of the build object BO (i.e., the position of the another part of the build object BO). Alternatively, a different apparatus from the information processing apparatus 3 may associate the build information 413 with the build position at which the build apparatus 1 performs the build processing, and the information acquisition unit 311 may acquire the build information 412 associated with the build position. The information acquisition unit 311 may store the build information 413 associated with the build position, in the information DB 321 of the storage apparatus 32.

For example, the information acquisition unit 311 may associate the build condition information included in the build information 413, with a build position at which the build apparatus 1 performs the build processing by using the build condition indicated by the build condition information. As an example, in a case where the build information 413 includes the irradiation condition that is an example of the build condition, the information acquisition unit 311 may associate information about the irradiation condition included in the build information 413, with a build position at which the build apparatus 1 performs the build processing by using the build light EL in accordance with the irradiation condition. As an example, in a case where the build information 413 includes the recoater movement condition that is an example of the build condition, the information acquisition unit 311 may associate information about the recoater movement condition included in the build information 413, with a build position at which the build apparatus 1 performs the build processing while moving the recoater 12 in accordance with the recoater movement condition. As an example, in a case where the build information 413 includes the stage movement condition that is an example of the build condition, the information acquisition unit 311 may associate information about the stage movement condition included in the build information 413, with a build position at which the build apparatus 1 performs the build processing while moving the elevating stage 14 in accordance with the stage movement condition. As an example, in a case where the build information 413 includes the head movement condition that is an example of the build condition, the information acquisition unit 311 may associate information about the head movement condition included in the build information 413, with a build position at which the build apparatus 1 performs the build processing while moving the build head 15 in accordance with the head movement condition. As an example, in a case where the build information 413 includes the material condition that is an example of the build condition, the information acquisition unit 311 may associate information about the material condition included in the build information 413, with a build position at which the build apparatus 1 performs the build processing while supplying the build material in accordance with the material condition. As an example, in a case where the build information 413 includes the environmental condition that is an example of the build condition, the information acquisition unit 311 may associate information about the environmental condition included in the build information 413, with a build position at which the build apparatus 1 performs the build processing in an environment indicated by the environmental condition. As an example, in a case where the build information 413 includes the design condition that is an example of the build condition, the information acquisition unit 311 may associate information about the design condition included in the build information 413, with a build position at which the build apparatus 1 performs the build processing in order to build the build object BO indicated by the design condition.

For example, the information acquisition unit 311 may associate the operating state information included in the build information 413, with a build position at which the build apparatus 1 that operates in the operating state indicated by the operating state information, performs the build processing. As an example, in a case where the operating state information includes the information about the actual irradiation aspect of the build light EL, the information acquisition unit 311 may associate the operating state information included in the build information 413, with a build position at which the build apparatus 1 performs the build processing by actually applying the build light EL in the irradiation aspect indicated by the operating state information. As an example, in a case where the operating state information includes the information about the actual movement aspect of the recoater 12, the information acquisition unit 311 may associate the operating state information included in the build information 413, with a build position at which the build apparatus 1 performs the build processing by actually moving the recoater 12 in the movement aspect indicated by the operating state information. As an example, in a case where the operating state information includes the information about the actual movement aspect of the elevating stage 14, the information acquisition unit 311 may associate the operating state information included in the build information 413, with a build position at which the build apparatus 1 performs the build processing by actually moving the elevating stage 14 in the movement aspect indicated by the operating state information. As an example, in a case where the operating state information includes the information about the actual movement aspect of the build head 15, the information acquisition unit 311 may associate the operating state information included in the build information 413, with a build position at which the build apparatus 1 performs the build processing by actually moving the build head 15 in the movement aspect indicated by the operating state information. As an example, in a case where the operating state information includes the information about the actual supply aspect of the build material, the information acquisition unit 311 may associate the operating state information included in the build information 413, with a build position at which the build apparatus 1 performs the build processing by actually supplying the build material in the supply aspect indicated by the operating state information.

Thereafter, the defect prediction unit 312 calculates (in other words, extracts) a feature quantity of the measurement target object, on the basis of at least one of the measurement information 411 and the measurement information 412 acquired in the step S11 (step S13). The defect prediction unit 312, however, may not calculate the feature quantity of the measurement target object.

The defect prediction unit 312 may calculate the feature quantity in the build period in which the build apparatus 1 builds the build object BO (especially, the three-dimensional structure ST). In this instance, the defect prediction unit 312 may calculate the feature quantity in the build period, on the basis of the measurement information 411 and the measurement information 412 acquired in the build period by means of the measurement apparatus 2 measuring the measurement target object in the build period.

The defect prediction unit 312 may calculate the feature quantity after the end of the build period. In this instance, the defect prediction unit 312 may calculate the feature quantity after the end of the build period, on the basis of the measurement information 411 and the measurement information 412 acquired in the build period by means of the measurement apparatus 2 measuring the measurement target object in the build period.

Since it is possible to calculate the feature quantity of the measurement target object on the basis of at least one of the measurement information 411 and the measurement information 412, at least one of the measurement information 411 and the measurement information 412 may be regarded as including information about the feature quantity of the measurement target object. That is, at least one of the measurement information 411 and the measurement information 412 may be regarded as including information about the feature quantity of the measurement target object that is acquired in the build period in which the build apparatus 1 builds the build object BO.

For example, the temperature image IMG_T that is the measurement information 411, includes information about the temperature of at least a part of the melt pool MP. A temperature of the melt pool MP is much higher than a temperature of a different object from the melt pool MP (e.g., the material layer ML or the build object BO). For this reason, in the temperature image IMG_T, the melt pool MP and the different object from the melt pool MP may be distinguished from the temperature distributions thereof. Therefore, the defect prediction unit 312 may calculate a feature quantity of the melt pool MP, on the basis of the measurement information 411. For example, the defect prediction unit 312 may calculate an index value indicating a shape of the melt pool MP, as the feature quantity of the melt pool MP. For example, the defect prediction unit 312 may calculate an index value indicating a size of the melt pool MP, as the feature quantity of the melt pool MP. An example of the size includes at least one of a length that is a size along a first direction, a width that is a size along a second direction intersecting the first direction, a depth that is a size along a third direction intersecting the first and second directions (in other words, a height or a thickness), and a surface area and volume. For example, the defect prediction unit 312 may calculate an index value indicating the temperature of the melt pool MP (e.g., at least one of an average temperature, a maximum temperature, a minimum temperature, variations in temperature, and a temperature distribution aspect), as the feature quantity of the melt pool MP.

For example, in a case where the measurement information 411 includes the information about the temperature of at least a part of the measurement target object that is different from the melt pool MP, the defect prediction unit 312 may calculate the feature quantity of the measurement target object that is different from the melt pool MP, on the basis of the measurement information 411. For example, as described above, the spatters SPT generated from the melt pool MP due to the irradiation with the build light EL, may appear in the temperature image IMG_T in some cases. In this instance, the defect prediction unit 312 may calculate a feature quantity of the spatters SPT on the basis of the measurement information 411. For example, the defect prediction unit 312 may calculate the number of the spatters that appear in the temperature image IMG_T, as the feature quantity of the spatters SPT. For example, the defect prediction unit 312 may calculate an index value indicating a size of the spatter that appears in the temperature image IMG_T (e.g., at least one of an average size, a maximum size, and a minimum size), as the feature quantity of the spatters SPT. For example, the defect prediction unit 312 may calculate an index value indicating a temperature of the spatter that appears in the temperature image IMG_T (e.g., at least one of an average temperature, a maximum temperature, a minimum temperature, variations in temperature, and a temperature distribution aspect), as the feature quantity of the spatters SPT. Furthermore, as described above, the fumes generated due to the irradiation with the build light EL may appear in the temperature image IMG_T in some cases. In this case, the defect prediction unit 312 may calculate a feature quantity of the fume, on the basis of the measurement information 411. For example, the defect prediction unit 312 may calculate an index value indicating a size of fumes that appear in the temperature image IMG_T (e.g., at least one of an area and a volume), as the feature quantity of the fumes. The defect prediction unit 312 may calculate an index value indicating a temperature of the fumes that appear in the temperature image IMG_T (e.g., at least one of an average temperature, a maximum temperature, a minimum temperature, variations in temperature, and a temperature distribution aspect), as the feature quantity of the fumes.

The feature quantity calculated on the basis of the temperature image data D_T (i.e., the feature quantity related to the temperature of the measurement target object) may be calculated by the temperature measurement apparatus 21, in addition to or instead of the defect prediction unit 312. In this instance, the temperature measurement apparatus 21 may output the measurement information 411 including the calculated feature quantity.

For example, the shape image data D_3D that are the measurement information 412 includes information about a shape of the build object BO. Therefore, the defect prediction unit 312 may calculate a feature quantity of the build object BO, on the basis of the measurement information 412.

As an example, the build object BO may include the three-dimensional structure ST that is completely built or that is in the middle of being built, as described above. In this instance, the defect prediction unit 312 may calculate a feature quantity of the three-dimensional structure ST that is completely built or that is in the middle of being built, on the basis of the measurement information 412. For example, the defect prediction unit 312 may calculate an index value indicating a surface state of the three-dimensional structure ST, as the feature quantity of the three-dimensional structure ST. An example of the index value indicating the surface state is surface roughness indicating a degree of unevenness of the surface (in other words, a surface topography). An example of the surface roughness is at least one of an arithmetic mean height Sa, a root mean square height Sq, and a maximum height Sz. For example, the defect prediction unit 312 may calculate an index value indicating a size of the three-dimensional structure ST (e.g., as described above, at least one of a length, a width, a height (a depth or a thickness), and a surface area and volume), as the feature quantity of the three-dimensional structure ST.

As another example, the build object BO may include the solidified layer STL as described above. In this instance, the defect prediction unit 312 may calculate a feature quantity of the solidified layer STL that is completely built or that is in the middle of being built, on the basis of the measurement information 412. For example, the defect prediction unit 312 may calculate an index value indicating a surface state of the solidified layer STL (e.g., the surface roughness described above), as the feature quantity of the solidified layer STL. For example, the defect prediction unit 312 may calculate an index value indicating a size of the solidified layer STL (e.g., as described above, at least one of a length, a width, a height (a depth or a thickness), and a surface area and volume), as the feature quantity of the solidified layer STL. For example, the defect prediction unit 312 may calculate a thickness of an n-th solidified layer STL formed on an (n-1)-the solidified layer STL, by subtracting a surface shape (height) of the (n-1)-th solidified layer STL from a surface shape (height) of the n-th solidified layer STL. Here, n indicates an integer of 2 or more.

For example, the shape data D_3D that are the measurement information 412, includes information about a shape of the material layer ML. Therefore, the defect prediction unit 312 may calculate a feature quantity of the material layer ML on the basis of the measurement information 412. For example, the defect prediction unit 312 may calculate an index value indicating a surface state of the material layer ML (e.g., the surface roughness described above), as the feature quantity of the material layer ML. For example, the defect prediction unit 312 may calculate an index value indicating a size of the material layer ML (e.g., as described above, at least one of a length, a width, a height (a depth), a thickness, and a surface area and volume), as the feature quantity of the material layer ML. For example, the defect prediction unit 312 may calculate a thickness of the material layer ML formed on the (n-1)-th solidified layer STL in order to build the n-th solidified layer STL, by subtracting the surface shape (height) of the (n-1)-th solidified layer STL from the surface shape (height) of the material layer ML.

The feature quantity calculated on the basis of the shape image data D_3D (i.e., the feature quantity related to the shape of the measurement target object) may be calculated by the shape measurement apparatus 22, in addition to or instead of the defect prediction unit 312. In this instance, the shape measurement apparatus 22 may output the measurement information 412 including the calculated feature quantity.

As described above, in a case where at least one of the measurement information 411 and the measurement information 412 is associated with the build position, the defect prediction unit 312 may associate feature quantity information 414 indicating the feature quantity calculated from at least one of the measurement information 411 and the measurement information 412, with the build position. The defect prediction unit 312 may store the feature quantity information 414 associated with the build position, in the information DB 321 of the storage apparatus 32.

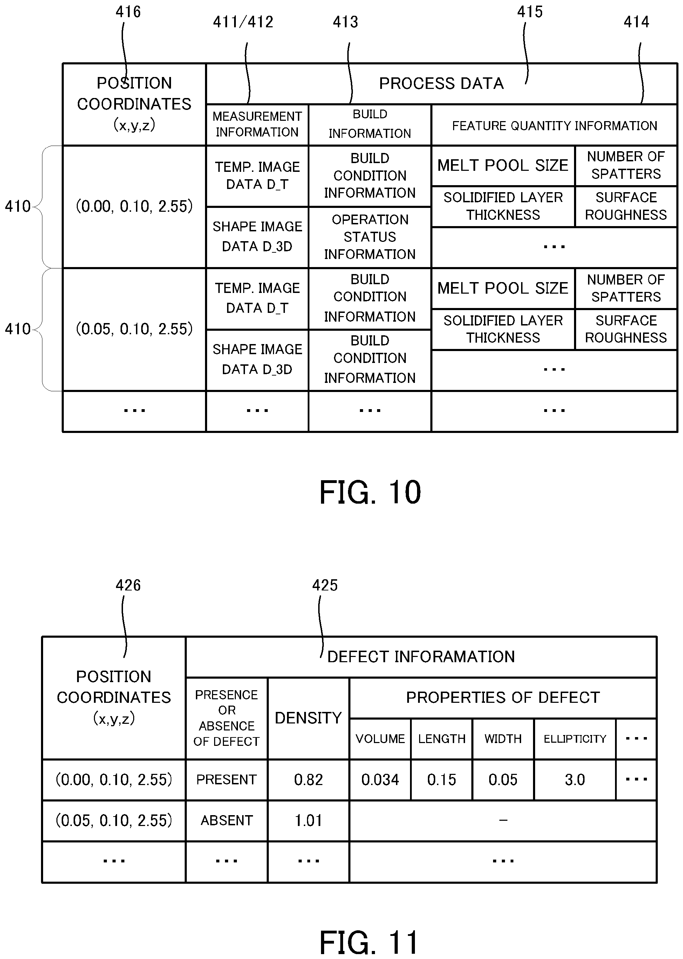

Here, FIG. 10 illustrates an example of the measurement information 411, the measurement information 412, the build information 413, and the feature quantity information 414 that are stored in the information DB 321 in association with position information 416 indicating the build position. As illustrated in FIG. 10, a plurality of unit data 410 including: the position information 416; and the process data 415 including the measurement information 411, the measurement information 412, the build information 413, and the feature quantity information 414 that are associated with the position information 416, may be stored in the information DB 321. In the example illustrated in FIG. 10, the process data 415 includes all of the measurement information 411, the measurement information 412, the build information 413, and the feature quantity information 414. The process data 415, however, may not include at least one of the measurement information 411, the measurement information 412, the build information 413, and the feature quantity information 414.

Here, an example of the process data 415 associated with the position information 416 will be described. For example, the temperature image data D_T serving as the measurement information 411, may be associated with the position information 416 indicating a center of the temperature image IMG_T indicated by the temperature image data D_T (e.g., an irradiation position of the build light EL by the above-described not-illustrated Galvano mirror that irradiates the material layer ML with the build light EL and that guides a light from the melt pool MP to the temperature measurement apparatus 21). For example, the shape image data D_3D serving as the measurement information 412, may be associated with the position information 416 indicating a center of the shape image IMG_3D indicated by the shape image data D_3D. For example, the feature quantity information 414 may include information about the size of the melt pool MP calculated from the temperature image IMG_T centered at a position indicated by the position information 416 associated with the feature quantity information 414. For example, the feature quantity information 414 may include information about the number of the spatters SPT calculated from the temperature image IMG_T centered at the position indicated by the position information 416 associated with the feature quantity information 414. For example, the feature quantity information 414 may include information about the thickness of the solidified layer STL formed at the position indicated by the position information 416 associated with the feature quantity information 414. Since a plurality of solidified layers STL have different positions in the Z axis direction, the positions in the Z axis direction indicated by the position information 416 associated with the feature quantity information 414 may be usable as information for distinguishing the plurality of solidified layers STL from each other. For example, the feature quantity information 414 may include information about a surface roughness of the solidified layer STL formed at the position indicated by the position information 416 associated with the feature quantity information 414 (i.e., the solidified layer STL at a position that is uniquely identifiable by the position in the Z axis direction indicated by the position information 416).

In the example illustrated in FIG. 10, all of the measurement information 411, the measurement information 412, the build information 413, and the feature quantity information 414 are associated with the position information 416 indicating the build position. At least one of the measurement information 411, the measurement information 412, the build information 413, and the feature quantity information 414, however, may not be associated with the position information 416.

Referring back to FIG. 9, thereafter, the defect prediction unit 312 generates the defect information 425 by using the process data 415 (i.e., the measurement information 411, the measurement information 412, the build information 413, and the feature quantity information 414) (step S14). In the present example embodiment, an example in which the defect prediction unit 312 generates the defect information 425 by using the process data 415 (i.e., the measurement information 411, the measurement information 412, and the build information 413 that are acquired by the information acquisition unit 311, and the feature quantity information generated from those pieces of information acquired by the information acquisition unit 311) and the prediction model PM, will be described.

The information acquisition unit 311 may not acquire at least one of the measurement information 411, the measurement information 412, and the build information 413, and the defect prediction unit 312 may not calculate the feature quantity of the measurement target object (i.e., may not generate the feature quantity information 414), as described above. In this case, the defect prediction unit 312 may generate the defect information 425 without using at least one of the measurement information 411, the measurement information 412, the build information 413, and the feature quantity information 414. That is, the defect prediction unit 312 may generate the defect information 425, by using at least one of the measurement information 411, the measurement information 412, the build information 413, and the feature quantity information 414, but not using at least another one of the measurement information 411, the measurement information 412, the build information 413, and the feature quantity information 414. The defect prediction unit 312 may generate the defect information 425 by using a part of the process data 415, but not using another part of the process data 415. The process data 415 may not include at least one of the measurement information 411, the measurement information 412, the build information 413, and the feature quantity information 414.

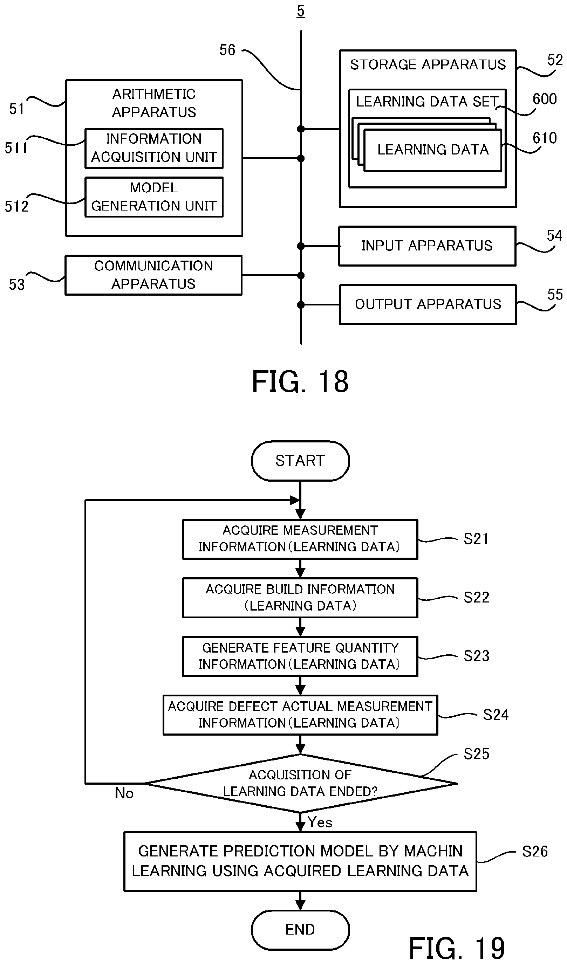

The prediction model PM is a learning model generated by machine learning so as to generate the defect information 425 on the basis of the process data 415. The prediction model PM is typically a learning model using the process data 415 as an explanatory variable and using the defect information 425 as an objective variable. An example of such a learning model is at least one of a regression model (e.g., at least one of a linear regression model and a nonlinear regression model), a decision tree model, a clustering model (i.e., a classification model), and a neural network model. A method of generating the prediction model PM by machine learning will be described in detail with reference to FIG. 18 or the like.

As described above, the process data 415 are associated with the position information 416 indicating the build position. In this case, the defect prediction unit 312 may generate the defect information 425 including information about a defect formed at one build position, by using the process data 415 associated with the position information 416 indicating the one build position. Conversely, the prediction model PM may be generated by machine learning so as to generate the defect information 425 including information about a defect formed at one build position, by using the process data 415 associated with the position information 416 indicating the one build position. The defect prediction unit 312 may generate the defect information 425 including information about a defect formed in at least one of one build position and a nearby position of the one build position, by using the process data 415 associated with the position information 416 indicating the one build position. Conversely, the prediction model PM may be generated by machine learning so as to generate the defect information 425 including information about a defect formed in at least one of one build position and a nearby position of the one build position, by using process data 415 associated with the position information 416 indicating the one build position. The nearby position of one of the build position may mean a position at which a distance from the one build position is less than or equal to a predetermined distance. The defect prediction unit 312 may generate the defect information 425 including information about a defect formed at one build position, by using the process data 415 associated with the position information 416 indicating at least one of the one build position and a nearby position of the one build position. Conversely, the prediction model PM may be generated by machine learning so as to generate the defect information 425 including information about a defect formed at one build position, by using the process data 415 associated with the position information 416 indicating at least one of the one build position and a nearby position of the one build position. The defect prediction unit 312 may generate the defect information 425 including information about a defect formed in at least one of one build position and a nearby position of the one build position, by using the process data 415 associated with the position information 416 indicating at least one of the one build position and the nearby position of the one build position. Conversely, the prediction model PM may be generated by machine learning so as to generate the defect information 425 including information about a defect formed in at least one of one build position and a nearby position of the build position, by using the process data 415 associated with the position information 416 indicating at least one of the one build position and the nearby position of the one build position.

In a case where the defect information 425 including information about a defect formed at a certain position in this way is generated, the defect information 425 may be associated with information about the position at which the defect is formed (e.g., information about the build position at which the defect is formed). In other words, the defect prediction unit 312 may generate the defect information 425 associated with the information about the position at which the defect is formed. Conversely, the prediction model PM may be generated by machine learning so as to generate the defect information 425 associated with the information about the position at which the defect is formed (e.g., the information about the build position at which the defect is formed).

The defect prediction unit 312 may generate the defect information 425 including information about presence or absence of the defect. Specifically, the defect prediction unit 312 may generate the defect information 425 including information indicating whether or not the defect is formed at a certain position of the build object BO. Conversely, the prediction model PM may be generated by machine learning so as to generate the defect information 425 including information about the presence or absence of the defect.

In a case where the defect is the void space SP described above, a density of the build object BO when the defect is generated (i.e., the void space SP is formed) is likely to be different from a density of the build object BO when the defect is not generated (i.e., the void space SP is not formed). Typically, the density of the build object BO when the defect is generated is likely to be lower than the density of the build object BO when the defect is not generated. Therefore, it can be said that the density of the build object BO is usable as information indirectly indicating the presence or absence of the defect. Therefore, the defect prediction unit 312 may generate the defect information 425 including information (density information) about the density of the build object BO. Conversely, the prediction model PM may be generated by machine learning so as to generate the defect information 425 including information about the density of the build object BO. In a case where the defect is generated in two build objects BO, the density of one build object BO with a larger volume of the defect (i.e., a larger volume of the void space SP) formed therein is likely to be lower than the density of the other build object BO with a smaller volume of the defect (i.e., a smaller volume of the void space SP) formed therein. In a case where the defect is generated in two build objects BO, the density of one build object BO with a larger total volume of a plurality of defects (i.e., a larger total volume of a plurality of void spaces SP) generated therein is likely to be lower than the density of the other build object BO with a smaller total volume of a plurality of defects (i.e., a smaller total volume of a plurality of void spaces SP) generated therein.

The density of the build object BO may include a density of each part of the build object BO (e.g., each part included in a unit space centered at a position indicated by position information 426). In this instance, the prediction model PM may be generated by machine learning so as to generate information about the density of one part of the build object BO included in a unit space centered at one build position, by using the process data 415 associated with the position information 416 indicating the one build position. The prediction model PM may be generated by machine learning so as to generate information about the density of one part of the build object BO included in a unit space centered at another build position, by using the process data 415 associated with the position information 416 indicating the another build position. Alternatively, the prediction model PM may be generated by machine learning so as to generate the information about the density of the build object BO, by using the process data 415 associated with the build object BO. Note that the density of the build object BO may include an average density of the build object BO. As described above, the build object BO means at least one of the three-dimensional structure ST that is completely built, the three-dimensional structure ST that is in the middle of being built, the solidified layer STL that is completely built, and the solidified layer STL that is in the middle of being built. Therefore, the density of the build object BO may mean the density of at least one of the three-dimensional structure ST that is completely built, the three-dimensional structure ST that is in the middle of being built, the solidified layer STL that is completely built, and the solidified layer STL that is in the middle of being built.

The defect prediction unit 312 may generate the defect information 425 including the information about the presence or absence of the defect, on the basis of the information about the density of the build object BO. For example, the defect prediction unit 312 may determine that there is a defect in the build object BO when the density of the build object BO is less than a predetermined density threshold. For example, when the density of the build object BO is not less than the predetermined density threshold, the defect prediction unit 312 may determine that there is no defect in the build object BO.

Even in a case where the defect is not the void space SP described above, there is a possibility that some defect is generated in the build object BO in a case where the density of the build object BO is different from a design density. Therefore, even in a case where the defect is not the void space SP, the defect prediction unit 312 may generate the defect information 425 including the information about the density of the build object BO.

The defect prediction unit 312 may generate the information about the density of the build object BO, apart from the defect information 425. This is because the density of the build object BO itself may be regarded as not the defect in the build object BO. In this case, the information (density information) about the density of the build object BO may be included in the property information, as an example of the property information about the properties of the build object BO, apart from the defect information 425.

The defect prediction unit 312 may generate the defect information 425 including information about properties of the defect (e.g., the void space SP). Conversely, the prediction model PM may be generated by machine learning so as to generate the defect information 425 including information about properties of the defect. The properties of the defect may include at least one of a size of the defect, a position of the defect, and a shape of the defect. In a case where the defect is the void space SP, the shape of the defect is a spherical shape in many cases. In this case, as an index value indicating the shape of the defect, at least one of sphericity and ellipticity may be used.

In a case where the defect is the void space SP described above, the defect prediction unit 312 may consider the void space SP with a size that exceeds an allowable size to be the defect, but may not consider the void space SP with a size that does not exceed the allowable size to be the defect. In this instance, the defect prediction unit 312 may generate the information about the presence or absence of the defect, on the basis of the information about the properties of the defect predicted by using the prediction model PM. This is not limited to the size of the void space SP; the defect prediction unit 312 may consider the void space SP with properties that do not satisfy an allowable condition to be the defect, but may not consider the void space SP with properties that satisfy the allowable condition to be the defect.

The defect prediction unit 312 may generate the defect information 425 in the build period in which the build apparatus 1 builds the build object BO (especially, the three-dimensional structure ST). In this case, the defect prediction unit 312 may generate the defect information 425 in the build period, by using the process data 415 including at least one of the measurement information 411 and the measurement information 412 acquired in the build period. The defect prediction unit 312 may generate the defect information 425 in the build period, by using the process data 415 including the build information 413 acquired in the build period. The defect prediction unit 312 may generate the defect information 425 in the build period, by using the process data 415 including the feature quantity information 414 generated in the build period.

The defect prediction unit 312 may generate the defect information 425 after the end of the build period. In this case, the defect prediction unit 312 may generate the defect information 425 after the end of the build period, by using the process data 415 including at least one of the measurement information 411 and the measurement information 412 acquired in the build period or after the end of the build period. The defect prediction unit 312 may generate the defect information 425 after the end of the build period, by using the process data 415 including the build information 413 acquired in the build period or after the end of the build period. The defect prediction unit 312 may generate the defect information 425 after the end of the build period, by using the process data 415 including the feature quantity information 414 generated in the build period or after the end of the build period.

Thereafter, the defect output unit 313 outputs the defect information 425 generated by the defect prediction unit 312 in the step S14 (step S15). The defect output unit 313, however, may not output the defect information 425.

The defect output unit 313 may output the defect information 425 in the build period in which the build apparatus 1 builds the build object BO (especially, the three-dimensional structure ST). In this case, the defect output unit 313 may output, in the build period, the defect information 425 generated in the build period. The defect output unit 313 may output the defect information 425 after the end of the build period. In this case, the defect output unit 313 may output, , after the end of the build period, the defect information 425 generated in the build period or after the end of the build period.

The defect output unit 313 may output the defect information 425 to a user of the build apparatus 1. In this instance, the defect output unit 313 may output the defect information 425 by using the output apparatus 35. For example, the defect output unit 313 may output (i.e., display) the defect information 425 as an image, by using the output apparatus 35 that may serve as a display apparatus. For example, the defect output unit 313 may output the defect information 425 as audio, by using the output apparatus 35 that may serve as an audio apparatus (speaker). For example, the defect output unit 313 may output a paper sheet on which the defect information 425 is printed, by using the output apparatus 35 that may serve as a print apparatus. Alternatively, the defect output unit 313 may output (i.e., transmit) the defect information 425 as data, by using the communication apparatus 33 in addition to or instead of using the output apparatus 35. For example, the defect output unit 313 may output (transmit) the defect information 425, as data, to an information terminal (e.g., a personal computer, a smartphone, or a tablet terminal) possessed by the user, by using the communication apparatus 33.

In any case, the user is allowed to acquire information about the defect formed in the build object BO. That is, the user is allowed to recognize whether or not the defect is formed in the build object BO. Furthermore, the user is allowed to recognize what type of defect is formed in the build object BO. In this case, the user may take an action to reduce an influence caused by the defect. For example, the user may control an apparatus for performing an additional processing (e.g., the build apparatus 1 or another processing apparatus that is different from the build apparatus 1) so as to perform the additional processing for reducing the influence caused by the defect (e.g., reducing or removing the defect). For example, the user may manually perform the additional processing for removing the defect.

In a case where the defect information 425 is outputted in the build period as described above, when the build apparatus 1 continues to build the build object BO, the build object BO with the defect formed (especially, the three-dimensional structure ST) may be built. Therefore, in a case where the defect information 425 is outputted, the user may control the build apparatus 1 so as to stop the building of the build object BO. For example, in a case where the defect information 425 is outputted, the user may control the build apparatus 1 so as to uniformly stop the building of BO of the build object. Alternatively, in a case where the defect information 425 satisfies a predetermined stop condition, the user may control the build apparatus 1 to stop the building of the build object BO. For example, in a case where the defect indicated by the defect information 425 adversely affects appropriate building of the build object BO, the user may control the build apparatus 1 so as to stop the building of the build object BO. On the other hand, in a case where the defect information 425 does not satisfy the predetermined stop condition, the user may control the build apparatus 1 so as to continue to build the build object BO. For example, in a case where the defect indicated by the defect information 425 does not adversely affect the appropriate building of the build object BO, the user may control the build apparatus 1 so as to continue to build the build object BO.

In a case where the defect is formed in the build object BO, the build condition that is set to define the operation content of the build apparatus 1 that builds the build object BO may not be appropriate. Therefore, the user may correct the build condition. Specifically, the user may correct the build condition such that defect is not formed in the build object BO, on the basis of the defect information 425. In this case, the user may correct the entire build condition. Alternatively, the user may partially correct the build condition. Correcting the build condition may be regarded as equivalent to changing the build condition.

In a case where the build condition is partially corrected, for example, the user may correct a part of the build condition, but may not correct another part of the build condition. As an example, the user may correct at least one of the irradiation condition, the recoater movement condition, the stage movement condition, the head movement condition, the material condition, the environmental condition, and the design condition, but may not correct at least another one of the irradiation condition, the recoater movement condition, the stage movement condition, the head movement condition, the material condition, the environmental condition, and the design condition. As an example, the user may correct at least one of a plurality of conditions included in the irradiation condition (e.g., the output of the light source that generates the build light EL, the intensity of the build light EL emitted from the light source, the intensity of the build light EL on the material layer ML, the intensity distribution of the build light EL on the material layer ML, the irradiation timing of the build light EL, the irradiation position of the build light EL, the movement rule of the irradiation position of the build light EL, the moving trajectory of the irradiation position of the build light EL, the hatching distance that is an interval between two adjacent moving trajectories, the moving speed of the irradiation position of the build light EL (i.e., thescanning speed), the spot diameter of the build light EL emitted from the light source, and the diameter of the spot formed by the build light EL on the material layer ML), but may not correct at least another one of the plurality of conditions included in the irradiation condition. The user may correct at least one of a plurality of conditions included in the recoater movement condition, but may not correct at least another one of the plurality of conditions included in the recoater movement condition. The user may correct at least one of a plurality of conditions included in the head movement condition, but may not correct at least another one of the plurality of conditions included in the head movement condition. The user may not correct at least one of a plurality of conditions included in the stage movement condition, but may not correct at least another one of the plurality of conditions included in the stage movement condition. The user may correct at least one of a plurality of conditions included in the material condition , but may not correct at least another one of the plurality of conditions included in the material condition. The user may correct at least one of a plurality of conditions included in the environmental condition, but may not correct at least another one of the plurality of conditions included in the environmental condition. The user may not correct at least one of a plurality of conditions included in the design condition, but may not correct at least another one of the plurality of conditions included in the design condition.

In a case where the build condition is partially corrected, for example, the user may correct the build condition used to build one part of the build object BO, but may not correct the build condition used to build another part of the build object BO. As an example, in a case where the defect information 425 indicates that the defect is formed in one part of the build object BO, the user may correct the build condition used to build the one part of the build object BO, but may not correct the build condition used to build another part that is different from the one part of the build object BO. Alternatively, the user may correct the build condition used to build one part of the build object BO and a nearby part of the one part, but may not correct the build condition used to build another part that is different from the one part of the build object BO and the nearby part of the one part. The nearby part of one part may mean a part in which a distance from the one part is less than or equal to a predetermined distance. As a result, it is possible to shorten a time required to correct the build condition.

In a case where the build condition is corrected, the build apparatus 1 may build the build object BO by using the build condition corrected by the user. As an example, in a case where the defect information 425 is outputted after the end of the build period (i.e., after completion of the building of a certain three-dimensional structure ST), the user may correct the build condition used when the three-dimensional structure ST of the same shape or the like is built next. In this case, the build apparatus 1 may use the corrected build condition when the three-dimensional structure ST of the same shape or the like is built next. As another example, in a case where the defect information 425 is outputted in the build period (i.e., before the completion of the building of a certain three-dimensional structure ST), the user may correct the build condition used to complete the three-dimensional structure ST that is in the middle of being built. In this instance, the build apparatus 1 may restart to build the three-dimensional structure ST that is in the middle of being built, by using the corrected build condition. In a case where the defect information 425 indicating that the defect is formed in one part of the build object BO in the build period, is outputted, the user may repair the defect in the one part of the build object BO. For example, the user may control the build apparatus 1 such that the one part of the build object BO is irradiated again with the build light EL to be remelted. At this time, the user may control the build apparatus 1 to irradiate the one part of the build object BO again with the build light EL, by using the corrected build condition.

The defect output unit 313 may output the defect information 425 to an external apparatus of the information processing apparatus 3. In this instance, the defect output unit 313 may output (i.e., transmit) the defect information 425 to the external apparatus, by using the communication apparatus 33. Specifically, the defect output unit 313 may transmit the defect information 425 to the build apparatus 1. Consequently, the build apparatus 1 may receive (acquire) the defect information 425.

In this instance, the build apparatus 1 may output the defect information 425 by using a not-illustrated output apparatus provided in the build apparatus 1. For example, the build apparatus 1 may output the defect information 425 as an image, by using a display apparatus provided in the build apparatus 1. For example, the build apparatus 1 may output the defect information 425 as audio, by using an audio apparatus provided in the build apparatus 1. For example, the build apparatus 1 may output a paper sheet on which the defect information 425 is printed, by using a print apparatus provided in the build apparatus 1. The build apparatus 1 may output (i.e., transmit) the defect information 425 as data, by using a not-illustrated communication apparatus provided in the build apparatus 1. For example, the build apparatus 1 may output (transmit) the defect information 425, as data, to an information terminal (e.g., a personal computer, a smartphone, or a tablet terminal) possessed by the user.

The control unit 16 of the build apparatus 1 may control the build unit 10 on the basis of the received defect information 425. For example, the control unit 16 may control the build unit 10 (or another processing apparatus) so as to perform an additional processing for reducing the influence caused by the defect (e.g., reducing or removing the defect) on the basis of the defect information 425. In this case, it is possible to reduce the influence caused by the defect without bothering the user.

In addition, in a case where the defect information 425 is outputted, the control unit 16 may control the build unit 10 to stop the building of the build object BO. For example, in a case where the defect information 425 is outputted, the control unit 16 may control the build unit 10 to uniformly stop the building of the build object BO. For example, in a case where the defect information 425 satisfies the predetermined stop condition, the control unit 16 may control the build unit 10 to stop the building of the build object BO. For example, in a case where the defect indicated by the defect information 425 adversely affects the appropriate building of the build object BO, the control unit 16 may control the build unit 10 to halt the building of the build object BO. On the other hand, in a case where the defect information 425 does not satisfy the predetermined stop condition, the control unit 16 may control the build unit 10 to continue to build the build object BO. For example, in a case where the defect indicated by the defect information 425 does not adversely affect the appropriate building of the build object BO, the control unit 16 may control the build unit 10 to continue to build the build object BO. In this case, it is possible to reduce the influence caused by the defect without bothering the user.

Furthermore, the control unit 16 may correct the build condition on the basis of the defect information 425. Specifically, the control unit 16 may correct the build condition such that defect is not formed in the build object BO, on the basis of the defect information 425. In this case, the control unit 16 may correct the entire build condition. Alternatively, the control unit 16 may partially correct the build condition, as in a case where the user partially corrects the build condition.

In a case where the build condition is partially corrected, for example, the control unit 16 may correct one part of the build condition, but may not correct another part of the build condition. As an example, the control unit 16 may correct at least one of the irradiation condition, the recoater movement condition, the stage movement condition, the head movement condition, the material condition, the environmental condition, and the design condition, but may not correct at least another one of the irradiation condition, the recoater movement condition, the stage movement condition, the head movement condition, the material condition, the environmental condition, and the design condition. As an example, the control unit 16 may correct at least one of the plurality of conditions included in the irradiation condition (e.g., the output of the light source that generates the build light EL, the intensity of the build light EL emitted from the light source, the intensity of the build light EL on the material layer ML, the intensity distribution of the build light EL on the material layer ML, the irradiation timing of the build light EL, the irradiation position of the build light EL, the movement rule of the irradiation position of the build light EL, the moving trajectory of the irradiation position of the build light EL, the hatching distance that is an interval between two adjacent moving trajectories, the moving speed of the irradiation position of the build light EL (i.e., the scanning speed), the spot diameter of the build light EL emitted from the light source, and the diameter of the spot formed by the build light EL on the material layer ML), but may not correct at least another one of the plurality of conditions included in the irradiation condition. The control unit 16 may correct at least one of the plurality of conditions included in the recoater movement condition, but may not correct at least another one of the plurality of conditions included in the recoater movement condition. The control unit 16 may correct at least one of the plurality of conditions included in the head movement condition, but may not correct at least another one of the plurality of conditions included in the head movement condition. The control unit 16 may not correct at least one of the plurality of conditions included in the stage movement condition, but may not correct at least another one of the plurality of conditions included in the stage movement condition. The control unit 16 may correct at least one of the plurality of conditions included in the material condition, but may not correct at least another one of the plurality of conditions included in the material condition. The control unit 16 may correct at least one of the plurality of conditions included in the environmental condition, but may not correct at least another one of the plurality of conditions included in the environmental condition. The control unit 16 may not correct at least one of the plurality of conditions included in the design condition, but may not correct at least another one of the plurality of conditions included in the design condition.

In a case where the build condition is partially corrected, for example, the control unit 16 may correct the build condition used to build one part of the build object BO, but may not correct the build condition used to build another part of the build object BO. As an example, in a case where the defect information 425 indicates that the defect is formed in one part of the build object BO, the control unit 16 may correct the build condition used to build the one part of the build object BO, but may not correct the build condition used to build another part of the build object BO. Alternatively, the control unit 16 may correct the build condition used to build one part of the build object BO and a nearby part of the one part, but may not correct the build condition used to build another part that is different from the one part of the build object BO and the nearby part of the one part. As a result, it is possible to shorten the time required to correct the build condition.

In a case where the build condition is corrected, the control unit 16 may control the build unit 10 to build the build object BO, by using the build condition corrected by the control unit 16. As an example, in a case where the defect information 425 is inputted from the information processing apparatus 3 to the build apparatus 1 (especially, the control unit 16) after the end of the build period (i.e., after the completion of the building of a certain three-dimensional structure ST), the control unit 16 may correct the build condition used when the three-dimensional structure ST of the same shape or the like is built next. In this case, the control unit 16 may control the build unit 10 by using the corrected build conditions when the three-dimensional structure ST of the same shape or the like is built next. As another example, in a case where the defect information 425 is inputted from the information processing apparatus 3 to the build apparatus 1 (especially, the control unit 16) in the build period (i.e., before the completion of the building of a certain three-dimensional structure ST), the control unit 16 may correct the build condition used to complete the three-dimensional structure ST in the build period. In this instance, the control unit 16 may control the build unit 10 to restart to build the three-dimensional structure ST that is in the middle of being built, by using the corrected build condition. In a case where the defect information 425 indicating that the defect is formed in one part of the build object BO in the build period, is inputted, the build unit 10 may repair the defect in the one part of the build object BO. For example, the control unit 16 may control the build unit 10 such that one part of the build object BO is irradiated again with the build light EL to be remelted. At this time, the control unit 16 may control the build unit 10 to irradiate one part of the build object BO again with the build light EL, by using the corrected build condition.

In a case where the defect information 425 is outputted, as illustrated in FIG. 11, the defect output unit 313 may output (e.g., display or transmit) the defect information 425 associated with the position information 426 indicating a position at which the defect is formed. In a case where the defect information 425 is displayed, FIG. 11 illustrates an example of a display format in which the defect information 425 is associated with the position information 426. On the other hand, in a case where the defect information 425 is transmitted as data, FIG. 11 illustrates an example of a data structure associated with the defect information 425 and the position information 426. In this instance, the user or the control unit 16 is allowed to easily identify in what part of the build object BO the defect is formed.

Here, an example of the defect information 425 associated with the position information 426 will be described. For example, the defect information 425 may include information about a density of the defect in any unit space centered at the position indicated by the position information 426 associated with the defect information 425 including the information about the density of the defect. That is, the defect information 425 including information about the density of the defect may be associated with the position information 426 indicating a position of a center of the unit space. The density of the defect in any unit space may include an average density of the defect in any unit space. For example, the defect information 425 may include information about the properties of the defect formed in any unit space centered at the position indicated by the position information 426 associated with the defect information 425, as the information about the property of the defect. That is, the defect information 425 including the information about the properties of the defect may be associated with the position information 426 indicating the position of the center of the unit space. Alternatively, for example, the defect information 425 may include information about the properties of the defect (e.g., the void space SP) in which a center of gravity is the position indicated by the position information 426 associated with the defect information 425, as the information about the properties of the defect. That is, the defect information 425 including the information about the properties of the defect may be associated with the position information 426 indicating a position of the center of gravity of the defect.

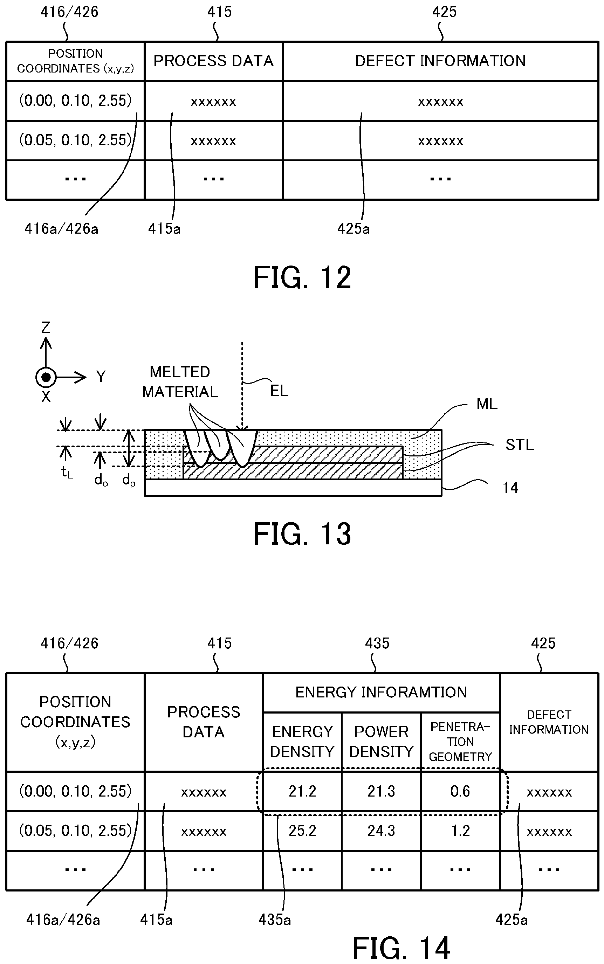

In a case where the defect information 425 is outputted, as illustrated in FIG. 12, the defect output unit 313 may output (e.g., display or transmit) the process data 415 described above, together with the defect information 425. The defect output unit 313 may output (e.g., display or transmit) the defect information 425 and the process data 415 in an output format in which the defect information 425 is associated with the process data 415. That is, the defect output unit 313 may output (e.g., display or transmit) at least one of the measurement information 411, the measurement information 412, the build information 413, and the feature quantity information 414 that constitute the process data 415, together with the defect information 425. The defect output unit 313 may output (e.g., display or transmit) the defect information 425 and at least one of the measurement information 411, the measurement information 412, the build information 413, and the feature quantity information 414 that constitute the process data 415, in an output format in which the defect information 425 is associated with at least one of the constituting measurement information 411, the measurement information 412, the build information 413, and the feature quantity information 414. In the example illustrated in FIG. 12, the defect information 425 and the process data 415 are associated with each other through the position information 416 (426). The defect information 425 and the process data 415, however, may be associated in a different method from a method using the position information 416 (426). In a case where the defect information 425 is displayed, FIG. 12 illustrates an example of a display format in which the process data 415 are displayed together with the defect information 425. On the other hand, in a case where the defect information 425 is transmitted as data, FIG. 12 illustrates an example of a data structure in which the process data 415 are transmitted with the defect information 425.

In this instance, the defect output unit 313 may output the defect information 425 and the process data 415, in an output format in which the defect information 425 about the defect formed in one part of the build object BO (referred to as "defect information 425a" for convenience of description) is associated with the process data 415 about the building of the one part of the build object BO (referred to as "process data 415a" for convenience of description). In the example illustrated in FIG. 12, the defect information 425a and the process data 415a are associated with each other through the position information 416 and the position information 426 indicating the position of the one part of the build object BO (referred to as "position information 416a and position information 426a" for convenience of description). In this instance, the user or the control unit 16 may more easily ascertain a cause of the formation of the defect in the one part of the build object BO, with reference to the process data 415 about the building of one part of the build object BO.

Here, in a case where the defect is the void space SP described above, the energy amount transferred from the build light EL to the material layer ML is insufficient or excessive for the target amount, which is one of the causes of the generation of the defect, as described above. Therefore, if the energy amount transferred from the build light EL to the material layer ML is outputted together with the defect information 425, the user or the control unit 16 may more properly ascertain the cause of the formation of the defect indicated by the defect information 425.

Therefore, the defect prediction unit 312 may calculate an estimated value related to the energy amount transferred from the build light EL to the material layer ML, on the basis of the process data 415. Specifically, the defect prediction unit 312 may calculate the estimated value related to the energy amount transferred from the build light EL to the material layer ML in the building of one part of the build object BO, on the basis of the process data 415 about the building of the one part of the build object BO. For example, the defect prediction unit 312 may calculate the estimated value related to the energy amount, on the basis of at least one of the measurement information 411 and the measurement information 412 of the process data 415.

As an example, the defect prediction unit 312 may calculate an estimated value of an energy density (i.e., an energy amount per unit volume) that is an example of the estimated value related to the energy amount, by using a width of the melt pool MP that is an example of the feature quantity calculated from the measurement information 411, and a thickness of the solidified layer STL that is an example of the feature quantity calculated from the measurement information 412. Specifically, in a case where the width of the melt pool MP is Δy, the thickness of the solidified layer STL is Δz, the output of the light source that generates the build light EL is P, the moving speed of the irradiation position of the build light EL on the material layer ML (i.e., the scanning speed) is v, and the estimated value of the energy density is ED, the defect prediction unit 312 may calculate the estimated value of the energy density, by using an equation of ED=P/(v×Δy×Δz). Each of the output (P) of the light source and thescanning speed (v) of the build light EL may use a value of the build information 413.

As another example, the defect prediction unit 312 may calculate an estimated value of a power density (i.e., an energy amount per unit area) that is an example of the estimated value related to the energy amount, by using the width of the melt pool MP that is an example of the feature quantity calculated from the measurement information 411. Specifically, the defect prediction unit 312 calculates the diameter of the spot formed by the build light EL on the material layer ML, on the basis of the width of the melt pool MP. Thereafter, the defect prediction unit 312 may calculate the power density on the basis of the calculated spot diameter. Specifically, in a case where the spot diameter is d, the output of the light source that generates the build light EL is P, the moving velocity of the irradiation position of the build light EL on the material layer ML (i.e., the scanning speed) is v, and the estimated value of the power density is PD, the estimated value of the power density may be calculated by using an equation of PD=P/(d×v). Each of the output (P) of the light source and the scanning speed (v) of the build light EL may use the value of the build information 413. The spot diameter (d) of the build light EL may be used the value of the build information 413.

As another example, the defect prediction unit 312 may calculate an estimated value of an index value of a penetration geometry that is an example of the estimated value related to the energy amount, by using the size of the melt pool MP that is an example of the feature quantity calculated from the measurement information 411. An example of the penetration geometry is illustrated in FIG. 13. As illustrated in FIG. 13, the penetration geometry is defined by depths dp and do of the build material melted in the melt pool MP and a thickness tL of the material layer ML. The depth dp corresponds to a distance from the surface of the material layer ML to a lowest bottom of the build material melt in the melt pool MP (i.e., a depth of the melt pool MP). The depth do corresponds to a distance from the surface of the material layer ML to a position at which two adjacent melt pools MP (specifically, two melt pools MP formed in two adjacent scanning lines) intersect. It is possible to calculate (estimate) the depths dp and do from the size of the melt pool MP. In this case, as the penetration geometry, a first penetration geometry calculated from an equation of dp/tL, and a second penetration geometry calculated from an equation of do/tL may be used. In this case, in a case where at least one of the first and second penetration geometries is less than 1, it is estimated that the melting of the build material is insufficient (i.e., the energy amount is insufficient). In a case where at least one of the first and second penetration geometries is greater than or equal to 1 and is less than an allowable upper limit, it is estimated that melting of the build material is appropriate (i.e., the energy amount is appropriate). In a case where at least one of the first and second penetration geometries is greater than or equal to the acceptable upper limit, it is estimated that the melting of the build material is excessive (i.e., the energy amount is excessive).

As described above, in a case where at least a part of the process data 415 are associated with the build position (i.e., the position information 416), the defect prediction unit 312 may associate energy information 435 about the estimated value related to the energy amount calculated by the defect prediction unit 312, with the build position. The defect prediction unit 312 may generate the energy information 435 associated with the build position. For example, the defect prediction unit 312 may associate the energy information 435 including information about the estimated value related to the energy amount transferred from the build light EL to the material layer ML in one part of the build object BO, with the build position at which the build apparatus 1 performs the build processing (i.e., the one part of the build object BO). The defect prediction unit 312 may associate the energy information 435 including information about the estimated value related to the energy amount transferred from the build light EL to the material layer ML in another part of the build object BO, with the build position at which the build apparatus 1 performs the build processing (i.e., the another part of the build object BO).

Thereafter, the defect output unit 313 may output (e.g., display or transmit) the energy information 435 about the estimated value related to the energy amount calculated by the defect prediction unit 312, together with the defect information 425, as illustrated in FIG. 14. That is, the defect output unit 313 may output (e.g., display or transmit) the defect information 425 and the energy information 435, in an output format in which the defect information 425 is associated with the energy information 435. In the example illustrated in FIG. 14, the defect information 425 and the energy information 435 are associated with each other through the position information 416 (426). In this instance, the energy information 435 including information about the estimated value related to the energy amount transferred from the build light EL to the material layer ML in one part of the build object BO, may be associated with the defect information 425 including information about the defect formed in the one part of the build object BO. The energy information 435 including information about the estimated value related to the energy amount transferred from the build light EL to the material layer ML in another part of the build object BO, may be associated with the defect information 425 including information about the defect formed in the another part of the build obj ect BO. The defect information 425 and the energy information 435, however, may be associated in a different method from a method of using the position information 416 (426). In a case where the defect information 425 is displayed, FIG. 14 illustrates an example of a display format in which the energy information 435 is displayed together with the defect information 425. On the other hand, in a case where the defect information 425 is transmitted as data, FIG. 14 illustrates an example of a data structure in which the energy information 435 is outputted together with the defect information 425. Furthermore, in FIG. 14, the process data 415 are outputted together with the defect information 425 and the energy information 435, but the process data 415 may not necessarily be outputted.

As a result, the user or the control unit 16 may more properly ascertain the cause of the formation of the defect indicated by the defect information 425. Specifically, the user or the control unit 16 may more properly ascertain whether the defect indicated by the defect information 425 is formed because the energy amount transferred from the build light EL to the material layer ML is insufficient for the target amount, or because the energy amount transferred from the build light EL to the material layer ML is excessive for the target amount. As a consequence, the user or the control unit 16 may more properly correct the build condition described above (especially, the irradiation condition regarding the build light EL). For example, in a case where the energy amount transferred from the build light EL to the material layer ML is insufficient for the target amount, the user or the control unit 16 may correct the build condition to increase the energy amount. As an example, the user or the control unit 16 may correct the build condition to increase the energy amount transferred from the build light EL to the material layer ML, by increasing the output of the light source that generates the build light EL, by reducing the thickness of a support member located below the material layer ML to reduce a path through which the energy amount transferred from the build light EL to the material layer ML diffuses, and/or by reducing the moving speed (i.e., the scanning speed) of the irradiation position of the build light EL on the material layer ML. On the other hand, for example, in a case where the energy amount transferred from the build light EL to the material layer ML is excessive for the target amount, the user or the control unit 16 may correct the build condition to reduce the energy amount. As an example, the user or the control unit 16 may correct the build condition to reduce the energy amount transferred from the build light EL to the material layer ML, by reducing the output of the light source that generates the build light EL, by increasing the thickness of the support member located below the material layer ML to increase the path through which the energy amount transferred from the build light EL to the material layer ML diffuses, and/or by increasing the moving speed (i.e., the scanning speed) of the irradiation position of the build light L on the material layer ML.

The defect output unit 313 may output the defect information 425 and the energy information 435 in an output format in which the defect information 425 about the defect formed in one part of the build object BO (referred to as "defect information 425a" for convenience of description) is associated with the energy information 435 about the energy amount transferred from the build light EL to the material layer ML in the building of the one part of the build object BO (referred to as "energy information 435a" for convenience of description). In the example illustrated in FIG. 14, the defect information 425a and the energy information 435a are associated with each other through the position information 416 and the position information 426 indicating the position of the one part of the build object BO (respectively referred to as "position information 416a and position information 426a" for convenience of description). In this case, the user or the control unit 16 may more properly grasp the cause of the defect formed in a certain position.

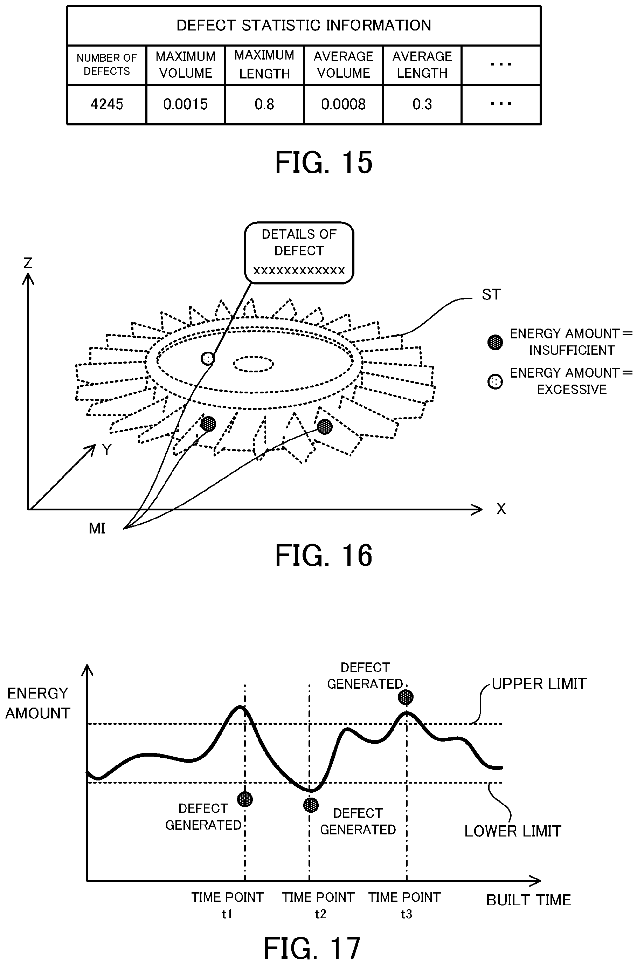

The defect output unit 313 may output (e.g., display or transmit) defect statistic information 445 indicating a statistic value of the defect indicated by the defect information 425, in addition to or instead of outputting the defect information 425 as it is. An example of the defect statistic information 445 is illustrated in FIG. 15. As illustrated in FIG. 15, the defect statistic information 445 may include at least one of a total number of defects, a maximum volume of the defect (i.e., a largest volume of the defect), a maximum length of the defect (i.e., a longest length of the defect), an average volume of defects, and an average length of defects.

In the example illustrated in FIG. 11 to FIG. 13, the defect output unit 313 outputs (specifically, displays) the defect information 425 in a table format. In a case where the defect information 425 is displayed to the user, however, the defect output unit 313 may display the defect information 425 in a display format that makes the user to intuitively understand information about the defect indicated by the defect information 425.

For example, as illustrated in FIG. 16, the defect output unit 313 may display the defect information 425 together with a three-dimensional model of the build object BO (the three-dimensional structure ST in the example illustrated in FIG. 16). In this instance, the defect output unit 313 may superimpose a mark MI indicating that the defect is formed, in a part in which the defect is formed, of the three-dimensional model of the build object BO. In this case, in a case where the user selects the mark MI by using the input apparatus 34, detailed information about the defect indicated by the mark MI may be displayed (e.g., displayed in a popup). The detailed information about the defect may include information about at least one of the properties and density of the defect. For example, the detailed information about the defect may include a numerical value of at least one of the properties and density of the defect. Furthermore, the defect output unit 313 may change a display format of the mark MI indicating that the defect is formed, in accordance with the cause of the formation of the defect. For example, the defect output unit 313 may change the display format of the mark MI indicating the defect formed due to an excessive energy amount, and the display format of the mark MI indicating the defect formed due to an insufficient energy amount. For example, the display format may be at least one of a color of the mark MI, brightness of the mark MI, a size of the mark MI, and a shape of the mark MI.

The defect output unit 313 may change the display format of the mark MI on the basis of at least a part of the defect information 425 and the process data 415. For example, the defect output unit 313 may change the display format of the mark MI indicating the defect that is predicted to be generated at one position, on the basis of the temperature of the melt pool MP formed at the one position calculated from the measurement information 411. For example, the defect output unit 313 may change the display format of the mark MI that is predicted to be generated at one position, on the basis of a difference between the temperature of the melt pool MP formed at the one position calculated from the measurement information 411 and a reference temperature of the melt pool MP. For example, the defect output unit 313 may change the display format of the mark MI indicating the defect that is predicted to be generated at one position, on the basis of a difference between the thickness of the solidified layer STL formed at the one position calculated from the measurement information 412 and a design thickness of the solidified layer STL. In a case where the user selects the mark MI by using the input apparatus 34, detailed information about the process data 415 indicated by the mark MI may be displayed (e.g., displayed in a popup). The detailed information about the process data 415 may include a numerical value of at least one of the measurement information 411, the measurement information 412, the build information 413, and the feature quantity information 414 of the process data 415.

The defect output unit 313 may superimpose a mark indicating that the defect is not formed, in a part in which the defect is not formed, of the three-dimensional model of the build object BO. In this instance, the defect output unit 313 may make the display format of the mark MI indicating that the defect is formed, different from a display format of the mark indicating that the defect is not formed. The defect output unit 313 may change the display format of the mark indicating that the defect is not formed, on the basis of at least a part of the defect information 425 and the process data 415.

The defect output unit 313 may display the energy information 435 in addition to or instead of the defect information 425. For example, the defect output unit 313 may display, in one part of the build object BO, a display object indicating the estimated value related to the energy amount transferred to the one part of the build object BO, as the energy information 435. Even in this case, the defect output unit 313 may change a display format of the display object corresponding to the energy information 435, on the basis of at least a part of the defect information 425 and the process data 415. For example, the defect output unit 313 may change the display format of the display object corresponding to the energy information 435, on the basis of the estimated value related to the energy amount. The defect output unit 313 may change the display format of the mark MI indicating the defect that is predicted to be generated in one part of the build object BO, on the basis of the energy information 435 about the one part. In a case where the user selects the mark MI by using the input apparatus 34, detailed information about the energy information 435 indicated by the mark MI may be displayed (e.g., displayed in a popup). The detailed information about the energy information 435 may include a numerical value of at least one of the energy density, the power density, and the penetration geometry. In this case, the user may intuitively understand the energy amount transferred to each part of the build object BO.

The defect output unit 313 may display the process data 415 in addition to or instead of the defect information 425. For example, the defect output unit 313 may display, in one part of the build object BO, a display object indicating the process data 415 about the building of the one part. Even in this case, the defect output unit 313 may change a display format of the display object indicating the process data 415, on the basis of at least a part of the defect information 425 and the process data 415. In this instance, the user may intuitively understand the process data 415 about the building of each part of the build object BO.

The defect output unit 313 may display density information about the density of the build object BO in addition to or instead of the defect information 425. For example, the defect output unit 313 may display, in one part of the build object BO, a display object indicating the density of the one part, as the density information. Even in this instance, the defect output unit 313 may change a display format of the display object indicating the density, on the basis of at least a part of the defect information 425 and the process data 415. For example, the defect output unit 313 may change the display format of the display object corresponding to the energy information 435, on the basis of the density. The defect output unit 313 may change the display format of the mark MI indicating the defect that is predicted to be generated in one part of the build object BO, on the basis of the density information of the one part. The one part of the build object BO in which the defect is predicted to be generated, may be a part in which the density (i.e., the density estimated as described above) is lower than a threshold. That is, the mark MI may be a display object indicating the part in which the density is lower than the threshold, as the defect. In a case where the user selects the mark MI by using the input apparatus 34, detailed information about the density information indicated by the mark MI (e.g., a numerical value of the density) may be displayed (e.g., displayed in a popup). In this case, the user may intuitively understand the density of each part of the build object BO.

The defect output unit 313 may simultaneously display at least two of the defect information 425, the process data 415, the energy information 435, and the density information. For example, the defect output unit 313 may simultaneously display the energy information 435 and the defect information 425. In this case, the defect output unit 313 may change a display format of the energy information 435 by a first change method on the basis of the estimated value related to the energy amount, and may change a display format of the defect information 425 by a second change method on the basis of the properties of the defect. The first change method may be, for example, a method of changing a first property (e.g., a size) of the display object such as the mark MI, and the second change method may be, for example, a method of changing a second property (e.g., a color) of the display object such as the mark MI. Alternatively, for example, the defect output unit 313 may simultaneously display the density information and the process data 415. In this case, the defect output unit 313 may change a display format of the density information by the first change method on the basis of the density, and may change a display format of the process data 415 by the second change method on the basis of the process data 415. Alternatively, for example, the defect output unit 313 may simultaneously display the density information and the defect information 425. In this case, the defect output unit 313 may change the display format of the density information by the first change method on the basis of the density, and may change the display format of the defect information 425 by the second change method on the basis of the properties of the defect.

For example, as illustrated in FIG. 17, the defect output unit 313 may display the defect information 425 in association with a build time point. Specifically, as described above, the build apparatus 1 builds each part of the build object BO (typically, the three-dimensional structure ST) in order. For this reason, the position of each part of the build object BO (i.e., the build position) is convertible to the build time point. Therefore, the defect output unit 313 may display the defect information 425 in association with the build time point so as to indicate whether or not the defect is formed at which build time point in the sequential build period in which the three-dimensional structure ST is formed. That is, the defect output unit 313 may display the defect information 425 in association with the build time point so as to indicate at which build time point in the sequential build period in which the three-dimensional structure ST is formed, the building that causes the formation of the defect is performed. FIG. 17 illustrates a display example of the defect information 425 indicating that the defect is formed at build time points 11, t2 and t3 in the sequential build period. In addition, the defect output unit 313 may display the energy information 435 in association with a build time. FIG. 17 illustrates an example in which the energy information 435 is displayed by using a graph illustrating a time change in the energy amount. In this case, the user or the control unit 16 may more properly ascertain whether the defect is formed because the energy amount is insufficient for the target amount, or because the energy amount is excessive for the target amount. The build apparatus 1 sequentially laminates the solidified layers STL and builds the build object BO. Therefore, it can be said the position in a lamination direction (e.g., the Z axis direction) of each of the solidified layers STL of the build object BO is convertible to the build time. For example, the defect output unit 313 may display the defect information 425 in association with each solidified layer STL (e.g., each of a first to N-th solidified layers STL).

FIG. 17 illustrates an example in which the defect output unit 313 displays the energy information 435 by using a vertical axis, in a two-dimensional plane defined by two axes. The defect output unit 313, however, may display at least one of the defect information 425, the process data 415, and the density information, by using the vertical axis. Alternatively, the defect output unit 313 may display at least two of the energy information 435, the defect information 425, the process data 415, and the density information, in a three-dimensional space defined by three axes.

### (3) Technical Effect

As described above, in the present example embodiment, the information processing apparatus 3 generates the defect information 425 about the defect formed in the build object BO, by using at least one of the measurement information 411 and the measurement information 412 acquired by the measurement apparatus 2 actually measuring the measurement target object in the building of the build object BO. That is, the information processing apparatus 3 predicts the defect formed in the build object BO, by using at least one of the measurement information 411 and the measurement information 412. Therefore, in comparison with an information processing apparatus in a first comparative example that predicts the defect formed in the build object BO without using the measurement information 411 and the measurement information 412 acquired by actually measuring the measurement target object, the information processing apparatus 3 is capable of predicting the defect formed in the build object BO with higher accuracy.

In addition, the information processing apparatus 3 predicts the defect formed in the build object BO, by using the prediction model PM generated in advance by machine learning. Therefore, in comparison with an information processing apparatus in a second comparative example that predicts the defect formed in the build object BO without using the prediction model PM, the information processing apparatus 3 is capable of predicting the defect formed in the build object BO with higher accuracy.

### (4) Generation of Prediction Model PM

Next, the generation of the prediction model PM will be described.

### (4-1) Configuration of Model Generation Apparatus 5

First, with reference to FIG. 18, a configuration of a model generation apparatus 5 that generates the prediction model PM will be described. FIG. 18 is a block diagram illustrating the configuration of the model generation apparatus 5.

As illustrated in FIG. 18, the model generation apparatus 5 includes an arithmetic apparatus 51, a storage apparatus 52, and a communication apparatus 53. The model generation apparatus 5 may also include an input apparatus 54 and an output apparatus 55. The model generation apparatus 5, however, may not include at least one of the input apparatus 54 and the output apparatus 55. The arithmetic apparatus 51, the storage apparatus 52, the communication apparatus 53, the input apparatus 54, and the output apparatus 55 may be connected through a data bus 56.

The arithmetic apparatus 51 includes, for example, at least one of a CPU, a GPU and a FPGA. The arithmetic apparatus 51 reads a computer program. The arithmetic apparatus 51 reads a computer program. For example, the arithmetic apparatus 51 may read a computer program stored in the storage apparatus 52. For example, the arithmetic apparatus 51 may read a computer program stored by a computer-readable and non-transitory recording medium, by using a not-illustrated recording medium reading apparatus provided in the model generation apparatus 5. The arithmetic apparatus 51 may acquire (i.e., download or read) a computer program from a not-illustrated apparatus disposed outside the model generation apparatus 5, through the communication apparatus 53 (or another communication apparatus). The arithmetic apparatus 51 executes the read computer program. Consequently, a logical functional block for performing a processing to be performed by the model generation apparatus 5 (e.g., a model generation processing for generating the prediction model PM) is realized or implemented in the arithmetic apparatus 51. That is, the arithmetic apparatus 51 may serve as a controller for realizing the logical functional block for performing the processing to be performed by the model generation apparatus 5.

FIG. 18 illustrates an example of the logical functional block realized or implemented in the arithmetic apparatus 51 to perform the model generation processing. As illustrated in FIG. 18, an information acquisition unit 511 and a model generation unit 512 are realized or implemented in the arithmetic apparatus 51. A processing performed by each of the information acquisition unit 511 and the model generation unit 512 will be described in detail with reference to FIG. 19 or the like, and an outline thereof will be described below. The information acquisition unit 511 acquires a plurality (typically, a large amount) of learning data 610 required for machine learning for generating the prediction model PM. The plurality of learning data 610 acquired by the information acquisition unit 511 are stored in the storage apparatus 52 as a learning data set 600. The model generation unit 512 performs the machine learning for generating the prediction model PM, by using at least a part of the learning data set 600. The model generation processing can also be referred to as a model generation operation.

The storage apparatus 52 is configured to store desired data. For example, the storage apparatus 52 may temporarily store a computer program to be executed by the arithmetic apparatus 51. The storage apparatus 52 may temporarily store data that are temporarily used by the arithmetic apparatus 51 when the arithmetic apparatus 51 executes the computer program. The storage apparatus 52 may store data that are stored by the model generation apparatus 5 for a long time. The storage apparatus 52 may include at least one of a RAM (Random Access Memory), a ROM (Read Only Memory), a hard disk apparatus, a magneto-optical disk apparatus, a SSD (Solid State Drive), and a disk array apparatus. That is, the storage apparatus 52 may include a non-transitory recording medium.

The communication apparatus 53 is configured to communicate with an external apparatus of the model generation apparatus 5 through a not-illustrated communication network.

The input apparatus 54 is an apparatus that receives an input of information to the model generation apparatus 5 from the outside of the model generation apparatus 5. For example, the input apparatus 54 may include an operating apparatus (e.g., at least one of a keyboard, a mouse, and a touch panel) that is operable by a user of the model generation apparatus 5. For example, the input apparatus 54 may include a recording medium reading apparatus that is configured to read information recorded as data on a recording medium that is externally attachable to the model generation apparatus 5.

Note that information may be inputted as data to the model generation apparatus 5 through the communication apparatus 53, from an external apparatus of the model generation apparatus 5. In this instance, the communication apparatus 53 may serve as an input apparatus that receives an input of the information to the model generation apparatus 5 from the outside of the model generation apparatus 5.

The output apparatus 55 is an apparatus that outputs information to the outside of the model generation apparatus 5. For example, the output apparatus 55 may output information as an image. That is, the output apparatus 55 may include a display apparatus (a so-called display) that is configured to display an image. For example, the output apparatus 55 may output information as audio. That is, the output apparatus 55 may include an audio apparatus (a so-called speaker) that is configured to output audio. For example, the output apparatus 55 may output information onto a paper surface. That is, the output apparatus 55 may include a print apparatus (a so-called printer) that is configured to print desired information on a paper surface. For example, the output apparatus 55 may output information as data to a recording medium that is externally attachable to the model generation apparatus 5.

Note that information may be outputted as data to an external apparatus of the model generation apparatus 5 through the communication apparatus 53 from the model generation apparatus 5. In this instance, the communication apparatus 53 may serve as an output apparatus that outputs the information to the outside of the model generation apparatus 5.

### (4-2) Flow of Model Generation Processing Performed By Model Generation Apparatus 5

Next, with reference to FIG. 19, the model generation processing performed by the model generation apparatus 5 will be described. FIG. 19 is a flowchart illustrating a flow of the model generation processing performed by the model generation apparatus 5.

The model generation apparatus 5 typically performs the model generation processing before the information processing apparatus 3 starts the defect prediction processing. This is because the information processing apparatus 3 performs the defect prediction processing by using the prediction model PM generated by the model generation apparatus 5. The model generation apparatus 5, however, may perform the model generation processing at a desired timing after the information processing apparatus 3 starts the defect prediction processing using the prediction model PM. In this instance, the model generation processing may be regarded as equivalent to a processing of updating (in other words, improving or relearning) the prediction model PM already implemented in the information processing apparatus 3.

As illustrated in FIG. 19, the information acquisition unit 511 acquires the plurality of learning data 610 required for the machine learning for generating the prediction model PM (step S21 to step S24).

Here, in the present example embodiment, data in which the process data 415 acquired and/or calculated when the build object BO is actually built are associated with an actual measurement result of the defect formed in the build object BO that is built (i.e., the properties of the build object BO), are used as the learning data 610. For this reason, in order to make the information acquisition unit 511 acquire the learning data 610 (i.e., perform the model generation processing), the build object BO is actually built. Specifically, the build apparatus 1 described above may build the build object BO. Alternatively, in addition to or instead of the build apparatus 1, another build apparatus that is different from the build apparatus 1 may build the build object BO. In the following description, the build object BO that is built to perform the model generation processing, is referred to as a "build object BO*", and is thus distinguished from the build object BO that is a target of the defect prediction processing. The build object BO that is a target of the defect prediction processing, however, may be also used as the build object BO that is built to perform the model generation processing.

As described above, the process data 415 may not include at least one of the measurement information 411, the measurement information 412, the build information 413, and the feature quantity information 414. For this reason, the process data 415 included in the learning data 610 also may not include at least one of the measurement information 411, the measurement information 412, the build information 413, and the feature quantity information 414. That is, the learning data may not include at least one of the measurement information 411, the measurement information 412, the build information 413, and the feature quantity information 414.

In the build period in which the build object BO* is built to perform the model generation processing, as in a case where the build object BO that is a target of the defect prediction processing is built, the measurement apparatus 2 measures the measurement target object. As a result, at least one of the measurement information 411 and the measurement information 412 is generated. The information acquisition unit 511 acquires, as a part of the learning data 610, at least one of the measurement information 411 and the measurement information 412 that are generated in the build period in which the build object BO* is built (step S21). That is, the information acquisition unit 511 acquires at least one of the measurement information 411 and the measurement information 412, as in the information acquisition unit 311 described above. Therefore, the step S21 in FIG. 19 may be the same as the step S11 in FIG. 9 described above. In the following description, the measurement information 411 and the measurement information 412 that are acquired to perform the model generation processing are respectively referred to as "measurement information 611 and measurement information 612", and are thus distinguished from the measurement information 411 and the measurement information 412 that are acquired to perform the defect prediction processing. The information acquisition unit 511, however, may not acquire at least one of the measurement information 611 and the measurement information 612, as a part of the learning data 610.

In addition to or instead of the measurement apparatus 2, another measurement apparatus that is different from the measurement apparatus 2 may measure the measurement target object. That is, another measurement apparatus that is different from the measurement apparatus 2 may generate at least one of the measurement information 611 and the measurement information 612.

Furthermore, the information acquisition unit 511 acquires the build information 413 about the building of the build object BO*, as a part of the learning data 610 (step S22). That is, the information acquisition unit 511 acquires the build information 413, as in the information acquisition unit 311. Therefore, the step S22 in FIG. 19 may be the same as the step S12 in FIG. 9 described above. In the following description, the build information 413 that is acquired to perform the model generation processing is referred to as "build information 613", and is thus distinguished from the build information 413 that is acquired to perform the defect prediction processing. The information acquisition unit 511, however, may not acquire the build information 613, as a part of the learning data 610.

Furthermore, the information acquisition unit 511 calculates the feature quantity of the measurement target object, on the basis of at least one of the measurement information 611 and the measurement information 612 acquired in the step S21, as in the defect prediction unit 312 that calculates the feature quantity of the measurement target on the basis of at least one of the measurement information 411 and the measurement information 412 (step S23). That is, the information acquisition unit 511 generates the feature quantity information 414, as in the defect prediction unit 312. Therefore, the step S23 in FIG. 19 may be the same as the step S13 in FIG. 9 described above. The generated feature quantity information 414 is used as a part of the learning data 610. In the following description, the feature quantity information 414 that is generated to perform the model generation processing is referred to as "feature quantity information 614", and is thus distinguished from the feature quantity information 414 that is generated to perform the defect prediction processing. The information acquisition unit 511, however may not generate the feature quantity information 614 as a part of the learning data 610.

As described in the explanation of the defect prediction processing, the feature quantity calculated on the basis of the temperature image data D_T may be calculated by the temperature measurement apparatus 21, or the feature quantity calculated on the basis of the shape image data D_3D may be calculated by the shape measurement apparatus 22. In this case, at least one of the measurement information 611 and the measurement information 612 may include the feature quantity information 614

Each of the measurement information 411, the measurement information 412, the build information 413, and the feature quantity information 414 acquired in the defect prediction processing may be associated with the position information 416 indicating the build position, as described above. Each of the measurement information 611, the measurement information 612, the build information 613, and the feature quantity information 614 acquired in the model generation processing may also be associated with the position information 416 indicating the build position at which the build processing is performed to build the build object BO*. In the following description, the position information 416 that is used to perform the model generation processing is referred to as "position information 616", and is thus distinguished from the position information 416 that is used to perform the defect prediction processing.

Furthermore, the information acquisition unit 511 acquires an actual measurement result of the defect formed in the build object BO* (i.e., properties of the build object BO*) (step S24). For example, after the build apparatus 1 finishes building the build object BO*, the build object BO* may be transferred/carried from the build apparatus 1 to a defect measurement apparatus (e.g., an X-ray CT apparatus, etc.) that is configured to measure the defect. Then, the defect measurement apparatus may actually measure the defect formed in the build object BO*. Thereafter, the information acquisition unit 511 may acquire a measurement result by the defect measurement apparatus, as an actual measurement result of the defect. Defect actual measurement information 617 indicating the acquired actual measurement result of the defect is used as a part of the learning data 610. The defect actual measurement information 617 is used as a label (i.e., a correct answer label or teacher data) of the machine learning, as described later.

The defect actual measurement information 617 may include information similar to the defect information 425 described above. For example, the defect actual measurement information 617 may include information about the presence or absence of the defect in each part of the build object BO*. The defect actual measurement information 617 may include information about the density of the build object BO*. The defect actual measurement information 617 may include information about the properties (e.g., at least one of a size, a position, and a shape) of the defect formed in the build object BO*.

Since it may be considered that the density itself of the build object BO is not the defect of the build object BO as described above, the information acquisition unit 511 may acquire, as density actual measurement information, a measurement result by a density measurement apparatus that actually measures the density of the build object BO*, apart from the defect actual measurement information 617.

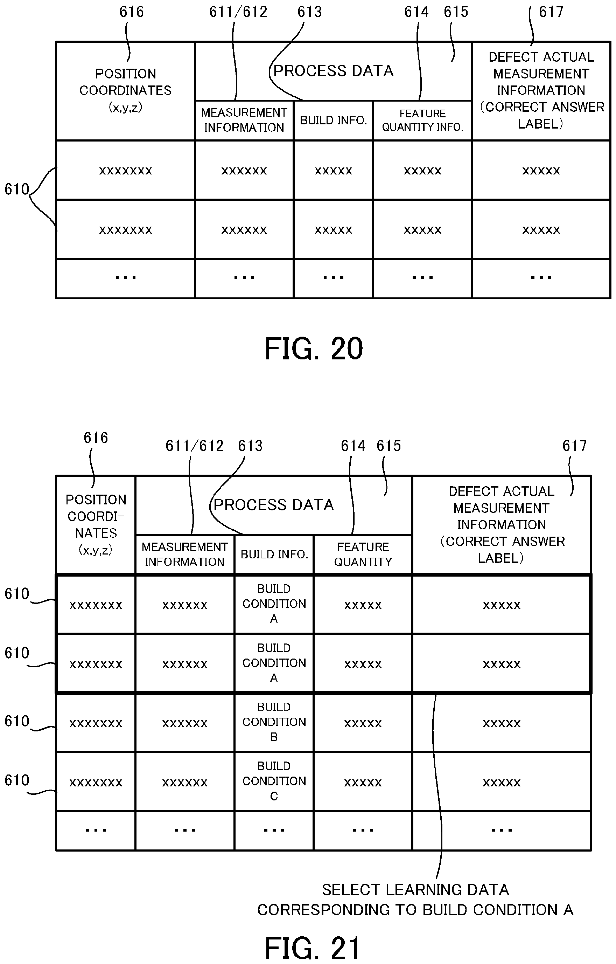

FIG. 20 illustrates an example of a data structure of the learning data set 600 that stores the learning data 610 acquired in the above manner. As illustrated in FIG. 20, the learning data set 600 includes a plurality of learning data 610. Each learning data 610 include: the position information 616 indicating a certain build position; process data 615 including the measurement information 611, the measurement information 612, the build information 613, and the feature quantity information 614 that are associated with the position information 616; and the defect actual measurement information 617 indicating the actual measurement result of the defect at the build position indicated by the position information 616. For this reason, typically, in a case where one build object BO* is built, the information acquisition unit 511 may acquire a data set including a plurality of learning data 610 that respectively correspond to a plurality of different build positions. In addition, in a case where a plurality of build objects BO* are built, the information acquisition unit 511 may acquire a plurality of data sets respectively corresponding to a plurality of different build objects BO*.

Referring again to FIG. 19, the information acquisition unit 511 continues to acquire the learning data 610, until a required number of learning data 610 are acquired (step S25). When the required number of the learning data 610 are acquired (the step S25: Yes), the model generation unit 512 performs the machine learning for generating the prediction model PM, by using at least a part of the learning data set 600 (step S26). That is, the model generation unit 512 performs the machine learning for generating the prediction model PM, by using at least a part of the plurality of learning data 610 acquired in the step S21 to the step S24 (step S26).

Specifically, the model generation unit 512 extracts N pieces of learning data 610 actually used for the machine learning, from the learning data set 600 (where N is an integer of 1 or more). Thereafter, the model generation unit 512 generates the defect information 425 about the defect formed in the build object BO*, by using the prediction model PM that is a target of the machine learning (e.g., the prediction model PM before learning, or the prediction model PM that is leaned, but is a target of relearning) and the process data 615 included in each learning data 610. That is, the model generation unit 512 predicts the defect formed in the build object BO*, by using the prediction model PM and the process data 615. Note that a processing of generating the defect information 425 by using the prediction model PM and the process data 615, may be the same as a processing of generating the defect information 425 by using the prediction model PM and the process data 415 (i.e., the step S14 in FIG. 9 described above). Furthermore, in the following description, the defect information 425 generated in the model generation processing is referred to as "defect information 625", and is thus distinguished from the defect information 425 generated in the defect prediction processing. The model generation unit 512 repeats, N times, the processing of generating the defect information 625, by using N pieces of process data 615 respectively included in the N pieces of learning data 610. As a result, N pieces of defect information 625 are generated.

Thereafter, the model generation unit 512 updates the prediction model PM by using a loss function related to an error (i.e., a difference) between the N pieces of defect information 625 and N pieces of defect actual measurement information 617 respectively included in the N pieces of learning data 610. An example of the loss function is, for example, a loss function using at least one of Mean Absolute Error (MAE), Mean Square Error (MSE), Root Mean Square Error (RMSE), and a coefficient of determination. In this case, the model generation unit 512 may update the prediction model PM such that a loss calculated by using the loss function is reduced (preferably, minimized). Consequently, generated is the prediction model PM with improved prediction accuracy of the defect in comparison with the prediction model PM before learning.

In a case where the prediction model PM generates the defect information 425 including information about the presence or absence of the defect, it can be said that the prediction model PM performs binary classification. In this case, the model generation unit 512 may update the prediction model PM by using an accuracy index value in a confusion matrix, in addition to or instead of the loss function described above. An example of the accuracy index values in the confusion matrix is at least one of Recall, Precision, and F-measure.

The model generation unit 512 may generate the defect information 625 by using all of the process data 615 included in the learning data 610. Alternatively, the model generation unit 512 may generate the defect information 625 by using a part of the process data 615 included in the learning data 610. That is, the model generation unit 512 may not use another part of the process data 615 included in the learning data 610, in order to generate the defect information 625. As an example, the model generation unit 512 may generate the defect information 625, by using one data part of the model data 615 that is assumed to be necessary to efficiently generate the prediction model PM, but not using another data part of the process data 615 that is assumed to be not always necessary to efficiently generate the prediction model PM. As an example, in a case where the process data 615 including all of the measurement information 611, the measurement information 612, the build information 613, and the feature quantity information 614 are included in the learning data 610, the model generation unit 512 may generate the defect information 625 by using at least one of the measurement information 611, the measurement information 612, the build information 613, and the feature quantity information 614, but not using at least one of the measurement information 611, the measurement information 612, the build information 613, and the feature quantity information 614. As another example, the model generation unit 512 may generate the defect information 625 by using a part of the measurement information 611, a part of the measurement information 612, a part of the build information 613, and/or a part of the feature quantity information 614, but not using another part of the measurement information 611, another part of the measurement information 612, another part of the build information 613, and/or another part of the feature quantity information 614.

The model generation unit 512 may generate a plurality of prediction models PM corresponding to different combinations of information elements, by changing the combination of information elements used to generate the prediction model PM. For example, the model generation unit 512 may generate a first prediction model PM by using a first combination of information elements included in the process data 615, and may generate a second prediction model PM that is different from the first prediction model PM, by using a second combination of information elements that is included in the process data 615 and that is different from the first combination. As an example, the model generation unit 512 may generate the first prediction model PM by using all of the measurement information 611, the measurement information 612, the build information 613, and the feature quantity information 614, and may generate the second prediction model PM by using the measurement information 611, the measurement information 612, and the feature quantity information 614, but not using the build information 613. As another example, the model generation unit 512 may generate the first prediction model PM by using all of the measurement information 611, all of the measurement information 612, all of the build information 613, and/or all of the feature quantity information 614, and may generate the second prediction model PM, by using a part of the measurement information 611, a part of the measurement information 612, a part of the build information 613, and/or a part of the feature quantity information 614, but not using another part of the measurement information 611, another part of the measurement information 612, another part of the build information 613, and/or another part of the feature quantity information 614.

The model generation unit 512 may verify the generated prediction model PM after generating the prediction model PM. For example, the model generation unit 512 may extract M pieces of learning data 610 that are actually used for verification, from the learning data set 600 (where M is an integer of 1 or more). At this time, the model generation unit 512 may extract the M pieces of learning data 610 by using a method of cross validation. Thereafter, the model generation unit 512 may generate M pieces of defect information 625 by using the generated prediction model PM and M pieces of process data 615 respectively included in the M pieces of learning data 610. Thereafter, the model generation unit 512 may evaluate the accuracy of the generated prediction model PM by using a loss function (or the accuracy index value in the confusion matrix descried above) related to an error between the M pieces of defect information 625 and M pieces of defect actual measurement information 617 respectively included in the M pieces of learning data 610. In a case where the accuracy of the prediction model PM is less than an allowable accuracy, the model generation unit 512 may perform again the machine learning for generating the prediction model PM described above.

### (5) Modified Example

### (5-1) Model Generated Processing in Modified Example

When extracting at least one piece of learning data 610 actually used for the machine learning from the learning data set 600, the model generation unit 512 may extract at least one piece of learning data 610 that satisfy a predetermined extraction criterion.

The extraction criterion may include a criterion for the measurement information 611. In this case, the model generation unit 512 may extract the learning data 610 including the measurement information 611 that satisfies the extraction criterion. The extraction criterion may include a criterion for the measurement information 612. In this case, the model generation unit 512 may extract the learning data 610 including the measurement information 612 that satisfies the extraction criterion. The extraction criterion may include a criterion for the build information 613. In this case, the model generation unit 512 may extract the learning data 610 including the build information 613 that satisfies the extraction criterion. The extraction criterion may include a criterion for the feature quantity information 614. In this case, the model generation unit 512 may extract the learning data 610 including the feature quantity information 614 that satisfies the extraction criterion. The extraction criterion may include a criterion for the position information 616. In this case, the model generation unit 512 may extract the learning data 610 including the position information 616 that satisfies the extraction criterion. The extraction criterion may include a criterion for the defect actual measurement information 617. In this case, the model generation unit 512 may extract the learning data 610 including the defect actual measurement information 617 that satisfies the extraction criterion.

As an example, the model generation unit 512 may extract at least one piece of learning data 610 that satisfy an extraction criterion for the build condition information included in the build information 613. As the extraction criterion for the build condition information, for example, a criterion that "the build condition is set to a predetermined condition" may be used. In this case, the learning data 610 about the build object BO* that is built by using a particular build condition, are extracted. Consequently, the model generation unit 512 may generate the prediction model PM that matches the build object BO to be built, by using the particular build condition. That is, the model generation unit 512 may generate the prediction model PM that is suitable to predict the defect formed in the build object BO to be built by using the particular build condition. Therefore, the defect prediction unit 312 is capable of predicting the defect formed in the build object BO with higher accuracy, by using the prediction model PM as described above, in a case where the build object BO is built by using the particular build condition.

For example, FIG. 21 illustrates an example in which a criterion that "the build condition is set to a build condition A" is used as the extraction criterion for the build condition information. In this instance, the model generation unit 512 may generate the prediction model PM that matches the build object BO to be built by using the build condition A. That is, the model generation unit 512 may generate the prediction model PM that is suitable to predict the defect formed in the build object BO to be built by using the build condition A. Therefore, the defect prediction unit 312 is capable of predicting the defect formed in the build object BO with higher accuracy, by using the prediction model PM as described above, in a case where the build object BO is built by using the build condition A.

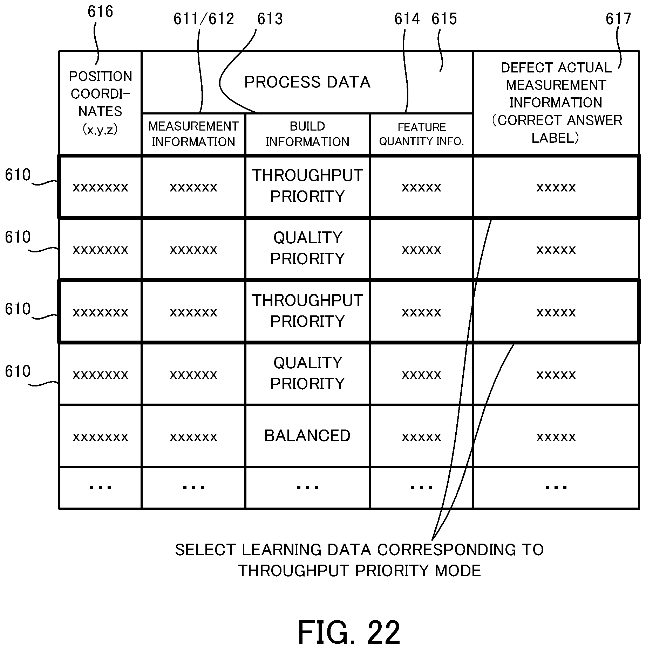

For example, FIG. 22 illustrates an example in which a criterion that "the build condition is set to a throughput priority condition that prioritizes a throughput for building the build object BO* over quality of the build object BO*" is used as the extraction criterion for the build condition information. In this instance, the model generation unit 512 may generate the prediction model PM that matches the build object BO to be built by using the throughput priority condition. That is, the model generation unit 512 may generate the prediction model PM that is suitable to predict the defect formed in the build object BO to be built by using the throughput priority condition. Therefore, the defect prediction unit 312 is capable of predicting the defect formed in the build object BO with higher accuracy, by using the prediction model PM as described above, in a case where the build object BO is built by using the build condition that is the throughput priority condition. The throughput for building the build obj ect BO* may be referred to as a time required to build the build object BO*, or may be referred to as a build time of the build object BO*.

In the example illustrated in FIG. 22, a criterion that "the build condition is set to a quality priority condition that prioritizes the quality of the build object BO* over the throughput for building the build object BO*" may be used as the extraction criterion of the build condition information. In this instance, the model generation unit 512 may generate the prediction model PM that matches the build object BO to be built by using the quality priority condition. That is, the model generation unit 512 may generate the prediction model PM that is suitable to predict the defect formed in the build obj ect BO to be built by using the quality priority condition. Therefore, the defect prediction unit 312 is capable of predicting the defect formed in the build object BO with higher accuracy, by using the prediction model PM as described above, in a case where the build object BO is built by using the build condition that is the quality priority condition.

Similarly, in the example illustrated in FIG. 22, a criterion that "the build condition is set to a balanced condition that achieves both the quality of the build object BO* and the throughput for building the build object BO*" may be used as the extraction criterion for the build condition information. In this instance, the model generation unit 512 may generate the prediction model PM that matches the build object BO to be built by using the balanced condition. That is, the model generation unit 512 may generate the prediction model PM that is suitable to predict the defect formed in the build object BO to be built by using the balanced condition. Therefore, the defect prediction unit 312 is capable of predicting the defect formed in the build object BO with higher accuracy, by using the prediction model PM as described above, in a case where the build object BO is built by using the build condition that is the balanced condition.

As another example, the model generation unit 512 may extract at least one piece of the learning data 610 that satisfy an extraction criterion for the design information included in the build information 613. As the extraction criterion for the design information, for example, a criterion that "the three-dimensional shape of the build object BO* is a predetermined shape" may be used. In this instance, the learning data 610 about the build object BO* of a particular three-dimensional shape are extracted. Consequently, the model generation unit 512 may generate the prediction model PM that matches the build object BO of a particular three-dimensional shape. That is, the model generation unit 512 may generate the prediction model PM that is suitable to predict the defect formed in the build object BO of a particular three-dimensional shape. Therefore, the defect prediction unit 312 is capable of predicting the defect formed in the build object BO with higher accuracy, by using the prediction model PM as described above, in a case where the build object BO of a particular three-dimensional shape is built.

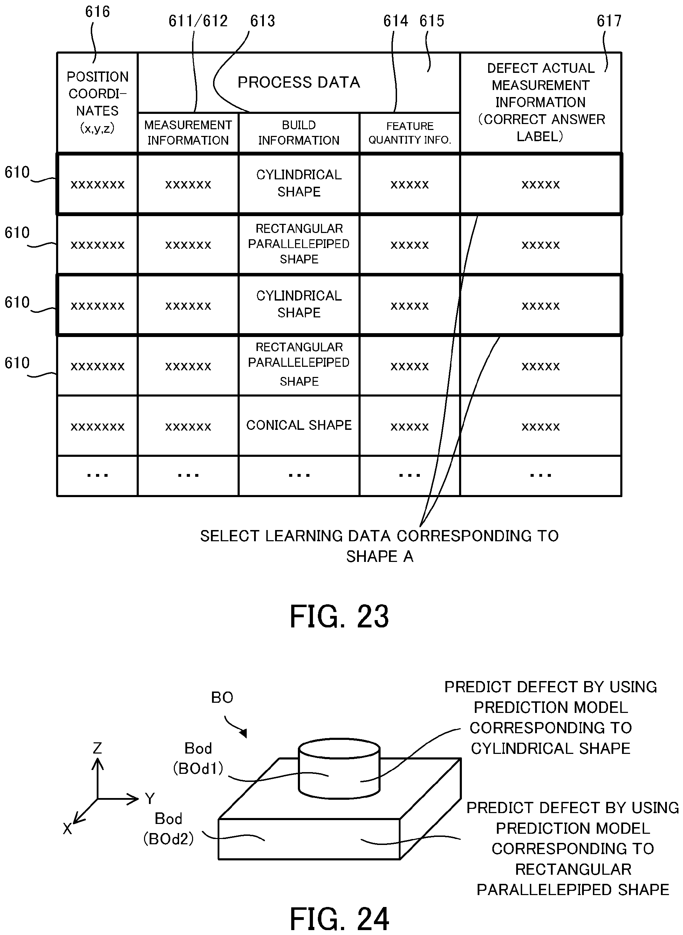

For example, FIG. 23 illustrates an example in which a criterion that "the shape of the build object BO* is a cylindrical shape" is used as the extraction criterion for the design information. In this instance, the model generation unit 512 may generate the prediction model PM that matches the build object BO of a cylindrical shape. That is, the model generation unit 512 may generate the prediction model PM that is suitable to predict the defect formed in the build object BO of a cylindrical shape. Therefore, the defect prediction unit 312 is capable of predicting the defect formed in the build object BO with higher accuracy, by using the prediction model PM as described above, in a case where the build object BO of a cylindrical shape is built.

Note that the build object BO* of the same shape as that of the build object BO that is a target of the defect prediction processing is not necessarily built to perform the model generation processing. This is because the build object BO that is a target of the defect prediction processing does not necessarily have a simple shape. In this instance, in the defect prediction processing, the defect prediction unit 312 may divide the build object BO into at least two divided objects BOd of different shapes, and may predict each of defects formed in the at least two divided objects BOd, by using at least two prediction models PM respectively corresponding to at least two different shapes. For example, FIG. 24 illustrates an example in which the build object BO is dividable into a divided object BOd1 of a cylindrical shape and a divided object BOd2 of a rectangular parallelepiped shape. In this instance, the defect prediction unit 312 may predict the defect formed in the divided object BOd1 of a cylindrical shape, by using the prediction model PM corresponding to the build object BO of a cylindrical shape (i.e., the prediction model PM generated by using the learning data 610 that satisfy the extraction criterion that "the shape of the build object BO* is a cylindrical shape"). On the other hand, the defect prediction unit 312 may predict the defect formed in the divided object BOd2 of a rectangular parallelepiped shape, by using the prediction model PM corresponding to the build object BO of a rectangular parallelepiped shape (i.e., the prediction model PM generated by using the learning data 610 that satisfy an extraction criterion that "the shape of the build object BO* is a rectangular parallelepiped shape"). Consequently, the defect prediction unit 312 is capable of predicting the defect formed in the build object BO with reasonable accuracy, even in a case where the build object BO* of the same shape as that of the build object BO is not built to perform the model generation processing.

Considering that a plurality of prediction models PM respectively corresponding to a plurality of different shapes may be used, the build apparatus 1 may build a small number of build objects BO* of simple shapes that are different from each other, as the build object BO* that is built to perform the model generation processing. For example, the build apparatus 1 may build the build object BO* of a spherical shape, the build object BO* of a rectangular parallelepiped shape, the build object BO* of a cylindrical shape, and the build object BO* of a conical shape. In other words, the build apparatus 1 may not build a large number of build objects BO* of complicated shapes that are different from each other. Even in this case, the defect prediction unit 312 is capable of predicting the defect formed in the build object BO of a complicated shape with reasonable accuracy, by using a plurality of prediction models PM respectively corresponding to a plurality of different shapes.

In a case where the build object BO* of the same shape as that of the build object BO that is a target of the defect prediction processing is built, however, it is possible to generate the prediction model PM that is capable of predicting the defect of the build object BO with higher accuracy, in comparison with a case where the build object BO* of a different shape from that of the build object BO that is a target of the defect prediction processing. For this reason, the build apparatus 1 may build the build object BO* of the same shape as that of the build object BO. In this instance, the build apparatus 1 may build the build object BO* of the same size as that of the build object BO (i.e., the build object BO of a congruent shape with that of the build object BO). Alternatively, the build apparatus 1 may build the build object BO* of a different size from that of the build object BO (i.e., the build object BO of a similar shape to that of the build object BO).

A scene in which a plurality of prediction models PM are used to predict the defect formed in a certain build object BO, is not limited to a case of using a plurality of prediction models PM corresponding to a plurality of different shapes. The scene in which a plurality of prediction models PM are used to predict the defect formed in a certain build object BO, is not limited to a case of generating the prediction model PM by using the extraction criterion for the design information. That is, in an arbitrary scene, the defect prediction unit 312 may predict the defect formed in a certain build object BO, by using the prediction model PM generated by using the learning data 610 that satisfy a first extraction criterion and the prediction model PM generated by using the learning data 610 that satisfy a second criterion that is different from the first extraction criterion.

As another example, the model generation unit 512 may extract at least one piece of the learning data 610 that satisfy an extraction criterion for the material information included in the build information 613. As the extraction criterion for the material information, for example, a criterion that" the build object BO* is built by using a particular build material" may be used. In this instance, the learning data 610 about the build object BO* that is built by using a particular build material are extracted. Consequently, the model generation unit 512 may generate the prediction model PM that matches the build object BO to be built by using a particular build material. That is, the model generation unit 512 may generate the prediction model PM that is suitable to predict the defect formed in the build object BO to be built by using a particular build material. Therefore, the defect prediction unit 312 is capable of predicting the defect formed in the build object BO with hither accuracy, by using the prediction model PM as described above, in a case where the build object BO is built by using a particular build material.

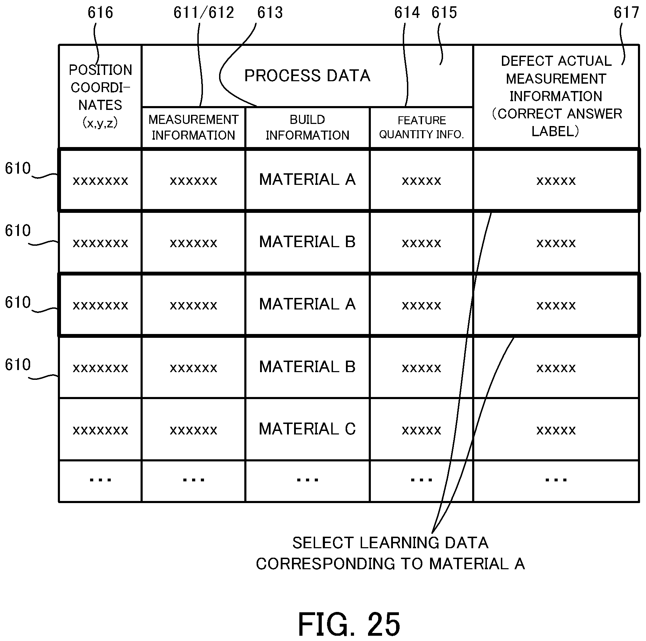

For example, FIG. 25 illustrates an example in which a criterion that "the build object BO* is built by using a build material A" is used as the extraction criterion for the material information. In this instance, the model generation unit 512 may generate the prediction model PM that matches the build object BO to be built by using the build material A. That is, the model generation unit 512 may generate the prediction model PM that is suitable to predict the defect formed in the build object BO to be built by using the build material A. Therefore, the defect prediction unit 312 is capable of predicting the defect formed in the build object BO with higher accuracy, by using the prediction model PM as described above, in a case where the build object BO is built by using the build material A.

Note that the build object BO* is not necessarily built to perform the model generation processing, by using the same build material as the build material for building the build object BO that is a target of the defect prediction processing. On the other hand, the build material for building the build object BO may be approximated by a combination of two or more types of build materials used to build the build object BO*. For example, under a situation where a build material including a metal a and a build material including a metal b are used to build the build object BO*, in a case where the build material for building the build object BO is an alloy c of the metal a and the metal b, the build material (the alloy c) for building the build object BO may be approximated by a combination of two types of build materials (the metal a and the metal b) used to build the build object BO*. In this instance, the model generation unit 512 may generate the prediction model PM, by using both the learning data 610 that satisfy an extraction criterion a that "the build object BO* is built by using the metal a as the build material" and the learning data 610 that satisfy an extraction criterion b that "the build object BO* is built by using the metal b as the build material". In this case, a ratio between the number of the learning data 610 that satisfy the extraction criterion a and the number of the learning data 610 that satisfy the extraction criterion b, may be set in accordance with a ratio between the metal a and the metal b in the alloy c. The defect prediction unit 312 is capable of predicting the defect formed in the build object BO with reasonable accuracy, by using the prediction model PM as described above, in a case where the build object BO is built by using the alloy c as the build material.

That is, the model generation unit 512 may generate the prediction model PM by using both a data set including at least one piece of learning data 610 that satisfy the first extraction criterion and a data set including at least one piece of learning data 610 that satisfy the second extraction criterion. Alternatively, the model generation unit 512 may generate the prediction model PM by using three or more data sets respectively corresponding to three or more extraction criteria. Consequently, the defect prediction unit 312 may predict the defect formed in the build object BO with high accuracy, even in a case where the build object BO* is not built to perform the model generation processing by using the same build material as the build material for building the build object BO.

A scene in which a plurality of data sets respectively corresponding to a plurality of extraction criteria are used to generate a certain prediction model PM, is not limited to a case where the build material for building the build object BO may be approximated by a combination of two or more types of build materials used to build the build object BO*. The scene in which a plurality of data sets respectively corresponding to a plurality of extraction criteria are used to generate a certain prediction model PM, is not limited to a case of generating the prediction model PM by using the extraction criterion for the material information. That is, in an arbitrary scene, the model generation unit 512 may generate a single prediction model PM by using a plurality of data sets respectively corresponding to a plurality of extraction criteria.

### (5-2) Prediction Model in Modified Example

In the above description, the information processing apparatus 3 generates the defect information 425 about the defect formed in the build object BO built by the build apparatus 1, as an example of the property information about the properties of the build object BO built by the build apparatus 1. The information processing apparatus 3, however, may generate the property information that is different from the defect information 425.

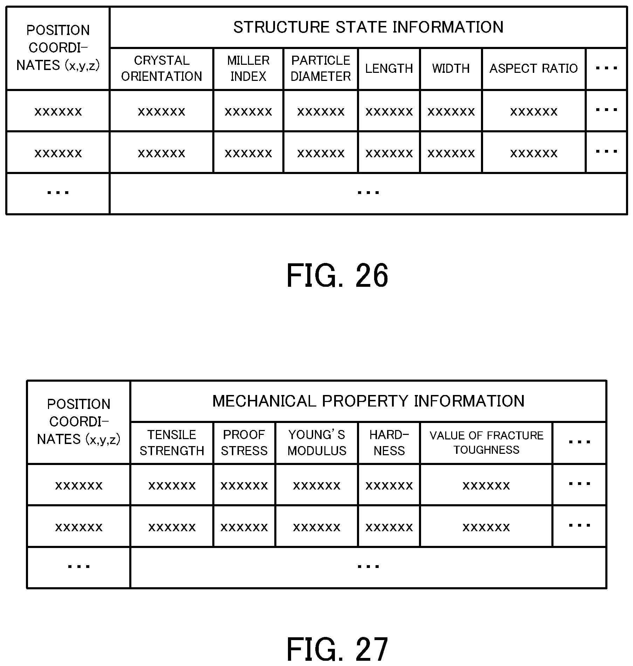

For example, the information processing apparatus 3 may generate structure state information about a state of a metal structure that constitutes at least a part of the build object BO, as an example of the property information. That is, the information processing apparatus 3 may predict the state of the metal structure that constitutes at least a part of the build object BO. FIG. 26 illustrates an example of the structure state information. As illustrated in FIG. 26, the structure state information may include information about an orientation of the metal structure (so-called, crystal orientation). The structure state information may include information about a Miller index of the metal structure. The structure state information may include information about a size of the metal structure. The information about the size of the metal structure may include information about at least one of a length, a width, and a particle diameter of the metal structure. The structure state information may include information about a shape of the metal structure. The information about the shape of the metal structure may include information about an aspect ratio of the metal structure. The structure state information may include information about a type of a crystal lattice of the metal structure.

For example, the information processing apparatus 3 may generate mechanical property information about mechanical properties of at least a part of the build object BO, as an example of the property information. That is, the information processing apparatus 3 may predict the mechanical properties of at least a part of the build object BO. FIG. 27 illustrates an example of the mechanical property information. As illustrated in FIG. 27, the mechanical property information may include information about tensile strength of the build object BO. The mechanical property information may include information about tensile strength of the build object BO. The mechanical property information may include information about 0.2% proof stress of the build obj ect BO. The mechanical property information may include information about a yield point of the build object BO. The mechanical property information may include information about elongation of the build object BO. The mechanical property information may include information about contraction of the build object BO. The mechanical property information may include information about a Young's modulus of the build object BO. The mechanical property information may include information about hardness (i.e., a degree of hardness) of the build object BO. The mechanical property information may include information about a value of fracture toughness of the build obj ect BO. The mechanical property information may include information about high temperature strength of the build object BO. The mechanical property information may include information about a coefficient of linear expansion of the build object BO.

As described above, even in a case where the information processing apparatus 3 generates the property information that is different from the defect information 425, as in a case of generating the defect information 425, the information processing apparatus 3 may generate the property information by using the process data 415 and the prediction model PM. In this instance, however, the information processing apparatus 3 uses, as the prediction model PM, a learning model generated by machine learning so as to generate the property information on the basis of the process data 415. Similarly, the model generation apparatus 5 performs machine learning for generating the prediction model PM that allows the property information to be generated on the basis of the process data 415.

### (5-3) Defect prediction Processing in Modified Example

In the above description, the information acquisition unit 311 associates the measurement information 411 with the build position. That is, the information acquisition unit 311 associates the information about the temperature of one part of the measurement target object (hereafter referred to as a "target part") with the build position at which the build apparatus 1 performs the build processing of the target part (i.e., the position of the target part). In a modified example, the information acquisition unit 311 may use, as the information about the temperature of the target part associated with the build position, information about a temperature that is calculated from the temperature of the target part and from the temperature of a nearby part located in the vicinity of the target part temporally and/or spatially. The nearby part located in the vicinity of the target part temporally, may be a part that satisfies such a condition that a time difference between a time point when the target part is irradiated with the build light EL and a time point when the nearby part is irradiated with the build light EL is within a predetermined time. The nearby part located in the vicinity of the target part spatially, may be a part that satisfies such a condition that a distance between the target part and the nearby part is within a predetermined distance.

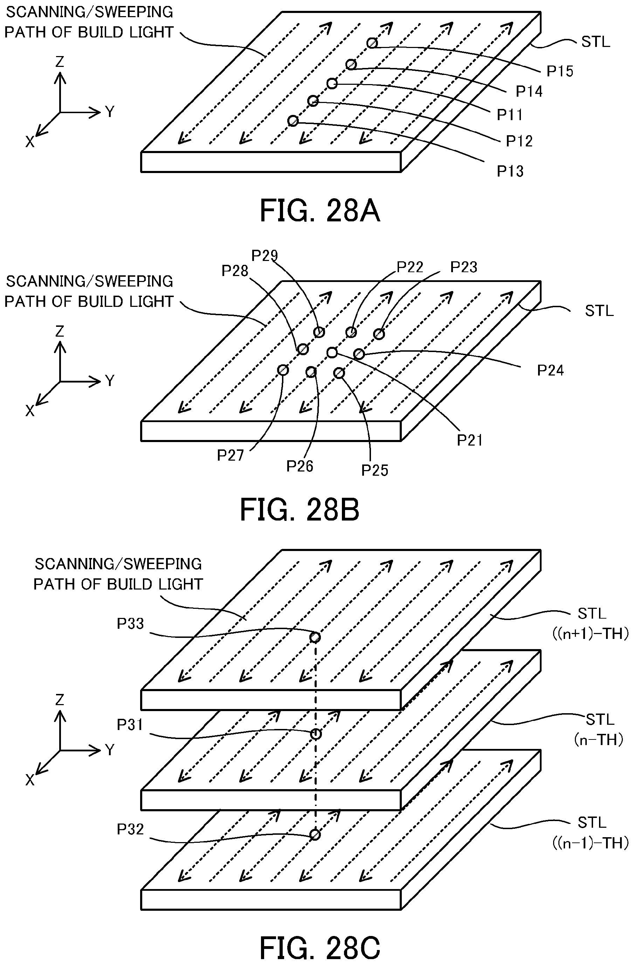

For example, as illustrated in FIG. 28A, the information acquisition unit 311 may use, as the temperature of a target part P11 of the solidified layer STL that is an example of the measurement target object (especially, as the temperature associated with the position of the target port 11 that is the build position), a temperature that is calculated from the temperature of the target part P11 and from the temperature of at least one nearby part located in the temporal vicinity of the target part P11 temporally (four nearby parts P12 to P15 in the example illustrated in FIG. 28A). The nearby parts P12 and P13 are parts that are irradiated with the build light EL immediately before the target part is irradiated with the build light EL. The nearby parts P14 and P15 are parts that are irradiated with the build light EL immediately after the target part is irradiated with the build light EL. In this instance, the nearby parts P12 to P15 may be considered to be located in the vicinity of the target part P11 in a scanning order (a scanning direction) of the build light EL. As an example, the information acquisition unit 311 may associate the temperature of the target part P11 and a temperature that is acquired by performing a predetermined filtering on the nearby parts P12 to P15, as the temperature associated with the position of the target part P11. The predetermined filtering may be a filtering for performing an averaging. In this instance, the predetermined filtering may be a filtering that uses at least one of an averaging filter and a median filter.

For example, as illustrated in FIG. 28B, the information acquisition unit 311 may use, as the temperature of a target part P21 of the solidified layer STL (especially, as the temperature associated with the position of the target part 21 that is the build position), a temperature that is calculated from the temperature of the target part P21 and from the temperature of at least one nearby part located in the vicinity of the target part P21 spatially (eight nearby parts P22 to P29 in the example illustrated in FIG. 28B). The nearby parts P12 and P13 are parts that are irradiated with the build light EL immediately before the target part is irradiated with the build light EL. The nearby parts P 14 and P 15 are parts that are irradiated with the build light EL immediately after the target part is irradiated with the build light EL. As an example, the information acquisition unit 311 may associate the temperature of the target part P21 and a temperature that is acquired by performing the predetermined filtered described in the preceding paragraph, on the nearby parts P 22 to P29, as the temperature associated with the position of the target part P21.

For example, as illustrated in FIG. 28C, the information acquisition unit 311 may use, as the temperature of a target part P31 of the n-th solidified layer STL (especially, as the temperature associated with the position of the target part 31 that is the build position), a temperature that is calculated from the temperature of the target part P31, from the temperature of a nearby part P32 of the (n-1)-th solidified layer STL that at least partially overlaps the target part P31 in the lamination direction of the solidified layers STL, and from the temperature of a nearby part P33 of the (n+1)-th solidified layer STL that at least partially overlaps the target partial P31 in the lamination direction of the solidified layers STL. In this case, the nearby parts P32 and P33 may be considered to be located in the vicinity of the target part P31 in the lamination direction of the solidified layers STL. As an example, the information acquisition unit 311 may associate the temperature of the target part P31 and a temperature that is acquired by performing the predetermined filtering described in the paragraph one before the preceding paragraph, on the nearby parts P32 and P33, as the temperature associated with the position of the target part P31.

Although a detailed explanation is omitted to avoid a redundant description, the information acquisition unit 311 may use, as the information about the shape of the target part associated with the build position (i.e., as the measurement information 412), information about a shape that is calculated from the shape of the target portion and from the shape of the nearby part located in the vicinity of the target part temporally and/or spatially. The information acquisition unit 311 may use, as the information about the building of the target part associated with the build position (i.e., as the build information 413), information that is calculated from the information about the building of the target part and from information about the building of the nearby part located in the vicinity of the target part temporally and/or spatially. The information acquisition unit 311 may use, as the information about the feature quantity of the target part associated with the build position (i.e., as the feature quantity information 414), information about a feature quantity that is calculated from the feature quantity of the target part and from the feature quantity of the nearby part located in the vicinity of the target part temporally and/of spatially.

In the above description, the temperature measurement apparatus 21 outputs the temperature image data D_T indicating the temperature image IMG_T, as the measurement information 411, to the information processing apparatus 3. The temperature measurement apparatus 21, however, may output temperature video data indicating a video corresponding to a plurality of temperature images IMG_T that are temporally or spatially continuous, as the measurement information 411, to the information processing apparatus 3. Similarly, the shape measurement apparatus 22 may output shape video data indicating a video corresponding to a plurality of shape images IMG_3D that are temporally continuous, as the measurement information 412, to the information processing apparatus 3. In this instance, the defect prediction unit 312 may calculate a temporal change in the feature quantity of the measurement target object, on the basis of at least one of the measurement information 411 and the measurement information 412. That is, the defect prediction unit 312 may generate the feature quantity information 414 indicating a temporal change in the feature quantity of the measurement target object, on the basis of at least one of the measurement information 411 and the measurement information 412. For example, the defect prediction unit 312 may generate the feature quantity information 414 indicating a temporal change in the temperature of each part of the measurement target object, on the basis of the measurement information 411. For example, the defect prediction unit 312 may generate the feature quantity information 414 indicating a temporal change in the number of the spatters SPT generated in each part of the measurement target object, on the basis of the measurement information 411. For example, the defect prediction unit 312 may generate the feature quantity information 414 indicating a temporal change in the thickness of the solidified layer STL, on the basis of the measurement information 412. For example, the defect prediction unit 312 may generate the feature quantity information 414 indicating a temporal change in the surface roughness (or an arbitrary surface topography) of the solidified layer STL, on the basis of the measurement information 412.

### (5-3) Other Modified Examples

In the above description, the build system SYS includes the information processing apparatus 3, apart from the build apparatus 1; however, the build apparatus 1 (e.g., the control unit 16) may include the information processing apparatus 3. That is, the control unit 16 may serve as the information processing apparatus 3. Alternatively, the build apparatus 1 may include the information processing apparatus 3, apart from the control unit 16. The control unit 1 may perform a part of the function of the information processing apparatus 3.

In the above description, the build system SYS includes the information processing apparatus 3, apart from the measurement apparatus 2; however, the measurement apparatus 2 may include the information processing apparatus 3. For example, the information processing apparatus 3 may be included in the measurement apparatus 2. That is, the measurement apparatus 2 may serve as the information processing apparatus 3. The measurement apparatus 2 may perform a part of the function of the information processing apparatus 3.

The build system SYS may include the model generation apparatus 5. For example, the information processing apparatus 3 may include the model generation apparatus 5. That is, the information processing apparatus 3 may serve as the model generation apparatus 5. For example, the build apparatus 1 (e.g., the control unit 16) may include the model generation apparatus 5. The build apparatus 1 (e.g., the control unit 16) may include the information processing apparatus 3 including the model generation apparatus 5. That is, the control unit 16 may serve as the model generation apparatus 5. Alternatively, the build apparatus 1 may include the model generation apparatus 5, apart from the control unit 16. The control unit 1 may perform a part of the function of the model generation apparatus 5. The build apparatus 1 may include the information processing apparatus 3 including the model generation apparatus 5, apart from the control unit 16. For example, the measurement apparatus 2 may include the model generation apparatus 5. The measurement apparatus 2 may include the information processing apparatus 3 including the model generation apparatus 5. That is, the measurement apparatus 2 may serve as the model generation apparatus 5. The measurement apparatus 2 may perform a part of the function of the model generation apparatus 5.

In the above description, the build system SYS melts the build material by using the build light EL. The build system SYS, however, may melt the build material by using an arbitrary energy beam. An example of the arbitrary energy beam includes at least one of a charged particle beam, an electromagnetic wave, and the like. An example of the charged particle beam includes at least one of an electron beam, an ion beam, and the like.

### (6) Supplementary Notes

### [Supplementary Note 1]

An information processing apparatus including:
an acquisition unit that acquires measurement information about building of a build object acquired in a build period of the build object that is built by solidification of a build material melted by irradiation with an energy beam; and
an information processing unit that generates property information about properties of the build object, by using the measurement information acquired by the acquisition unit.

### [Supplementary Note 2]

The information processing apparatus according to Supplementary Note 1, wherein the property information includes at least one of defect information about a defect formed inside the build object, density information about a density of at least a part of the build object, structure state information about a state of a metal structure that constitutes at least a part of the build object, and mechanical property information about mechanical properties of at least a part of the build object.

### [Supplementary Note 3]

The information processing apparatus according to Supplementary Note 2, wherein
the defect includes a void space formed inside the build object, and
the defect information includes void space information about the void space.

### [Supplementary Note 4]

The information processing apparatus according to Supplementary Note 2 or 3, wherein the defect information includes at least one of information about presence or absence of the defect, and information about properties of the defect.

### [Supplementary Note 5]

The information processing apparatus according to Supplementary Note 4, wherein the properties of the defect include at least one of a size of the defect, a position of the defect, and a shape of the defect.

### [Supplementary Note 6]

The information processing apparatus according to any one of Supplementary Notes 2 to 5, wherein the structure state information includes information about at least one of an orientation of the metal structure, a Miller index of the metal structure, a size of the metal structure, a shape of the metal structure, and a type of a crystal lattice of the metal structure.

### [Supplementary Note 7]

The information processing apparatus according to any one of Supplementary Notes 2 to 6, wherein the mechanical property information includes information about at least one of tensile strength of the build object, 0.2% proof stress of the build object, a yield point of the build object, elongation of the build object, drawing/drawability of the build object, a Young's modulus of the build object, hardness of the build object, a value of fracture toughness of the build object, a fatigue limit of the build object, high temperature strength of the build object, and a coefficient of linear expansion of the build object.

### [Supplementary Note 8]

The information processing apparatus according to any one of Supplementary Notes 1 to 7, further including an output unit that outputs the property information.

### [Supplementary Note 9]

The information processing apparatus according to Supplementary Note 8, wherein the output unit includes a display unit that displays the property information.

### [Supplementary Note 10]

The information processing apparatus according to Supplementary Note 8 or 9, wherein the output unit includes a transmission unit that transmits the property information to a build apparatus that builds the build object.

### [Supplementary Note 11]

The information processing apparatus according to any one of Supplementary Notes 8 to 10, wherein the output unit outputs the measurement information together with the property information.

### [Supplementary Note 12]

The information processing apparatus according to Supplementary Note 11, wherein
the property information includes first information about properties of one part of the build object,
the measurement information includes second information acquired in measurement related to building of the one part of the build object, and
the output unit outputs the property information and the measurement information in an output format in which the first information is associated with the second information.

### [Supplementary Note 13]

The information processing apparatus according to Supplementary Note 12, wherein the output unit includes a display unit that displays the property information and the measurement information in the output format in which the first information is associated with the second information.

### [Supplementary Note 14]

The information processing apparatus according to any one of Supplementary Notes 11 to 13, wherein the output unit includes a transmission unit that transmits the property information and the measurement information to a build apparatus that builds the build object.

### [Supplementary Note 15]

The information processing apparatus according to any one of Supplementary Notes 8 to 14, wherein
the information processing unit further generates energy information about an energy amount transferred from the energy beam to the build material, on the basis of the measurement information, and
the output unit outputs the energy information together with the property information.

### [Supplementary Note 16]

The information processing apparatus according to Supplementary Note 15, wherein
the property information includes first information about properties of one part of the build object,
the energy information includes second information about the energy amount transferred from the energy beam to the build material in building of the one part of the build object, and
the output unit outputs the property information and the energy information in an output format in which the first information is associated with the second information.

### [Supplementary Note 17]

The information processing apparatus according to Supplementary Note 16, wherein the output unit includes a display unit that displays the property information and the energy information in the output format in which the first information is associated with the second information.

### [Supplementary Note 18]

The information processing apparatus according to any one of Supplementary Notes 15 to 17, wherein the output unit includes a transmission unit that transmits the property information and the energy information to a build apparatus that builds the build object.

### [Supplementary Note 19]

The information processing apparatus according to any one of Supplementary Notes 8 to 18, wherein the output unit outputs the property information in the build period in which the build object is built, and/or after the build object is built.

### [Supplementary Note 20]

The information processing apparatus according to any one of Supplementary Notes 1 to 19, wherein the information processing unit generates the property information, by using the measurement information and a learning model generated by machine learning so as to generate the property information on the basis of the measurement information.

### [Supplementary Note 21]

The information processing apparatus according to any one of Supplementary Notes 1 to 20, wherein the measurement information includes information about a shape of at least a part of the build object acquired in the build period.

### [Supplementary Note 22]

The information processing apparatus according to any one of Supplementary Notes 1 to 21, wherein
the build object is built by solidification of at least a part of a layered material layer melted by irradiation with the energy beam to at least a part of the material layer formed by the build material supplied, and
the measurement information includes information about a shape of at least a part of the material layer acquired in the build period.

### [Supplementary Note 23]

The information processing apparatus according to any one of Supplementary Notes 1 to 22, wherein
the build object includes a solidified object formed by solidification of at least a part of the build material melted by irradiation with the energy beam to at least a part of the build material supplied, and
the measurement information includes information about a shape of at least a part of the solidified object acquired in the build process.

### [Supplementary Note 24]

The information processing apparatus according to any one of Supplementary Notes 1 to 23, wherein the measurement information includes information about at least a part of a melt pool formed by melting of the metal material by irradiation with the energy beam.

### [Supplementary Note 25]

The information processing apparatus according to any one of Supplementary Notes 1 to 24, wherein
the acquisition unit further acquires build information about building of the build object, and
the information processing unit generates the property information by using the measurement information and the build information.

### [Supplementary Note 26]

The information processing apparatus according to Supplementary Note 25, wherein the information processing unit generates the property information, by using the measurement information, the build information, and a learning model generated by machine learning so as to generate the property information on the basis of the measurement information and the build information.

### [Supplementary Note 27]

The information processing apparatus according to Supplementary Note 25 or 26, wherein the build information includes at least one of apparatus information about a build apparatus that builds the build object, material information about the build material used to build the build object, and design information about the build object.

### [Supplementary Note 28]

The information processing apparatus according to Supplementary Note 27, wherein the apparatus information includes at least one of information about a build condition used by the build apparatus to build the build object, and information about an operating state of the build apparatus.

### [Supplementary Note 29]

An information processing apparatus including:
an acquisition unit that acquires build information about building of a build object that is built by solidification of a build material melted by irradiation with an energy beam; and
an information processing unit that generates property information about properties of the build object, by using the build information acquired by the acquisition unit.

### [Supplementary Note 30]

The information processing apparatus according to Supplementary Note 29, wherein the property information includes at least one of defect information about a defect formed inside the build object, density information about a density of at least a part of the build object, structure state information about a state of a metal structure that constitutes at least a part of the build object, and mechanical property information about mechanical properties of at least a part of the build object.

### [Supplementary Note 31]

The information processing apparatus according to Supplementary Note 30, wherein the defect includes a void space formed inside the build object.

### [Supplementary Note 32]

The information processing apparatus according to Supplementary Note 31, wherein the defect information includes void space information about the void space.

### [Supplementary Note 33]

The information processing apparatus according to any one of Supplementary Notes 30 to 32, wherein the defect information includes at least one of information about presence or absence of the defect, and information about properties of the defect.

### [Supplementary Note 34]

The information processing apparatus according to Supplementary Note 33, wherein the properties of the defect include at least one of a size of the defect, a position of the defect, and a shape of the defect.

### [Supplementary Note 35]

The information processing apparatus according to any one of Supplementary Notes 30 to 34, wherein the structure state information includes information about at least one of an orientation of the metal structure, a size of the metal structure, a shape of the metal structure, and a type of a crystal lattice of the metal structure.

### [Supplementary Note 36]

The information processing apparatus according to any one of Supplementary Notes 30 to 35, wherein the mechanical property information includes information about at least one of tensile strength of the build object, 0.2% proof stress of the build object, a yield point of the build object, elongation of the build object, contraction of the build object, a Young's modulus of the build object, hardness of the build object, a value of fracture toughness of the build object, a fatigue limit of the build object, high temperature strength of the build object, and a coefficient of linear expansion of the build object.

### [Supplementary Note 37]

The information processing apparatus according to any one of Supplementary Notes 29 to 36, further including an output unit that outputs the property information.

### [Supplementary Note 38]

The information processing apparatus according to Supplementary Note 37, wherein the output unit includes a display unit that displays the property information.

### [Supplementary Note 39]

The information processing apparatus according to Supplementary Note 37 or 38, wherein the output unit includes a transmission unit that transmits the property information to a build apparatus that builds the build object.

### [Supplementary Note 40]

The information processing apparatus according to any one of Supplementary Notes 37 to 39, wherein the output unit outputs the build information together with the property information.

### [Supplementary Note 41]

The information processing apparatus according to Supplementary Note 40, wherein
the property information includes first information about properties of one part of the build object,
the build information includes second information about the one part of the build object, and
the output unit outputs the property information and the build information in an output format in which the first information is associated with the second information.

### [Supplementary Note 42]

The information processing apparatus according to Supplementary Note 41, wherein the output unit includes a display unit that displays the property information and the build information in the output format in which the first information is associated with the second information.

### [Supplementary Note 43]

The information processing apparatus according to any one of Supplementary Notes 40 to 42, wherein the output unit includes a transmission unit that transmits the property information and the build information to a build apparatus that builds the build object.

### [Supplementary Note 44]

The information processing apparatus according to any one of Supplementary Notes 37 to 43, wherein
the information processing unit further generates energy information about an energy amount transferred from the energy beam to the build material, on the basis of measurement information about building of the build object acquired in a build period of the build object, and
the output unit outputs the energy information together with the property information.

### [Supplementary Note 45]

The information processing apparatus according to Supplementary Note 44, wherein
the property information includes first information about properties of one part of the build object,
the energy information includes second information about the energy amount transferred from the energy beam to the build material in building of the one part of the build object, and
the output unit outputs the property information and the energy information in an output format in which the first information is associated with the second information.

### [Supplementary Note 46]

The information processing apparatus according to Supplementary Note 45, wherein the output unit includes a display unit that displays the property information and the energy information in the output format in which the first information is associated with the second information.

### [Supplementary Note 47]

The information processing apparatus according to any one of Supplementary Notes 44 to 46, wherein the output unit includes a transmission unit that transmits the property information and the energy information to a build apparatus that builds the build object.

### [Supplementary Note 48]

The information processing apparatus according to any one of Supplementary Notes 37 to 47, wherein the output unit outputs the property information in the build period in which the build object is built, and/or after the build object is built.

### [Supplementary Note 49]

The information processing apparatus according to any one of Supplementary Notes 29 to 48, wherein the information processing unit generates the property information, by using the build information and a learning model generated by machine learning so as to generate the property information on the basis of the build information.

### [Supplementary Note 50]

The information processing apparatus according to any one of Supplementary Notes 29 to 49, wherein the build information includes at least one of apparatus information about a build apparatus that builds the build object, material information about the build material used to build the build object, and design information about the build object.

### [Supplementary Note 51]

The information processing apparatus according to Supplementary Note 50, wherein the apparatus information includes at least one of information about a build condition used by the build apparatus to build the build object, and information about an operating state of the build apparatus.

### [Supplementary Note 52]

The information processing apparatus according to any one of Supplementary Notes 29 to 51, wherein
the acquisition unit acquires measurement information about building of the build object acquired in a build period of the build object, and
the information processing unit generates the property information, by using the measurement information and the build information acquired by the acquisition unit.

### [Supplementary Note 53]

The information processing apparatus according to Supplementary Note 52, wherein the information processing unit generates the property information, by using the build information, the measurement information, and a learning model generated by machine learning so as to generate the property information on the basis of the build information and the measurement information.

### [Supplementary Note 54]

The information processing apparatus according to Supplementary Note 52 or 53, wherein the measurement information includes information about a shape of at least a part of the build object acquired in the build period.

### [Supplementary Note 55]

The information processing apparatus according to any one of Supplementary Notes 52 to 54, wherein
the build object is built by solidification of at least a part of a layered material layer melted by irradiation with the energy beam to at least a part of the material layer formed by the build material supplied, and
the measurement information includes information about a shape of at least a part of the material layer acquired in the build period.

### [Supplementary Note 56]

The information processing apparatus according to any one of Supplementary Notes 52 to 55, wherein
the build object includes a solidified object formed by solidification of at least a part of the build material melted by irradiation with the energy beam to at least a part of the build material supplied, and
the measurement information includes information about a shape of at least a part of the solidified object acquired in the build process.

### [Supplementary Note 57]

The information processing apparatus according to any one of Supplementary Notes 52 to 56, wherein the measurement information includes information about at least a part of a melt pool formed by melting of the metal material by irradiation with the energy beam.

### [Supplementary Note 58]

A build system including:
the information processing apparatus according to any one of Supplementary Notes 1 to 57;
a build apparatus that is configured to build a build object by solidification of a powdery metal material melted by irradiation with an energy beam; and
a measurement apparatus, wherein
the measurement information is acquired by using the measurement apparatus.

### [Supplementary Note 59]

An information processing method including:
acquiring measurement information about building of a build object acquired in a build period of the build object that is built by solidification of a build material melted by irradiation with an energy beam; and
generating property information about properties of the build object, by using the measurement information acquired.

### [Supplementary Note 60]

An information processing method including:
acquiring build information about building of a build object that is built by solidification of a build material melted by irradiation with an energy beam; and
generating property information about properties of the build object, by using the build information acquired.

### [Supplementary Note 61]

A computer program that allows a computer to execute the information processing methods according to Supplementary Note 59 or 60.

### [Supplementary Note 62]

A recording medium on which the computer programs according to Supplementary Note 61 is recorded.

### [Supplementary Note 63]

A build method including:
building a build object by solidification of a build material melted by irradiation with an energy beam;
performing measurement related to building of the build object in a build period of the build object; and
acquiring property information about properties of the build object generated by using the measurement information acquired by the measurement.

### [Supplementary Note 64]

The build method according to Supplementary Note 63, wherein the property information includes at least one of defect information about a defect formed inside the build object, density information about a density of at least a part of the build object, structure state information about a state of a metal structure that constitutes at least a part of the build object, and mechanical property information about mechanical properties of at least a part of the build object.

### [Supplementary Note 65]

The build method according to Supplementary Note 64, wherein the defect includes a void space formed inside the build object.

### [Supplementary Note 66]

The build method according to Supplementary Note 65, wherein the defect information includes void space information about the void space.

### [Supplementary Note 67]

The build method according to any one of Supplementary Notes 64 to 66, wherein the defect information includes at least one of information about presence or absence of the defect, and information about properties of the defect.

### [Supplementary Note 68]

The build method according to Supplementary Note 67, wherein the properties of the defect include at least one of a size of the defect, a position of the defect, and a shape of the defect.

### [Supplementary Note 69]

The build method according to any one of Supplementary Notes 64 to 68, wherein the structure state information includes information about at least one of an orientation of the metal structure, a size of the metal structure, a shape of the metal structure, and a type of a crystal lattice of the metal structure.

### [Supplementary Note 70]

The build method according to any one of Supplementary Notes 64 to 69, wherein the mechanical property information includes information about at least one of tensile strength of the build object, 0.2% proof stress of the build object, a yield point of the build object, elongation of the build object, contraction of the build object, a Young's modulus of the build object, hardness of the build object, a value of fracture toughness of the build object, a fatigue limit of the build object, high temperature strength of the build object, and a coefficient of linear expansion of the build object.

### [Supplementary Note 71]

The build method according to any one of Supplementary Notes 63 to 70, further including outputting the property information.

### [Supplementary Note 72]

The build method according to Supplementary Note 71, wherein the outputting includes displaying the property information.

### [Supplementary Note 73]

The build method according to Supplementary Note 71 or 72, wherein the outputting includes transmitting the property information to a build apparatus that builds the build object.

### [Supplementary Note 74]

The build method according to any one of Supplementary Notes 71 to 73, wherein the outputting includes outputting the measurement information together with the property information.

### [Supplementary Note 75]

The build method according to Supplementary Note 74, wherein
the property information includes first information about properties of one part of the build object,
the measurement information includes second information acquired in measurement related to building of the one part of the build object, and
the outputting includes outputting the property information and the measurement information in an output format in which the first information is associated with the second information.

### [Supplementary Note 76]

The build method according to Supplementary Note 75, wherein the outputting includes displaying the property information and the measurement information in the output format in which the first information is associated with the second information.

### [Supplementary Note 77]

The build method according to any one of Supplementary Notes 74 to 76, wherein the outputting includes transmitting the property information and the measurement information to a build apparatus that builds the build object.

### [Supplementary Note 78]

The build method according to any one of Supplementary Notes 71 to 77, wherein
the build method further includes generating energy information about an energy amount transferred from the energy beam to the build material, on the basis of the measurement information, and
the outputting includes outputting the energy information together with the property information.

### [Supplementary Note 79]

The build method according to Supplementary Note 79, wherein
the property information includes first information about properties of one part of the build object,
the energy information includes second information about the energy amount transferred from the energy beam to the build material in building of the one part of the build object, and
the outputting includes outputting the property information and the energy information in an output format in which the first information is associated with the second information.

### [Supplementary Note 80]

The build method according to Supplementary Note 79, wherein the outputting includes displaying the property information and the energy information in the output format in which the first information is associated with the second information.

### [Supplementary Note 81]

The build method according to any one of Supplementary Notes 78 to 80, wherein the outputting includes transmitting the property information and the energy information to a build apparatus that builds the build object.

### [Supplementary Note 82]

The build method according to any one of Supplementary Notes 71 to 81, wherein the outputting includes outputting the property information in the build period in which the build object is built, and/or after the build object is built.

### [Supplementary Note 83]

The build method according to any one of Supplementary Notes 63 to 82, wherein the acquiring includes acquiring the property information generated using the learning model generated, by using the measurement information and a learning model generated by machine learning so as to generate the property information on the basis of the measurement information.

### [Supplementary Note 84]

The build method according to any one of Supplementary Notes 63 to 83, wherein the measurement information includes information about a shape of at least a part of the build object acquired in the build period.

### [Supplementary Note 85]

The build method according to any one of Supplementary Notes 63 to 84, wherein
the build object is built by solidification of at least a part of a layered material layer melted by irradiation with the energy beam to at least a part of the material layer formed by the build material supplied, and
the measurement information includes information about a shape of at least a part of the material layer acquired in the build period.

### [Supplementary Note 86]

The build method according to any one of Supplementary Notes 63 to 85, wherein
the build object includes a solidified object formed by solidification of at least a part of the build material melted by irradiation with the energy beam to at least a part of the build material supplied, and
the measurement information includes information about a shape of at least a part of the solidified object acquired in the build process.

### [Supplementary Note 87]

The build method according to any one of Supplementary Notes 63 to 86, wherein the measurement information includes information about at least a part of a melt pool formed by melting of the metal material by irradiation with the energy beam.

### [Supplementary Note 88]

The build method according to any one of Supplementary Notes 63 to 87, wherein the acquiring includes acquiring the property information generated by using the measurement information and build information about the building of the build object.

### [Supplementary Note 89]

The build method according to Supplementary Note 88, wherein the acquiring includes acquiring the property information generated by using the measurement information, the build information, and a learning model generated by machine learning so as to generate the property information on the basis of the measurement information and the build information.

### [Supplementary Note 90]

The build method according to Supplementary Note 88 or 89, wherein the build information includes at least one of apparatus information about a build apparatus that builds the build object, material information about the build material used to build the build object, and design information about the build object.

### [Supplementary Note 91]

The build method according to Supplementary Note 90, wherein the apparatus information includes at least one of information about a build condition used by the build apparatus to build the build object, and information about an operating state of the build apparatus.

### [Supplementary Note 92]

A build method including:
building a build object by solidification of a build material melted by irradiation with an energy beam; and
acquiring property information about properties of the build object generated by using build information about building of the build object.

### [Supplementary Note 93]

The build method according to Supplementary Note 92, wherein the property information includes at least one of defect information about a defect formed inside the build object, density information about a density of at least a part of the build object, structure state information about a state of a metal structure that constitutes at least a part of the build object, and mechanical property information about mechanical properties of at least a part of the build object.

### [Supplementary Note 94]

The build method according to Supplementary Note 93, wherein the defect includes a void space formed inside the build object.

### [Supplementary Note 95]

The build method according to Supplementary Note 94, wherein the defect information includes void space information about the void space.

### [Supplementary Note 96]

The build method according to any one of Supplementary Notes 93 to 95, wherein the defect information includes at least one of information about presence or absence of the defect, and information about properties of the defect.

### [Supplementary Note 97]

The build method according to Supplementary Note 96, wherein the properties of the defect include at least one of a size of the defect, a position of the defect, and a shape of the defect.

### [Supplementary Note 98]

The build method according to any one of Supplementary Notes 93 to 97, wherein the structure state information includes information about at least one of an orientation of the metal structure, a size of the metal structure, a shape of the metal structure, and a type of a crystal lattice of the metal structure.

### [Supplementary Note 99]

The build method according to any one of Supplementary Notes 93 to 98, wherein the mechanical property information includes information about at least one of tensile strength of the build object, 0.2% proof stress of the build object, a yield point of the build object, elongation of the build object, contraction of the build object, a Young's modulus of the build object, hardness of the build object, a value of fracture toughness of the build object, a fatigue limit of the build object, high temperature strength of the build object, and a coefficient of linear expansion of the build object.

### [Supplementary Note 100]

The build method according to any one of Supplementary Notes 92 to 99, further including outputting the property information.

### [Supplementary Note 101]

The build method according to Supplementary Note 100, wherein the outputting includes displaying the property information.

### [Supplementary Note 102]

The build method according to Supplementary Note 100 or 101, wherein the outputting includes transmitting the property information to a build apparatus that builds the build object.

### [Supplementary Note 103]

The build method according to any one of Supplementary Notes 100 to 102, wherein the outputting includes outputting the build information together with the property information.

### [Supplementary Note 104]

The build method according to Supplementary Note 103, wherein
the property information includes first information about properties of one part of the build object,
the build information includes second information about the one part of the build object, and
the outputting includes outputting the property information and the build information in an output format in which the first information is associated with the second information.

### [Supplementary Note 105]

The build method according to Supplementary Note 104, wherein the outputting includes displaying the property information and the build information in the output format in which the first information is associated with the second information.

### [Supplementary Note 106]

The build method according to any one of Supplementary Notes 103 to 105, wherein the outputting includes transmitting the property information and the build information to a build apparatus that builds the build object.

### [Supplementary Note 107]

The build method according to any one of Supplementary Notes 100 to 106, wherein
the build method further generating energy information about an energy amount transferred from the energy beam to the build material, on the basis of measurement information about the building of the build object acquired in a build period of the build object, and
the outputting includes outputting the energy information together with the property information.

### [Supplementary Note 108]

The build method according to Supplementary Note 107, wherein
the property information includes first information about properties of one part of the build object,
the energy information includes second information about the energy amount transferred from the energy beam to the build material in building of the one part of the build object, and
the outputting includes outputting the property information and the energy information in an output format in which the first information is associated with the second information.

### [Supplementary Note 109]

The build method according to Supplementary Note 108, wherein
the outputting includes displaying the property information and the energy information in the output format in which the first information is associated with the second information.

### [Supplementary Note 110]

The build method according to any one of Supplementary Notes 107 to 109, wherein the outputting includes transmitting the property information and the energy information to a build apparatus that builds the build object.

### [Supplementary Note 111]

The build method according to any one of Supplementary Notes 100 to 110, wherein the outputting includes outputting the property information in the build period in which the build object is built, and/or after the build object is built.

### [Supplementary Note 112]

The build method according to any one of Supplementary Notes 92 to 111, wherein the acquiring includes acquiring the property information generated by using the build information and a learning model generated by machine learning so as to generate the property information on the basis of the build information.

### [Supplementary Note 113]

The build method according to any one of Supplementary Notes 92 to 112, wherein the build information includes at least one of apparatus information about a build apparatus that builds the build object, material information about the build material used to build the build object, and design information about the build object.

### [Supplementary Note 114]

The build method according to Supplementary Note 113, wherein the apparatus information includes at least one of information about a build condition used by the build apparatus to build the build object, and information about an operating state of the build apparatus.

### [Supplementary Note 115]

The build method according to any one of Supplementary Notes 92 to 114, wherein
the acquisition unit acquires measurement information about the building of the build object acquired in a build period of the build object, and
the acquiring includes acquiring the property information generated by using the measurement information and the measurement information about the building of the build object acquired in the build period of the build object.

### [Supplementary Note 116]

The build method according to Supplementary Note 115, wherein the acquiring includes acquiring the property information generated by using the build information, the measurement information, and a learning model generated by machine learning so as to generate the property information on the basis of the build information and the measurement information.

### [Supplementary Note 117]

The build method according to Supplementary Note 115 or 116, wherein the measurement information includes information about a shape of at least a part of the build object acquired in the build period.

### [Supplementary Note 118]

The build method according to any one of Supplementary Notes 11 to 117, wherein
the build object is built by solidification of at least a part of a layered material layer melted by irradiation with the energy beam to at least a part of the material layer formed by the build material supplied, and
the measurement information includes information about a shape of at least a part of the material layer acquired in the build period.

### [Supplementary Note 119]

The build method according to any one of Supplementary Notes 115 to 118, wherein
the build object includes a solidified object formed by solidification of at least a part of the build material melted by irradiation with the energy beam to at least a part of the build material supplied, and
the measurement information includes information about a shape of at least a part of the solidified object acquired in the build process.

### [Supplementary Note 120]

The build method according to any one of Supplementary Notes 115 to 119, wherein the measurement information includes information about at least a part of a melt pool formed by melting of the metal material by irradiation with the energy beam.

### [Supplementary Note 121]

An information output apparatus including:
an acquisition unit that acquires measurement information about building of a build object acquired in a build period of the build object that is built by solidification of a powdery metal material melted by irradiation with an energy beam, and property information about properties of the build object; and
an output unit that outputs the property information together with the measurement information.

### [Supplementary Note 122]

The information output apparatus according to Supplementary Note 121, wherein
the property information includes first information about properties of one part of the build object,
the measurement information includes second information acquired in measurement related to building of the one part of the build object, and
the output unit outputs the property information and the measurement information in an output format in which the first information is associated with the second information.

### [Supplementary Note 123]

The information output apparatus according to Supplementary Note 122, wherein the output unit includes a display unit that displays the property information and the measurement information in the output format in which the first information is associated with the second information.

### [Supplementary Note 124]

The information output apparatus according to any one of Supplementary Notes 121 to 123, wherein the output unit includes a transmission unit that transmits the property information and the measurement information to a build apparatus that builds the build object.

### [Supplementary Note 125]

The information output apparatus according to any one of Supplementary Notes 121 to 124, wherein the output unit outputs the property information together with the measurement information in the build period in which the build object is built, and/or after the build object is built.

### [Supplementary Note 126]

The information output apparatus according to any one of Supplementary Notes 121 to 125, wherein the property information includes at least one of defect information about a defect formed inside the build object, density information about a density of at least a part of the build object, structure state information about a state of a metal structure that constitutes at least a part of the build object, and mechanical property information about mechanical properties of at least a part of the build object.

### [Supplementary Note 127]

The information output apparatus according to any one of Supplementary Notes 121 to 126, wherein
the acquisition unit acquires energy information about an energy amount transferred from the energy beam to the metal material in the building of the build object by the solidification of the powdery metal material melted by the irradiation with the energy beam, and
the output unit outputs the energy information together with the measurement information.

### [Supplementary Note 128]

An information output apparatus including:
an acquisition unit that acquires energy information about an energy amount transferred from an energy beam to a powdery metal material in building of a build object by solidification of the metal material melted by irradiation with the energy beam, and property information about properties of the build object; and
an output unit that outputs the property information together with the energy information.

### [Supplementary Note 129]

The information output apparatus according to Supplementary Note 128, wherein
the property information includes first information about properties of one part of the build object,
the energy information includes second information about the energy amount transferred from the energy beam to the metal material in the building of the one part of the build object, and
the output unit outputs the property information and the energy information in an output format in which the first information is associated with the second information.

### [Supplementary Note 130]

The information output apparatus according to Supplementary Note 129, wherein the output unit includes a display unit that displays the property information and the energy information in the output format in which the first information is associated with the second information.

### [Supplementary Note 131]

The information output apparatus according to any one of Supplementary Notes 128 to 130, wherein the output unit includes a transmission unit that transmits the property information and the energy information to a build apparatus that builds the build object.

### [Supplementary Note 133]

The information output apparatus according to any one of Supplementary Notes 128 to 132, wherein the output unit outputs the property information together with the energy information in the build period in which the build object is built, and/or after the build object is built.

### [Supplementary Note 134]

The information output apparatus according to any one of Supplementary Notes 128 to 133, wherein the property information includes at least one of defect information about a defect formed inside the build object, density information about a density of at least a part of the build object, structure state information about a state of a metal structure that constitutes at least a part of the build object, and mechanical property information about mechanical properties of at least a part of the build object.

### [Supplementary Note 135]

The information output apparatus according to any one of Supplementary Notes 128 to 134, wherein
the acquisition unit acquires measurement information about the building of the build object acquired in a build period of the build object built by the solidification of the powdery metal material melted by the irradiation with the energy beam, and
the output unit outputs the measurement information together with the energy information.

At least a part of the features in each example embodiment described above may be properly combined with at least another part of the features in each example embodiment described above. A part of the features in each example embodiment described above may not be used. Furthermore, the disclosures of all publications and United States patents that are cited in each example embodiment described above are incorporated in the disclosures of the present application by reference if it is legally permitted.

The present invention is not limited to the example embodiments described above and is allowed to be changed, if desired, without departing from the essence or spirit of the invention which can be read from the claims and the entire specification. An information processing apparatus, a measurement system, a build system, an information processing method, a build method, and an information output apparatus, which involve such changes, are also intended to be within the technical scope of the present invention.

### Description of Reference Codes

SYS Build system
1 Build apparatus
2 Measurement apparatus
21 Temperature measurement apparatus
22 Shape measurement apparatus
3 Information processing apparatus
31 Arithmetic apparatus
311 Information acquisition unit
312 Defect prediction unit
313 Defect output unit
35 Output apparatus
411, 412 Measurement information
413 Build information
414 Feature quantity information
415 Process data
416 Position information
425 Defect information
435 Energy information
5 Model generation apparatus
PM Prediction model

## Claims

1. An information processing apparatus comprising:
an acquisition unit that acquires measurement information about building of a build object acquired in a build period of the build object that is built by solidification of a powdery metal material melted by irradiation with an energy beam; and
an information processing unit that generates defect information about a defect formed inside the build object, by using the measurement information acquired by the acquisition unit, wherein
the measurement information includes information about a temperature of at least a part of a melt pool formed by melting of the metal material caused by the irradiation with the energy beam.

2. The information processing apparatus according to claim 1, wherein
the defect includes a void space formed inside the build object, and
the defect information includes void space information about the void space.

3. The information processing apparatus according to claim 2, wherein the void space information includes information about a density of at least a part of the build object.

4. The information processing apparatus according to any one of claims 1 to 3, wherein the defect information includes at least one of information about presence or absence of the defect, and information about properties of the defect.

5. The information processing apparatus according to claim 4, wherein the properties of the defect include at least one of a size of the defect, a position of the defect, and a shape of the defect.

6. The information processing apparatus according to any one of claims 1 to 5, further comprising an output unit that outputs the defect information.

7. The information processing apparatus according to claim 6, wherein the output unit includes a display unit that displays the defect information.

8. The information processing apparatus according to claim 6 or 7, wherein the output unit includes a transmission unit that transmits the defect information to a build apparatus that builds the build object.

9. The information processing apparatus according to any one of claims 6 to 8, wherein the output unit outputs the measurement information together with the defect information.

10. The information processing apparatus according to claim 9, wherein
the defect information includes first information about a defect formed in one part of the build object,
the measurement information includes second information acquired in measurement related to building of the one part of the build object, and
the output unit outputs the defect information and the measurement information in an output format in which the first information is associated with the second information.

11. The information processing apparatus according to claim 10, wherein the output unit includes a display unit that displays the defect information and the measurement information in the output format in which the first information is associated with the second information.

12. The information processing apparatus according to any one of claims 9 to 11, wherein the output unit includes a transmission unit that transmits the defect information and the measurement information to a build apparatus that builds the build object.

13. The information processing apparatus according to any one of claims 6 to 12, wherein
the information processing unit further generates energy information about an energy amount transferred from the energy beam to the metal material, on the basis of the information about the temperature, and
the output unit outputs the energy information together with the defect information.

14. The information processing apparatus according to claim 13, wherein
the defect information includes first information about a defect formed in one part of the build object,
the energy information includes second information about the energy amount transferred from the energy beam to the metal material in building of the one part of the build object, and
the output unit outputs the defect information and the energy information in an output format in which the first information is associated with the second information.

15. The information processing apparatus according to claim 14, wherein the output unit includes a display unit that displays the defect information and the energy information in the output format in which the first information is associated with the second information.

16. The information processing apparatus according to any one of claims 13 to 15, wherein the output unit includes a transmission unit that transmits the defect information and the energy information to a build apparatus that builds the build object.

17. The information processing apparatus according to any one of claims 6 to 16, wherein the output unit outputs the defect information in the build period in which the build object is built, and/or after the build object is built.

18. The information processing apparatus according to any one of claims 1 to 17, wherein the information processing unit generates the defect information, by using the information about the temperature and a learning model generated by machine learning so as to generate the defect information on the basis of the information about the temperature.

19. The information processing apparatus according to any one of claims 1 to 18, wherein the measurement information includes information about a shape of at least a part of the build object acquired in the build period.

20. The information processing apparatus according to any one of claims 1 to 19, wherein
the build object is built by solidification of at least a part of a layered material layer melted by irradiation with the energy beam to at least a part of the material layer formed by the metal material supplied, and
the measurement information includes information about a shape of at least a part of the material layer acquired in the build period.

21. The information processing apparatus according to any one of claims 1 to 20, wherein
the acquisition unit further acquires build information about building of the build object, and
the information processing unit generates the defect information by using the measurement information and the build information.

22. The information processing apparatus according to claim 21, wherein the build information includes at least one of apparatus information about a build apparatus that builds the build object, material information about the metal material used to build the build object, and design information about the build object.

23. The information processing apparatus according to claim 22, wherein the apparatus information includes at least one of information about a build condition used by the build apparatus to build the build object, and information about an operating state of the build apparatus.

24. The information processing apparatus according to any one of claims 1 to 23, wherein the information processing unit generates at least one of information about a state of a metal structure that constitutes at least a part of the build object, and information about mechanical properties of at least a part of the build object, by using the information about the temperature.

25. A measurement system comprising:
the information processing apparatus according to any one of claims 1 to 24; and
a measurement apparatus, wherein
the measurement information is acquired by using the measurement apparatus.

26. A build system comprising:
the information processing apparatus according to any one of claims 1 to 24;
a build apparatus that is configured to build a build object by solidification of a powdery metal material melted by irradiation with an energy beam; and
a measurement apparatus, wherein
the measurement information is acquired by using the measurement apparatus.

27. The build system according to claim 26, wherein the build apparatus is controlled on the basis of the defect information.

28. The build system according to claim 26 or 27, wherein the build apparatus stops an operation of building the build object in a case where the defect information satisfies a predetermined stop condition.

29. The build system according to any one of claims 26 to 28, wherein the build apparatus builds the build object on the basis of the defect information.

30. The build system according to any one of claims 26 to 29, wherein
the build apparatus builds the build object on the basis of a build condition for building the build object,
the build apparatus builds the build object or a new build object, on the basis of the build condition that is corrected on the basis of the defect information generated by the information processing apparatus.

31. The build system according to any one of claims 26 to 30, wherein the build apparatus corrects a build condition for building the build object by using the defect information.

32. The build system according to claim 30 or 31, wherein the build apparatus builds the build object on the basis of the build condition that is corrected by a user of the build system using the void space information.

33. An information processing apparatus comprising:
an acquisition unit that acquires measurement information about building of a build object acquired in a build period of the build object that is built by solidification of a build material melted by irradiation with an energy beam; and
an information processing unit that generates property information about properties of the build object, by using the measurement information acquired by the acquisition unit.

34. An information processing apparatus comprising:
an acquisition unit that acquires build information about building of a build object that is built by solidification of a build material melted by irradiation with an energy beam; and
an information processing unit that generates property information about properties of the build object, by using the build information acquired by the acquisition unit.

35. An information processing method comprising:
acquiring measurement information about building of a build object acquired in a build period of the build object that is built by solidification of a build material melted by irradiation with an energy beam; and
generating property information about properties of the build object, by using the measurement information acquired.

36. An information processing method comprising:
acquiring build information about building of a build object that is built by solidification of a build material melted by irradiation with an energy beam; and
generating property information about properties of the build object, by using the build information acquired.

37. A build method comprising:
building a build object by solidification of a build material melted by irradiation with an energy beam;
performing measurement related to building of the build object in a build period of the build object; and
acquiring property information about properties of the build object generated by using the measurement information acquired by the measurement.

38. A build method comprising:
building a build object by solidification of a build material melted by irradiation with an energy beam; and
acquiring property information about properties of the build object generated by using build information about building of the build object.

39. An information output apparatus comprising:
an acquisition unit that acquires measurement information about building of a build object acquired in a build period of the build object that is built by solidification of a powdery metal material melted by irradiation with an energy beam, and property information about properties of the build object; and
an output unit that outputs the property information together with the measurement information.

40. An information output apparatus comprising:
an acquisition unit that acquires energy information about an energy amount transferred from an energy beam to a powdery metal material in building of a build object by solidification of the metal material melted by irradiation with the energy beam, and property information about properties of the build object; and
an output unit that outputs the property information together with the energy information.
